# EUROPEAN PATENT SPECIFICATION

(11) **EP 1 857 709 B1**
(45) Date of publication and mention of the grant of the patent: **25.04.2012**
(21) Application number: 06715417.9
(22) Date of filing: 08.03.2006
(51) Int. Cl.: F16H 3/66

(54) **AUTOMATIC TRANSMISSION FOR VEHICLE**
AUTOMATIKGETRIEBE FÜR EIN FAHRZEUG
TRANSMISSION AUTOMATIQUE POUR VÉHICULE

(30) Priority: 09.03.2005 JP 2005066397
(43) Date of publication of application: 21.11.2007
(60) Divisional application: 11150824.8
(73) Proprietor: AISIN AW CO., LTD., Anjo-shi, Aichi 444-1192 (JP)
(72) Inventor: AOKI, Toshihiko c/o AISIN AW CO., LTD., Anjo-shi, Aichi 444-1192 (JP); TODO, Minoru c/o AISIN AW CO., LTD., Anjo-shi, Aichi 444-1192 (JP); OZAKI, Kazuhisa c/o AISIN AW CO., LTD., Anjo-shi, Aichi 444-1192 (JP); ISHII, Takuya c/o AISIN AW CO., LTD., Anjo-shi, Aichi 444-1192 (JP); FUKUYAMA, Satoshi c/o AISIN AW CO., LTD., Anjo-shi, Aichi 444-1192 (JP); INAGAKI, Tomochika c/o AISIN AW CO., LTD., Anjo-shi, Aichi 444-1192 (JP); ANDOH, Yousuke c/o AISIN AW CO., LTD., Anjo-shi, Aichi 444-1192 (JP)
(74) Representative: TBK
(86) International application number: PCT/JP2006/304497
(87) International publication number: WO 2006/095784

(56) References cited:
- JP-A- 06 200 998
- JP-A- 2000 055 152
- JP-A- 2001 082 555
- JP-A- 2001 182 785
- JP-A- 2003 514 195
- US-A1- 2003 083 173
- US-A1- 2004 242 367

## Description

### TECHNICAL FIELD

The present invention relates to an automatic transmission that is mounted in a vehicle or the like, and in particular, relates to a configuration for an automatic transmission that enables multi-speed shifting by freely transferring an input rotation and a reduced speed rotation to first, second, and third rotating elements of a planetary gear by using first and second input transfer clutches and first and second speed reduction transfer clutches.

### BACKGROUND ART

In recent years, in an automatic transmission that is mounted in a vehicle or the like, multi-speed shifting is coming to play a central role in satisfying the need to improve fuel economy and the like. Such an automatic transmission is proposed, for example, in Japanese Patent Application Publication No. JP-A-2001-182785 (in particular, refer to FIG. 2 and TABLE 2).

This automatic transmission is provided with a speed reduction planetary gear (G1) that can output a reduced speed rotation that reduces the speed of the input rotation that is input to an input shaft (11), first and second input transfer clutches (C4, C3) that freely transfer the input rotation, first and second speed reduction transfer clutches (C2, C1) that freely transfer a reduced speed rotation through the speed reduction planetary gear (G1), first and second brakes (B1, B2), that hold the rotation stationary on the case (1), and a planetary gear set (G23) that has at least first, second, third, and fourth rotating elements (S2, S3, PC2 and PC3, R3). This automatic transmission is structured such that the input rotation due to the first input transfer clutch (C4) in the first rotating element (S2) of the planetary gear set (G23) and the reduced speed rotation due to the first speed reduction transfer clutch (C2) can be transferred while the first rotating element (S2) can be held stationary on the case (1) by the first brake (B1). The automatic transmission is structured such that a reduced speed rotation can be transferred to the second rotating element (S3) by the second speed reduction transfer clutch (C1). The automatic transmission is structured such that the input rotation due to the second input transfer clutch (C3) can be transferred to the third rotating elements (PC2 and PC3) and the third rotating elements (PC2 and PC3) can be held stationary by the second brake (B2). The automatic transmission is structured such that an output rotation can be output from the fourth rotating elements (R2, R3). By appropriately operating these clutches (C1, C2, C3, C4) and brakes (B1, B2), the automatic transmission enables multi-speed shifting.

### DISCLOSURE OF THE INVENTION

However, in the automatic transmission described above, as shown in TABLE 2, the first forward speed to the eighth forward speed can be established by suitably operating the clutches and brakes described above, but while establishing the first forward speed to the eighth forward speed in this manner, although the third rotating elements (PC2 and PC3), to which the input rotation from the second input transfer clutch (C3) can be transferred, does not attain a speed that is higher than the input rotation, even if the fist rotating element (S2), to which the input rotation can be transferred from the first input transfer clutch (C4), is a rotating element to which an input rotation can be input similarly to the third rotating elements (PC2, PC3), because, for example, in the fifth forward speed, the first input transfer clutch (C4) is released, a reduced input rotation is input to the second rotating element (S3) from the first speed reduction transfer clutch (C1), and an input rotation is input to the third rotating elements (PC2 and PC3) by the second input transfer clutch (C3), a high speed rotation results, that is, a speed that is higher than the input rotation results.

However, assume that, in the automatic transmission described above, the clutches and brakes are disposed so as to be farther toward the outer circumferential side than the path by which the members (that is, the output side member of the first input transfer clutch) that link the first input transfer clutch (C4) and the first rotating element (S2) input the input rotation to the third rotating elements (PC2 and PC3) via the second input transfer clutch (C3). In this case, members that reach a speed that is higher than the input rotation are disposed on the outer circumferential side of the members that do not reach a speed that is hither than the input rotation and the members that require a high rigidity are disposed on the outer circumferential side. Thus, a large centrifugal force is generated in proportion to the increasing diameter of these members and the thickness of the members must be increased in order to attain the necessary high rigidity, reducing the weight is hindered, the inertia is increased, and improving the controllability of the automatic transmission for a vehicle is hindered.

Thus, it is an object of the present invention to provide an automatic transmission for a vehicle that enables reducing the weight and enables improving the controllability by reducing the inertia.

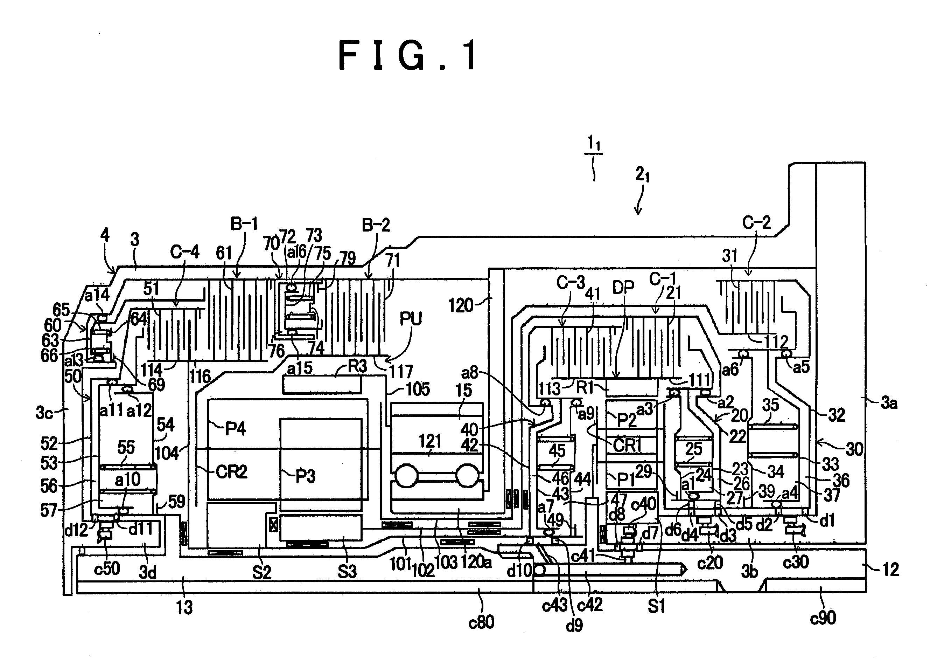

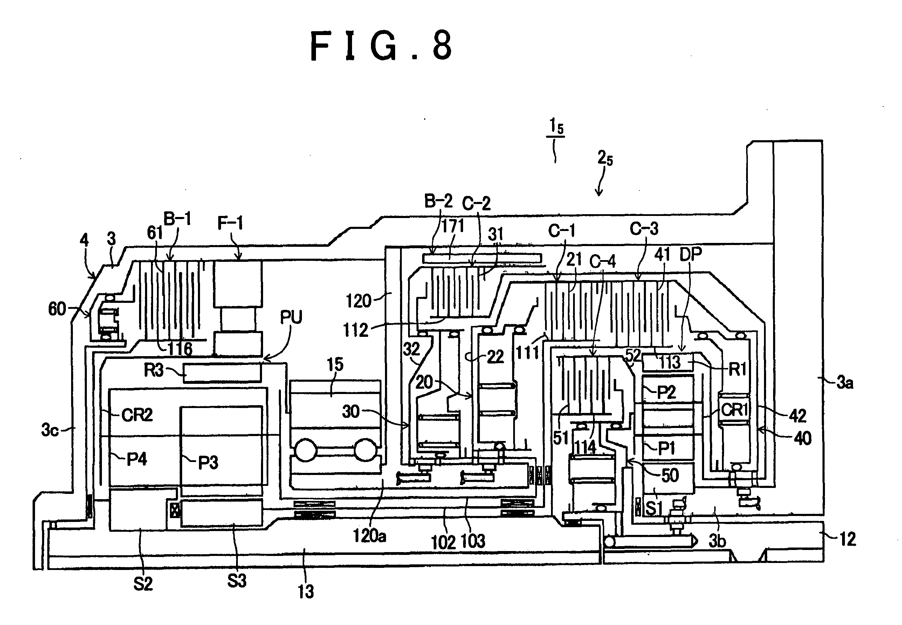

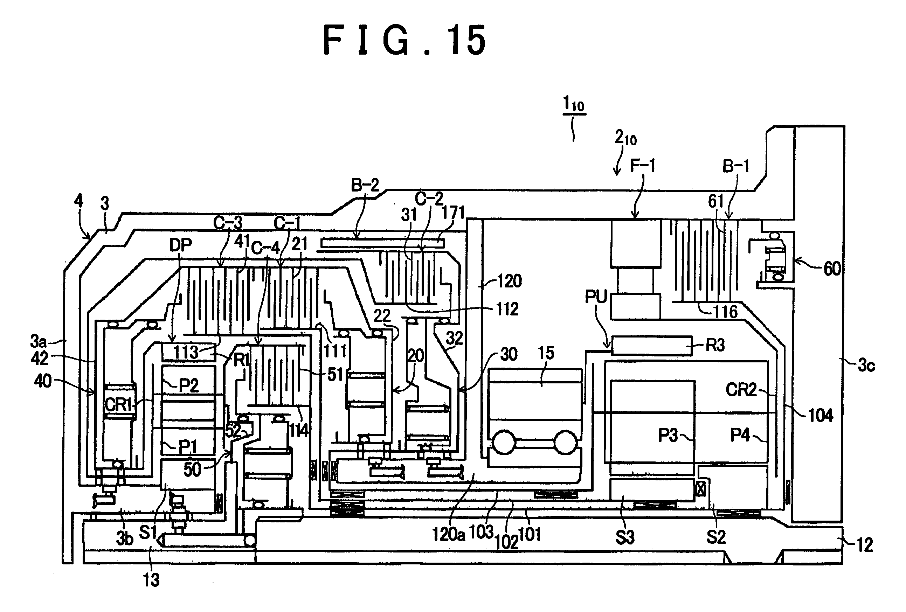

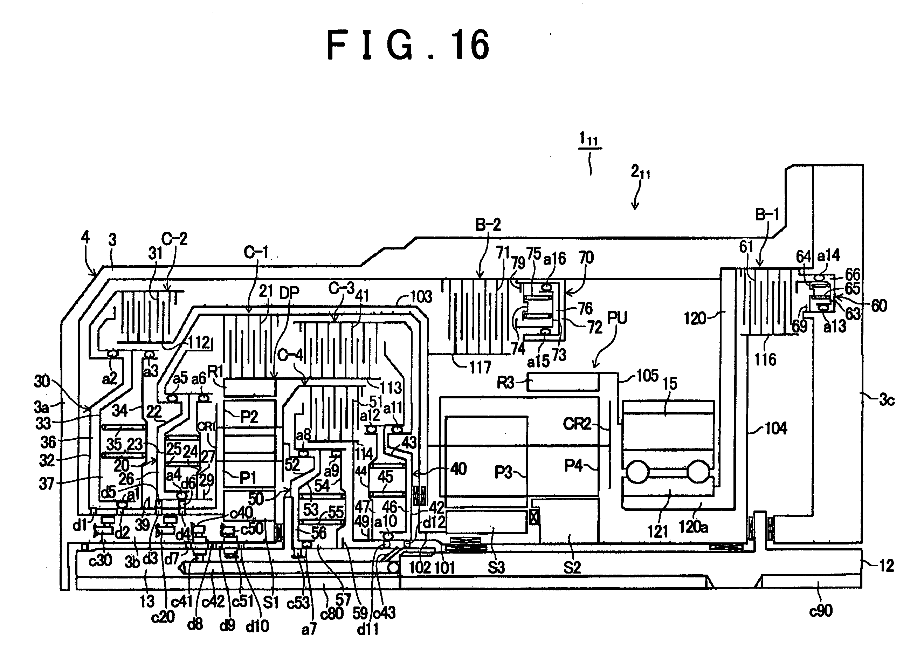

The present invention (refer, for example, to FIG. 1 through FIG. 19) is an automatic transmission (1) for a vehicle can output an output rotation from the fourth rotating element (R3), is provided with: a reduction planetary gear (DP) that includes a stationary element (S1), for which the rotation is held stationary by the case (4), an input rotating element (CR1), to which the input rotation of the input shaft (12) is input, and a speed reduction rotating element (R1) that outputs a reduced speed rotation that reduces the input rotation; a planetary gear set (PU) that includes first, second, third, and fourth rotating elements (S2, S3, CR2, R3) that are arranged in a rotation speed relationship according to the gear relationships; a first input transfer clutch (C-4) that freely transfers the input rotation to the first rotating element (S2); a second input transfer clutch (C-2) that freely transfers the input rotation to the third rotating element (CR2); a first speed reduction transfer clutch (C-3) that can freely transfer a reduced speed rotation through the speed reduction planetary gear (DP) to the first rotating element (S2); a second speed reduction transfer clutch (C-1) that freely transfers a reduced speed rotation through the speed reduction planetary gear (DP) to the second rotating element (S3); a first brake (B-1) that freely locks the rotation of the first rotating element (S2) with respect to the case; and second brake (B-2) that freely locks the rotation of the third rotating element (CR2) with respect to the case (4); characterized in that:
the output side transfer member (103) of the second input transfer clutch (C-2) is linked to the third rotating element (CR2) through the outer circumferential side of the output side transfer members (101, 102) of the first and second speed reduction transfer clutches (C-3, C-1); and
the output side transfer member (104, 13 in FIG. 8 and FIG. 18, 101 in FIG. 15 and FIG. 16) and the output side transfer member (101) of the first speed reduction transfer clutch (C-3) are linked to the first rotating element (S2), and the output side transfer member (104, 13 in FIG. 8 and FIG. 18; 101 in FIG. 15 and FIG. 16) and the output side transfer member (101) of the first speed reduction transfer clutch (C-3), which rotate integrally, are disposed on the inner circumferential side with respect to the output side transfer member (102) of the second speed reduction transfer clutch (C-1).

Thereby, the output side transfer member of the first input transfer clutch, which rotates faster than the output side transfer member of the second input transfer clutch, is disposed more to the inner circumferential side than the output side transfer member of the second speed reduction transfer clutch on the inner circumferential side of the output side transfer member of the second input transfer clutch, and the diameter of the output side transfer member of the first input transfer clutch can be made smaller than the diameter of the output side transfer member of the second input transfer clutch, and it is possible to reduce the weight more than the case in which it is disposed on the outer circumferential side. In addition, in comparison to the case in which it is disposed on the outer circumferential side, it is possible to reduce the inertia, and thus it is possible to improve the controllability of the automatic transmission for a vehicle.

The present invention (refer, for example, to FIG. 1, FIGS. 5 through 7, FIG. 11 through 14, and FIG. 19) is an automatic transmission (1) for a vehicle that outputs an output rotation from the fourth rotating element (R3), is provided with a speed reduction planetary gear (DP) that includes a stationary element (S1), for which the rotation is held stationary by the case (4), an input rotating element (CR1) that inputs the input rotation of the input shaft (12), and a speed reduction rotating element (R1) that outputs a reduced speed rotation that reduces the input rotation; a planetary gear set (PU) that includes first, second, third, and fourth rotating elements (S2, S3, CR2, R3) that are arranged in a rotation speed relationship according to the gear relationships; a first input transfer clutch (C-4) that freely transfers the input rotation to the first rotating element (S2); a second input transfer clutch (C-2) that freely transfers the input rotation to the third rotating element (CR2); a first speed reduction transfer clutch (C-3) that can freely transfer a reduced speed rotation through the speed reduction planetary gear (DP) to the first rotating element (S2); a second speed reduction transfer clutch (C-1) that freely transfers a reduced speed rotation through the speed reduction planetary gear (DP) to the second rotating element (S3); a first brake (B-1) that freely locks the rotation of the first rotating element (S2) with respect to the case; and second brake (B-2) that freely locks the rotation of the third rotating element (CR2) with respect to the case (4); characterized in that:
the first and second speed reduction transfer clutches (C-3, C-1) are disposed on the speed reduction planetary gear (DP) side with respect to the planetary gear set (PU), and the output side transfer members (101, 102) of the first and second speed reduction transfer clutches (C-3, C-1) are respectively linked to the first rotating element (S2) and the second rotating element (S3);
the first input transfer clutch (C-4) is disposed in an axial direction on a side of the planetary gear set (PU) that is opposite to the speed reduction planetary gear (DP), the output side transfer member (104) of the first input transfer clutch (C-4) is linked to the first rotating element (S2); and
the second input transfer clutch (C-2) is disposed on the speed reduction planetary gear (DP) side with respect to the planetary gear set (PU), and the output side transfer member (103) of the second input transfer clutch (C-2) is linked to the third rotating element (CR2) through the outer circumferential side of the output side transfer members (101, 102) of the first and second speed reduction transfer clutches (C-3, C-1).

Thereby, because the output side transfer member of the first input transfer clutch, which reaches a rotation that is higher than that of the output side transfer member of the second input transfer clutch, is on the inner circumferential side, the diameter of the output side transfer member of the first input transfer clutch can be made smaller than the diameter of the output side transfer member of the second input transfer clutch, and it is possible to reduce the weight more than the case in which it is disposed on the outer circumferential side. In addition, because it is possible to reduce the inertia in comparison to the case in which it is disposed on the outer side, it is possible to improve the controllability of the automatic transmission for a vehicle.

In addition, in comparison to disposing the hydraulic servo of the first input transfer clutch between the planetary gear set and the speed reduction planetary gear, it is possible to dispose the friction plates of the first input transfer clutch on a relatively outer circumferential side, and thus it is possible to make the area of the friction plates large. Therefore, it is possible to ensure a transferable torque volume, and thus it is possible to reduce the number of friction plates. Furthermore, it is possible to shorten the distance between the first and second speed reduction transfer clutches and the planetary gear set, and it is possible to shorten the output side transfer member of the first and second speed reduction transfer clutches, which must be strong in order to transfer a high torque. Thereby, it is possible to reduce the weight, and it is possible to improve the controllability of the automatic transmission for a vehicle.

Furthermore, it is possible to supply the working oil to the hydraulic servo of the first input transfer clutch from an oil duct that is provided, for example, in a boss portion that is linked to a side wall of the case. Thereby, in comparison to the case in which the working oil is supplied from an oil duct that is provided in the input shaft, it is possible to reduce the number of seal rings, to reduce the sliding resistance of the seal rings, and to improve the power transfer efficiency of the automatic transmission for a vehicle.

In addition, in the present invention (refer, for example, to FIG. 1, FIGS. 5 through 7, FIGS. 11 to 14, and FIG. 19), input side transfer member (52) of the first input transfer clutch (C-4) is linked to the input shaft (12, 13) through the inner circumferential side of the planetary gear set (PU), and a portion of the input side transfer member (52) of the first input transfer clutch (C-4) is formed as the clutch drum (52) of the hydraulic servo (50) of the first input transfer clutch (C-4).

Thereby, in comparison to the case in which a portion of the output side transfer member of the first input transfer clutch is formed as the clutch drum of a hydraulic servo, it is possible for the clutch drum of a hydraulic servo to function additionally as a power transfer member from the input shaft. As a result, it is possible to structure the automatic transmission more compactly in the axial direction.

In addition, the present invention (refer, for example, to FIG. 8, FIG. 15, FIG. 16, and FIG. 18) is an automatic transmission (1) for a vehicle that can output an output rotation from the fourth rotating element (R3), is provided with a reduction planetary gear (DP) that includes a stationary element (S1), for which the rotation is held stationary by the case (4), an input rotating element (CR1), to which the input rotation of the input shaft (12) is input, and a speed reduction rotating element (R1) that outputs a reduced speed rotation that reduces the input rotation; a planetary gear set (PU) that comprises first, second, third, and fourth rotating elements (S2, S3, CR2, R3) that are arranged in a rotation speed relationship according to the gear relationships; a first input transfer clutch (C-4) that freely transfers the input rotation to the first rotating element (S2); a second input transfer clutch (C-2) that freely transfers the input rotation to the third rotating element (CR2); a first speed reduction transfer clutch (C-3) that can freely transfer a reduced speed rotation through the speed reduction planetary gear (DP) to the first rotating element (S2); a second speed reduction transfer clutch (C-1) that freely transfers a reduced speed rotation through the speed reduction planetary gear (DP) to the second rotating element (S3); a first brake (B-1) that freely locks the rotation of the first rotating element (S2) with respect to the case; and second brake (B-2) that freely locks the rotation of the third rotating element (CR2) with respect to the case (4); characterized in that:
the first and second speed reduction transfer clutches (C-3, C-1) are disposed on the speed reduction planetary gear (DP) side with respect to the planetary gear set (PU) and the output side transfer members (101, 102) of the first and second speed reduction transfer clutches (C-3, C-1) are respectively linked to the first rotating element (S2) and the second rotating element (S3);
the first input transfer clutch (C-4) is disposed on the speed reduction planetary gear (DP) side with respect to the planetary gear set (PU) and the output side transfer member (13 in FIG. 8 and FIG. 18, 101 in FIG. 15 and FIG. 16) of the first input transfer clutch (C-4) is linked to the first rotating element (S2); and
the second input transfer clutch (C-2) is disposed on the speed reduction planetary gear (DP) side with respect to the planetary gear set (PU) and the output side transfer member (103) of the second input transfer clutch (C-2) is linked to the third rotating element (CR2) through the outer circumferential side of the output side transfer members (101, 102) of the first and second speed reduction transfer clutches (C-3, C-1).

Thereby, because the output side transfer member of the first input transfer clutch, which rotates faster than the output side transfer member of the second input transfer clutch, is on the inner circumferential side, it is possible to make the diameter of the output side transfer member of the first input transfer clutch smaller than the diameter of the output side transfer member of the second input transfer clutch, and it is possible to reduce the weight more than the case in which it is on the outer circumferential side. In addition, in comparison to the case in which it is on the outer circumferential side, it is possible to decrease the inertia, and thus it is possible to improve the controllability of the automatic transmission for a vehicle.

In addition, in the present invention (refer, for example, to FIG. 8, FIG. 15, FIG. 16, and FIG. 18), the input side transfer member (52) of the first input transfer clutch (C-4) is directly linked to the input rotating element (CR1), and along with a portion of the input rotating element (CR1), is formed as a portion of the hydraulic servo (50) of the first input transfer clutch (C-4).

Thereby, it is possible to use portions (portions of the clutch drum and the side plate of the carrier in the embodiments) of the members that form the input rotating element and the hydraulic servo of the first input transfer clutch in common, and thus it is possible to reduce the size and weight.

In addition, the present invention (refer, for example, to FIG. 1, FIG. 11, FIG. 16, and FIG. 19) includes a boss portion (3b) that is linked to the side wall (3a) of the case (4) and holds the stationary element (S1) stationary; and
the input side transfer member (32) of the second input transfer clutch (C-2) is linked to the input rotating element (CR1) and a portion of the input side transfer member (32) of the second input transfer clutch (C-2) is formed as the clutch drum (32) of the hydraulic servo (30) of the second input transfer clutch (C-2), and the hydraulic servo (30) is disposed in an axial direction above the boss portion (3b) between the speed reduction planetary gear (DP) and the side wall (3a).

Thereby, it is possible to supply the working oil to the hydraulic servo of the second input transfer clutch from a duct that is provided in the boss portion. Thus, in comparison to the case in which, for example, the hydraulic servo of the second input transfer clutch is disposed above the input shaft separated from the boss portion and the working oil is supplied via an oil duct in the input shaft, it is possible to shorten the length of the oil duct by an amount equivalent to the length of the oil duct in the input shaft that can be eliminated, and it is possible to improve the controllability of the automatic transmission for a vehicle.

In addition, in the present invention (refer, for example, to FIG. 1, FIG. 11, FIGS. 16 through FIG. 19), the input side transfer member (111) of the second speed reduction clutch (C-1) is linked to the speed reduction rotating elements (R1);
the output side transfer member (102) of the second speed reduction transfer clutch (C-1) is linked to the second rotating element (S3), a portion of the output side transfer member (102) of the second speed reduction transfer clutch (C-1) is formed as the clutch drum (22) of the hydraulic servo (20) of the second speed reduction transfer clutch (C-1), and the hydraulic servo (20) is disposed in an axial direction above the boss portion (3b) between the speed reduction planetary gear (DP) and the hydraulic servo (20) of the second input transfer clutch (C-1).

Thereby, it is possible to supply the working oil to the hydraulic servo of the second speed reduction transfer clutch from an oil duct that is provided in a boss portion that is linked to the side wall of the case. Thus, in comparison to the case in which, for example, the hydraulic servo of the second speed reduction transfer clutch is disposed above the input shaft separated from the boss portion and the working oil is supplied via an oil duct in the input shaft, it is possible to shorten the length of the oil duct by an amount equivalent to the length of the oil duct in the input shaft that can be eliminated, and it is possible to improve the controllability of the automatic transmission for a vehicle.

In addition, the present invention (refer, for example, to FIGS. 16 through 19) is provided with a counter gear (15) that is linked to the fourth rotating element (R3) of the planetary gear set (PU);
the counter gear (15) is disposed in an axial direction on a side of the planetary gear set (PU) that is opposite to the speed reduction planetary gear (DP); and
the second brake (B-2) is a multi-plate brake that is structured by a plurality of friction plates (71) and the multi-plate brake is disposed on the outer circumferential side of the planetary gear set (PU).

Thereby, in comparison to the case in which, for example, the counter gear is between the planetary gear set and the speed reduction planetary gear, it is possible to link the counter gear to the third rotating element by using a locking force transfer member of the second brake and the output side transfer member of the second input transfer clutch in common, and, for example, in comparison to the case in which a band brake is disposed on the outer circumferential side of the output side transfer member of the second input transfer clutch, it is possible to disposed the multi-plate brake in a space of the planetary gear set on the outer circumferential side, it is possible to maintain size-reductions, and the brake can be made with multiple plates.

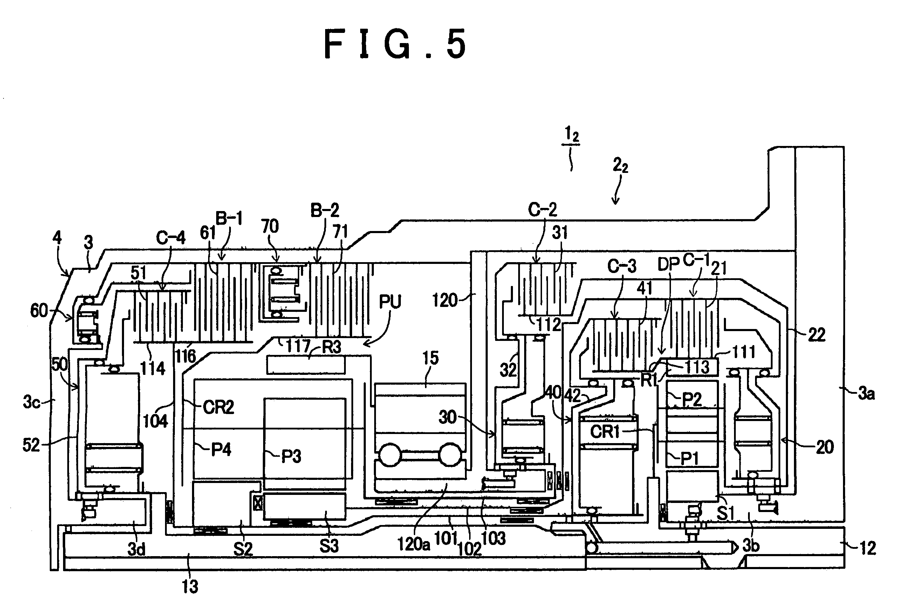

In addition, the present invention (refer, for example, to FIGS. 5 through 8, and FIGS. 12 through 15) is provided with a counter gear (15) that is linked to the fourth rotating element (R3) and is disposed in an axial direction between the planetary gear set (PU) and the speed reduction planetary gear (DP);
further includes a support portion (120a) that links to the wall (120) that extends from the case (4) and supports the counter gear (15); and
the input side transfer member (112) of the second input transfer clutch (C-2) is linked to the input rotating element (CR1) through the outer circumferential side of the first and second speed reduction transfer clutches (C-3, C-1), a portion of the output side transfer member (103) of the second input transfer clutch (C-2) is formed as the clutch drum (32) of the hydraulic servo (30) of the second input transfer clutch (C-2), and the hydraulic servo (30) is disposed above the support portion (120a) in an axial direction between the speed reduction planetary gear (DP) and the counter gear (15).

Thereby, it is possible to supply the working oil to the hydraulic servo of the second input transfer clutch from an oil duct that is provided in the support portion. Thus, in comparison to the case in which, for example, the working oil is supplied from an oil duct that is provided in the input shaft, it is possible to reduce the number of seal rings, to reduce the sliding resistance of the seal rings, and to improve the power transfer efficiency of the automatic transmission for a vehicle.

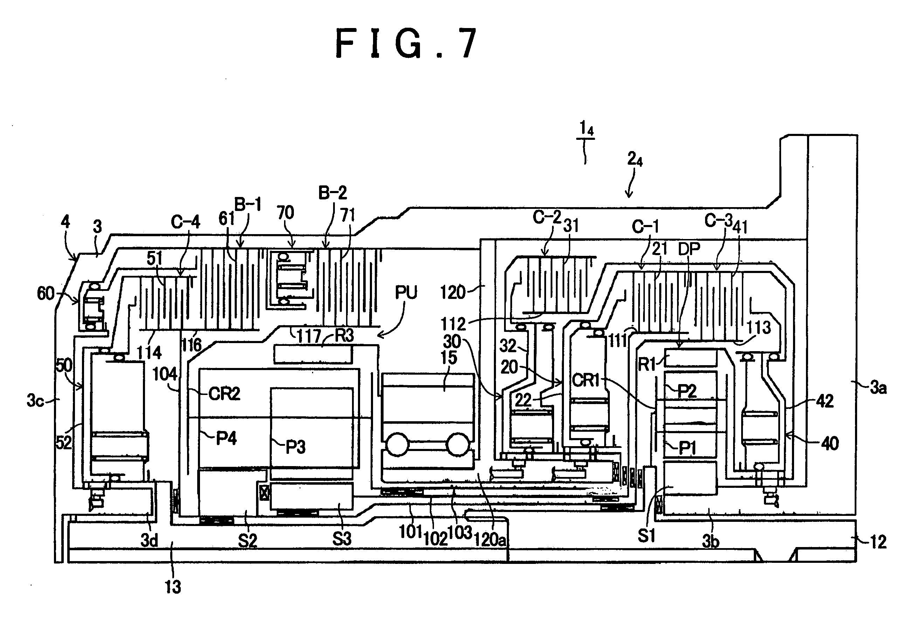

In addition, the present invention (refer, for example, to FIG. 7, FIG. 8, FIG. 14, and FIG. 15) includes a boss portion (3b) that is linked to the side wall (3a) of the case (4) and holds the stationary element (S1) stationary;
the input side transfer member (42) of the first speed reduction transfer clutch (C-3) is linked to the speed reduction rotating element (R1), a portion of the input side transfer member (42) of the first speed reduction transfer clutch (C-3) is formed as the clutch drum (42) of the hydraulic servo (40) of the first speed reduction transfer clutch (C-3), and the hydraulic servo (40) is disposed above the boss portion (3b) in an axial direction between the speed reduction planetary gear (DP) and the side wall (3a);
the input side transfer member (22) of the second speed reduction transfer clutch (C-1) is linked to the input side transfer member (42) of the first speed reduction transfer clutch (C-3), a portion of the input side transfer member (22) of the second speed reduction transfer clutch (C-1) is formed as the clutch drum (22) of the hydraulic servo (20) of the second speed reduction transfer clutch (C-1), and the hydraulic servo (20) is disposed above the support portion (120a) in an axial direction between the speed reduction planetary gear (DP) and the hydraulic servo (30) of the second input transfer clutch (C-2).

Thereby, it is possible to supply the working oil to the hydraulic servo of the first speed reduction transfer clutch from an oil duct that is provided in a boss portion that is linked to the side wall of the case. Thus, in comparison to the case in which, for example, the hydraulic servo of the first speed reduction transfer clutch is disposed above the input shaft separated from the boss portion and the working oil is supplied via an oil duct in the input shaft, it is possible to shorten the length of the oil duct by an amount equivalent to the length of the oil duct in the input shaft that can be eliminated, and it is possible to improve the controllability of the automatic transmission for a vehicle. In addition, it is possible to supply the working oil to the hydraulic servo of the second speed reduction transfer clutch from an oil duct that is provided in a wall that extends from the case and a support portion. Thus, in comparison to the case in which, for example, the working oil is supplied from an oil duct that is provided in the input shaft, it is possible to reduce the number of seal rings, to reduce the sliding resistance of the seal rings, and to improve the power transfer efficiency of the automatic transmission for a vehicle.

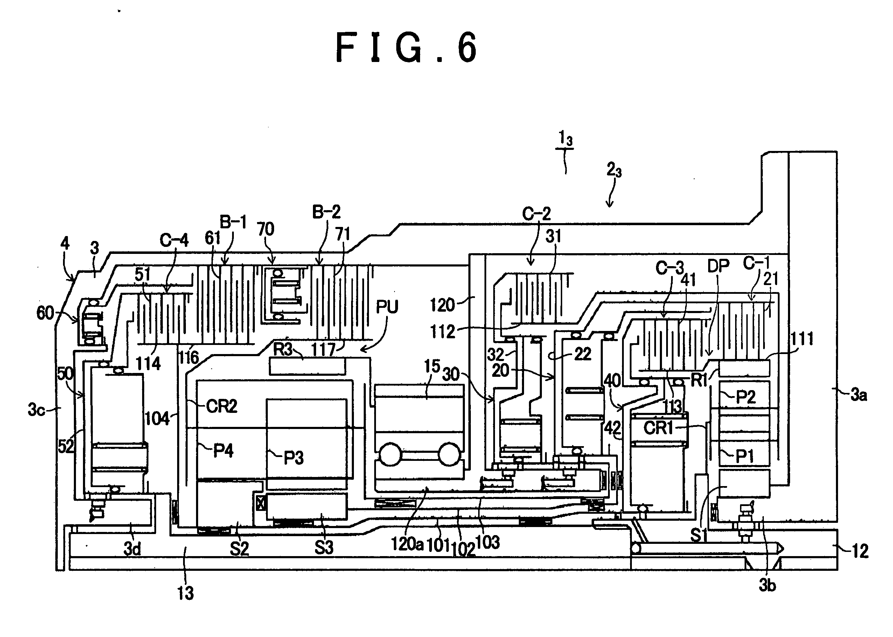

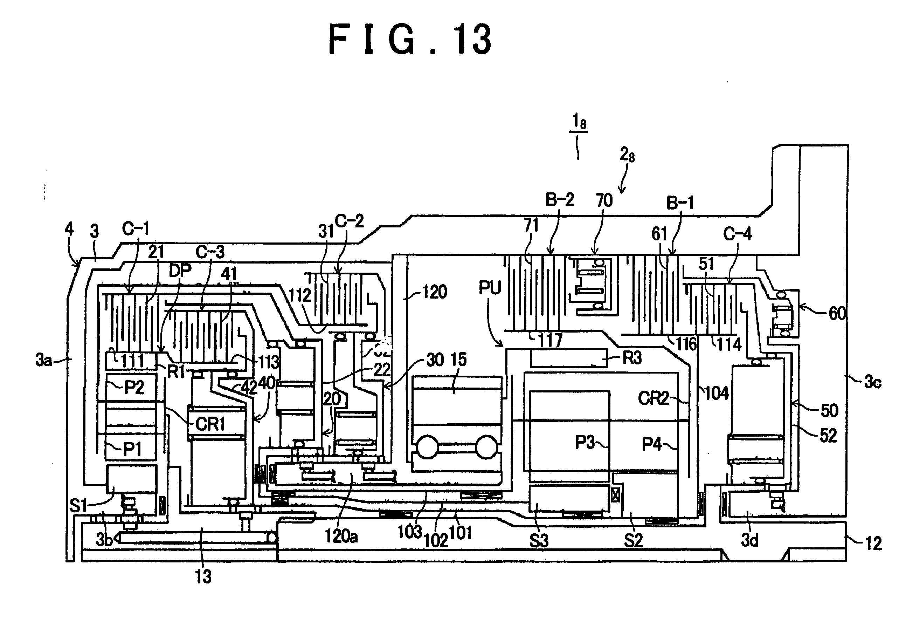

In addition, in the present invention (refer, for example, to FIG. 6 and FIG. 13), the output side transfer member (102) of the second speed reduction transfer clutch (C-1) is linked to the second rotating element (S3), a portion of the output side transfer member (102) of the second speed reduction transfer clutch (C-1) is formed as the clutch drum (22) of the hydraulic servo (20) of the second speed reduction transfer clutch (C-1), and the hydraulic servo (20) is disposed above the support portion (120a) in an axial direction between the speed reduction planetary gear (DP) and the hydraulic servo (30) of the second speed reduction transfer clutch (C-2); and
the output side transfer member (101) of the first speed reduction transfer clutch (C-3) is linked to the first rotating element (S2), a portion of a output side transfer member (101) of the first speed reduction transfer clutch (C-3) is formed as the clutch drum (42) of the hydraulic servo (40) of the first speed reduction transfer clutch (C-3); and the hydraulic servo (40) is disposed in an axial direction between the speed reduction planetary gear (DP) and the hydraulic servo (20) of the second speed reduction transfer clutch (C-1).

Thereby, it is possible to supply the working oil to the hydraulic servo of the second speed reduction transfer clutch from an oil duct that is provided in a wall that extends from the case and in the support portion. Thus, in comparison to the case in which, for example, the working oil is supplied from an oil duct that is provided in an input shaft, it is possible to reduce the number of seal rings, to reduce the sliding resistance of the seal rings, and to improve the power transfer efficiency of the automatic transmission for a vehicle. In addition, because the hydraulic servo of the first speed reduction transfer clutch is disposed in an axial direction between the planetary gear set and the speed reduction planetary gear, in comparison to the case in which, for example, the hydraulic servo of the first speed reduction transfer clutch is disposed in an axial direction on a side of the speed reduction planetary gear that is opposite to the planetary gear set, it is possible to shorten the distance between the first speed reduction transfer clutch and the planetary gear set, and it is possible to shorten the output side transfer member of the first speed reduction transfer clutch , which must be strong in order to transfer a high torque. Thereby, it is possible to reduce the weight, and it is thus possible to improve the controllability of the automatic transmission for a vehicle.

In addition, the present invention (refer, for example, to FIG. 1 through FIG. 19) is provided with a second shaft (81) that is disposed parallel to the input shaft (12) and is linked via the counter gear (15) that is linked to the fourth rotating element (R3); and
the output rotation from the fourth rotating element (R3) is transferred to the second shaft (81) via the counter gear (15).

Thereby, it is possible to use the automatic transmission for a vehicle advantageously in an FF-type vehicle.

In addition, in the present invention (refer, for example, to FIG.1 through FIG. 15), the counter gear (15) is disposed in an axial direction between the planetary gear set (PU) and the speed reduction planetary gear (DP) and is supported by a support portion (120a) that is linked to a wall (120) that extends from the case (4).

Thereby, it is possible to prevent the counter gear from becoming distant from the input side in an axial direction. Thus, it is possible, for example, to make the second shaft and the like close to the input side (the torque converter side), and it is possible to make the automatic transmission for a vehicle more compact. As a result, it is possible to prevent interference, for example, between the automatic transmission for a vehicle and the members and frame of the vehicle, and the like. That is, it is possible to improve the mounting characteristics of the automatic transmission for a vehicle in the vehicle.

In addition, in the present invention (refer, for example, to FIG. 16 through FIG. 19), the counter gear (15) is disposed in an axial direction on the side of the planetary gear set (PU) that is opposite to the speed reduction planetary gear (DP), and is supported by the support portion (120a) that is linked to the wall (120) that extends from the case (4).

Thereby, it is possible to shorten the distance between the speed reduction planetary gear and the planetary gear set, and it is possible to shorten the output side member of the first and second speed reduction transfer clutches, which in particular must be strong in order to transfer a high torque. Thereby, it is possible to reduce the weight and improve the controllability of the automatic transmission for a vehicle.

In addition, in the present invention (refer, for example, to FIG. 1 through FIG. 19), the input side transfer member (CR1) is linked to the input shaft (12) on the planetary gear set (PU) side with respect to the speed reduction planetary gear (DP), and is linked to the input side transfer member (32 and 112) of the second input transfer clutch (C-2) in an axial direction on a side of the speed reduction planetary gear (DP) that is opposite to the planetary gear set (PU).

Thereby, it is possible to link the input rotating element and the input side transfer member of the second input transfer clutch with the input shaft without making the members complicated, and it is possible to make the automatic transmission for a vehicle more compact.

In addition, in the present invention (refer, for example, to FIG. 1 through FIG. 19), the locking force transfer members (116, 104) of the first brake (B-1) are connected to the first rotating element (S2) in an axial direction on a side of the planetary gear set (PU) that is opposite to the speed reduction planetary gear (DP).

Thereby, it is possible to link the locking force transfer member of the first brake and the first rotating element without making the members complicated, and it is possible to make the automatic transmission for a vehicle more compact.

In addition, in the present invention (refer, for example, to FIG. 1 through FIG. 9), the stationary element of the speed reduction planetary gear (DP) includes a first sun gear (S1); and
the input rotating element of the speed reduction planetary gear (DP) includes a first carrier (CR1) that freely rotatably supports a first pinion gear (P1) that meshes with the first sun gear (S1) and a second pinion gear that meshes with the first pinion gear (P1), and is normally linked to the input shaft (12); and
the reduced speed rotating element of the speed reduction planetary gear (DP) includes a first ring gear (R1) that meshes with the second pinion gear (P2) and outputs the reduced speed rotation.

Thereby, it is possible to output a reduced speed rotation that reduces the input rotation of the input shaft from the first ring gear.

In addition, in the present invention (refer, for example, to FIG. 1 through FIG. 19), the planetary gear set (PU) is a Ravigneaux-type planetary gear set that includes a second sun gear (S2), a third sun gear (S3), a third pinion gear (P3) that meshes with the third sun gear (S3), a fourth pinion gear (P4) that meshes with the second sun gear (S2) and meshes with the third pinion gear (P3), a second carrier (CR2) that freely rotatably supports the third pinion gear (P3) and the fourth pinion gear (P4), and a second ring gear (R3) that meshes with the fourth pinion gear (P4); and
the first rotating element includes the second sun gear (S2);
the second rotating element includes the third sun gear (S3);
the third rotating element includes the second carrier (CR2); and
the fourth rotating element includes the second ring gear (R3).

Thereby, is it possible to prevent a high rotation speed of each of the rotating elements and it is possible to obtain advantageous gear ratios while linking each of the rotating elements of the planetary gear set and the output side member of each of the clutches and brakes without making the members complicated.

In addition, in the present invention (refer, for example, to FIG. 1 through FIG. 19), a first forward speed is established by engaging the second speed reduction transfer clutch (C-1) and locking the second brake (B-2); a second forward speed is established by engaging the second speed reduction transfer clutch (C-1) and locking the first brake (B-1); a third forward speed is established by engaging the second speed reduction transfer clutch (C-1) and the first speed reduction transfer clutch (C-3); a fourth forward speed is established by engaging the second speed reduction transfer clutch (C-1) and the first input transfer clutch (C-4); a fifth forward speed is established by engaging the second speed reduction transfer clutch (C-1) and the second input transfer clutch (C-2); a sixth forward speed is established by engaging the second input transfer clutch (C-2) and the first input transfer clutch (C-4); a seventh forward speed is established by engaging the second input transfer clutch (C-2) and the first speed reduction transfer clutch (C-3); an eighth speed is established by engaging the second input transfer clutch (C-2) and locking the first brake (B-1); and reverse speeds are established by engaging the first speed reduction transfer clutch (C-3) or the first input transfer clutch (C-4), and locking the second brake (B-2).

Thereby, it is possible to establish eight forward speeds and the reverse speeds.

In addition, in the present invention (refer, for example, to FIG. 1 through FIG. 19), the rotation speed relationships are associated based on the gear relationships of the first, second, third, and fourth rotating elements (S2, S3, CR3, and R3), and in a velocity diagram in which the respective speeds of the first, second, third, and fourth rotating elements (S2, S3, CR3, R3) of the planetary gear unit (PU) are shown on the ordinates, and the corresponding gear ratios of the first, second, third, and fourth rotating elements (S2, S3, CR3, R3) are shown in the abscissa;
the first rotating element (S2) is positioned at the farthest end in the horizontal direction and in sequence the third rotating element (CR2), the fourth rotating element (R3), and the second rotating element (S3) are associated.

Thereby, it is possible to structure a velocity diagram in which the first rotating element is positioned at the farthest end in the horizontal direction, and in sequence the third rotating element, the fourth rotating element, and the second rotating element are associated.

Note that the reference numerals in parenthesis are for referring to the figures, and these are a convenience to facilitate the understanding of the invention, and have no influence of any kind on the composition of the scope of the claims.

### BRIEF DESCRIPTION OF THE DRAWINGS

[FIG. 1] FIG. 1 is a cross-sectional view of the automatic transmission 1₁ according to a first embodiment.

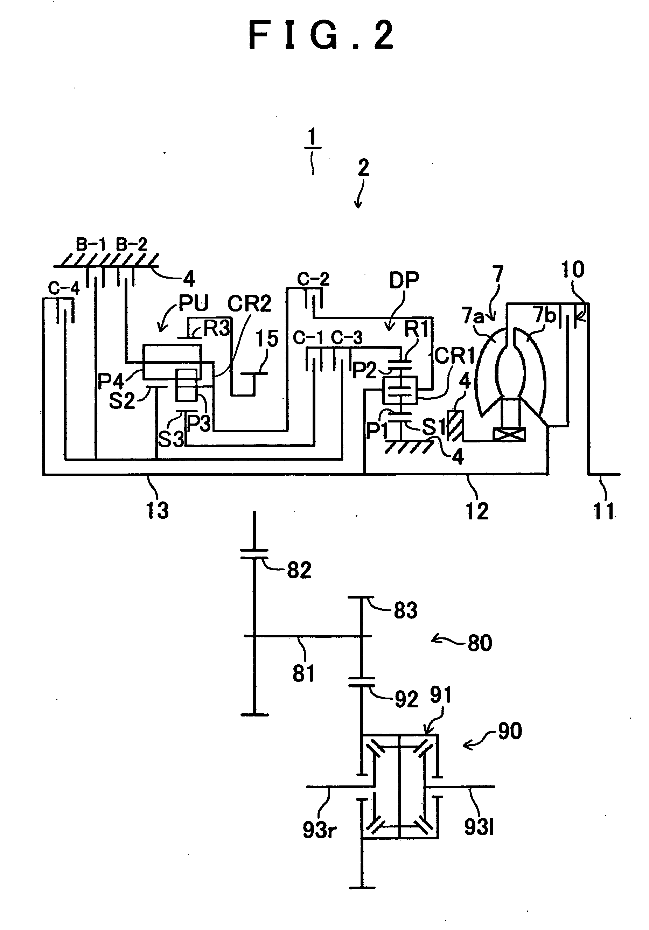

[FIG. 2] FIG. 2 is a skeleton drawing showing the automatic transmission 1.

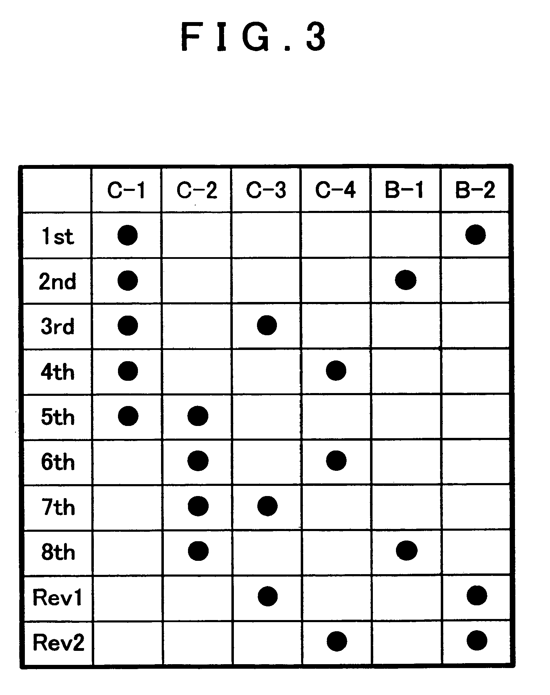

[FIG. 3] FIG. 3 is an operational diagram of the automatic transmission 1.

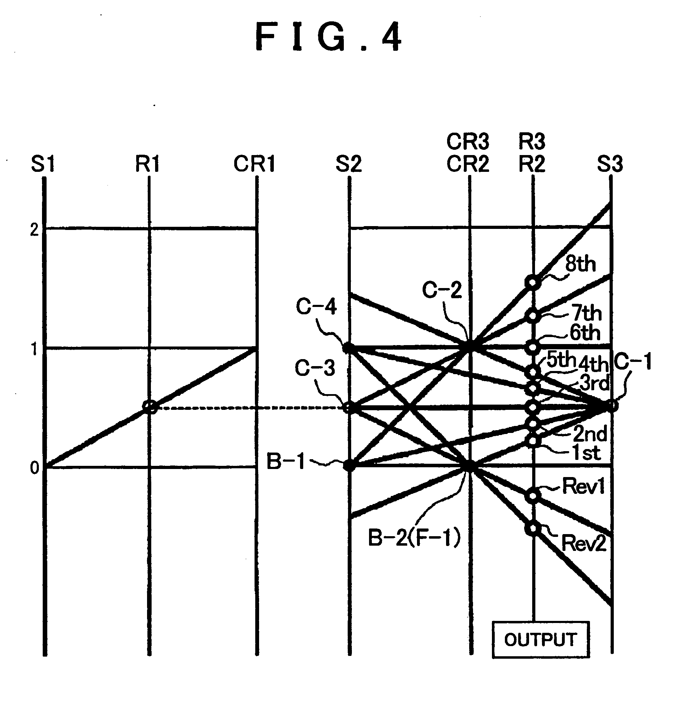

[FIG. 4] FIG. 4 is a velocity diagram of the automatic transmission 1.
[FIG. 5] FIG. 5 is a cross-sectional view showing the automatic transmission 1₂ according to a second embodiment.
[FIG. 6] FIG. 6 is a cross-sectional view showing the automatic transmission 1₃ according to a third embodiment.
[FIG. 7] FIG. 7 is an enlarged cross-sectional view showing the automatic transmission 1₄ according to a fourth embodiment.
[FIG. 8] FIG. 8 is a cross-sectional view showing the automatic transmission 1₅ according to a fifth embodiment.

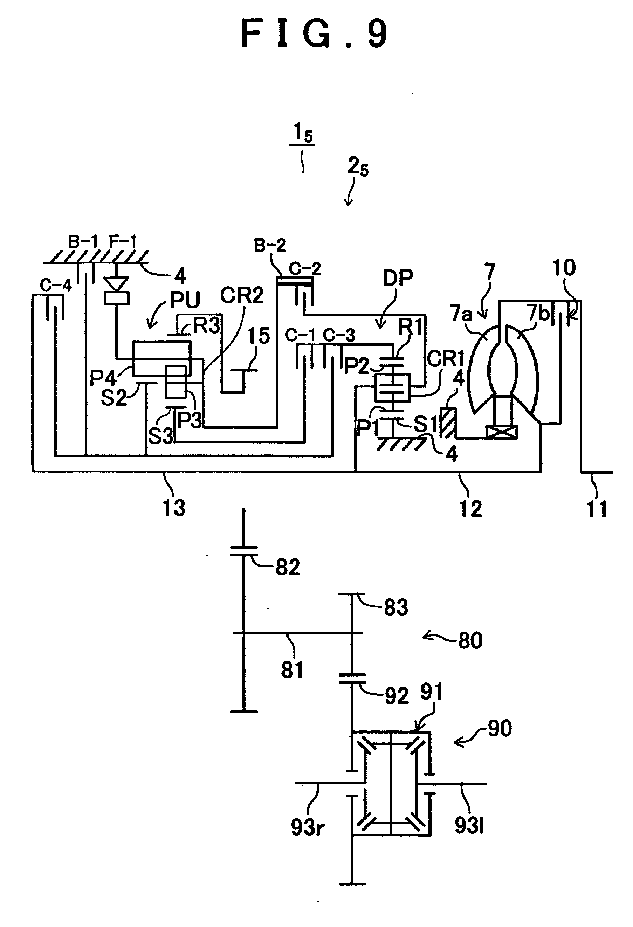

[FIG. 9] FIG. 9 is a skeleton drawing showing the automatic transmission 1₅ according to a fifth embodiment.

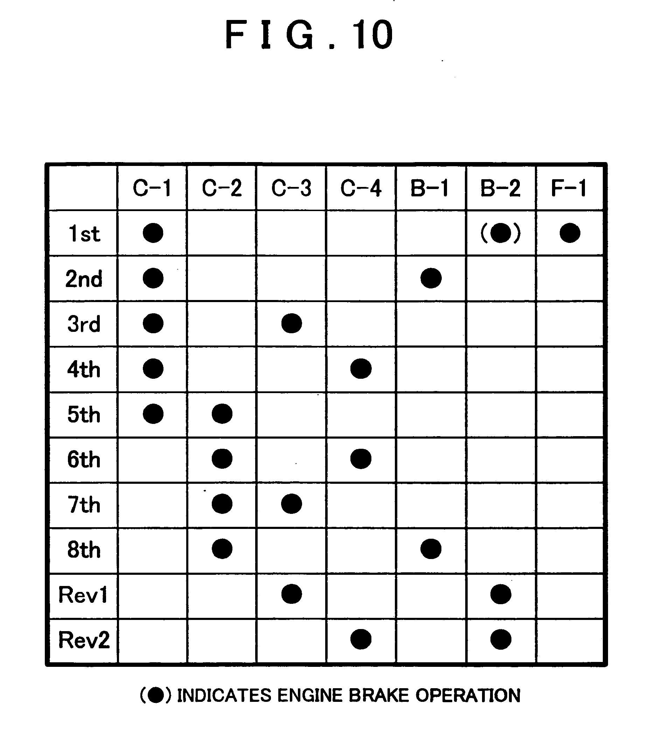

[FIG. 10] FIG. 10 is an operational diagram of the automatic transmission 1₅ according to a fifth embodiment.

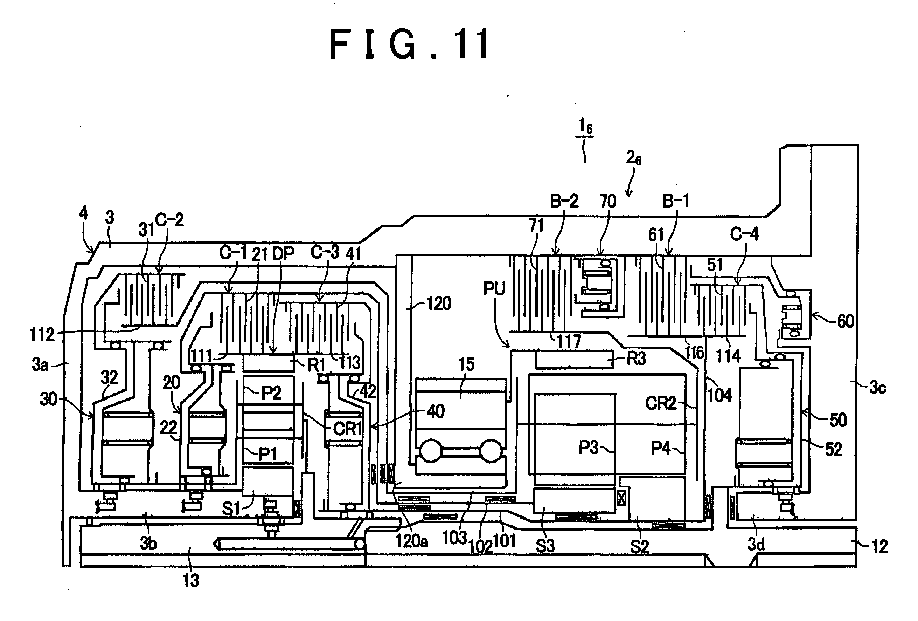

[FIG. 11] FIG. 11 is a cross-sectional view showing the automatic transmission 1₆ according to a sixth embodiment.

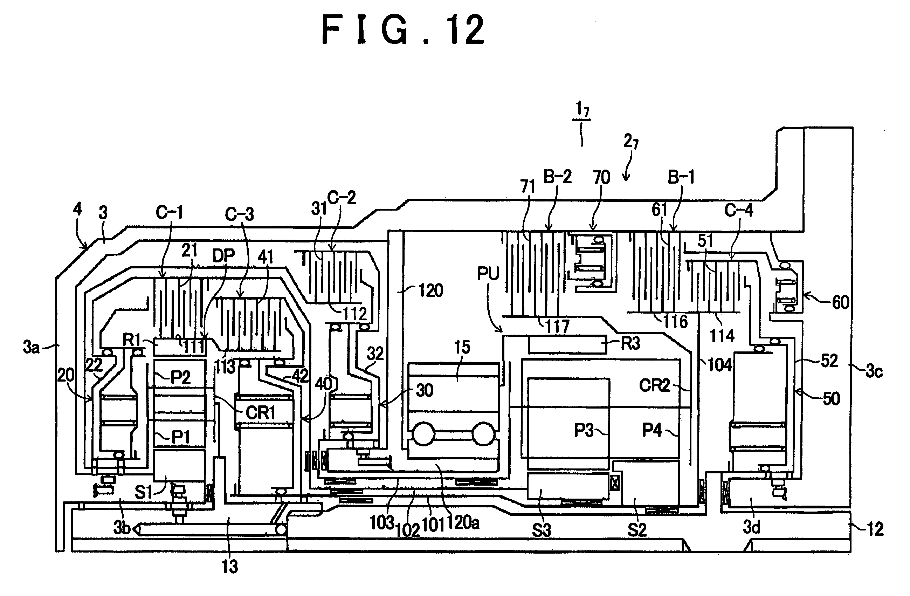

[FIG. 12] FIG. 12 is a cross-sectional view showing the automatic transmission 1₇ according to a seventh embodiment.
[FIG. 13] FIG. 13 is a cross-sectional view showing the automatic transmission 1₈ according to an eighth embodiment.

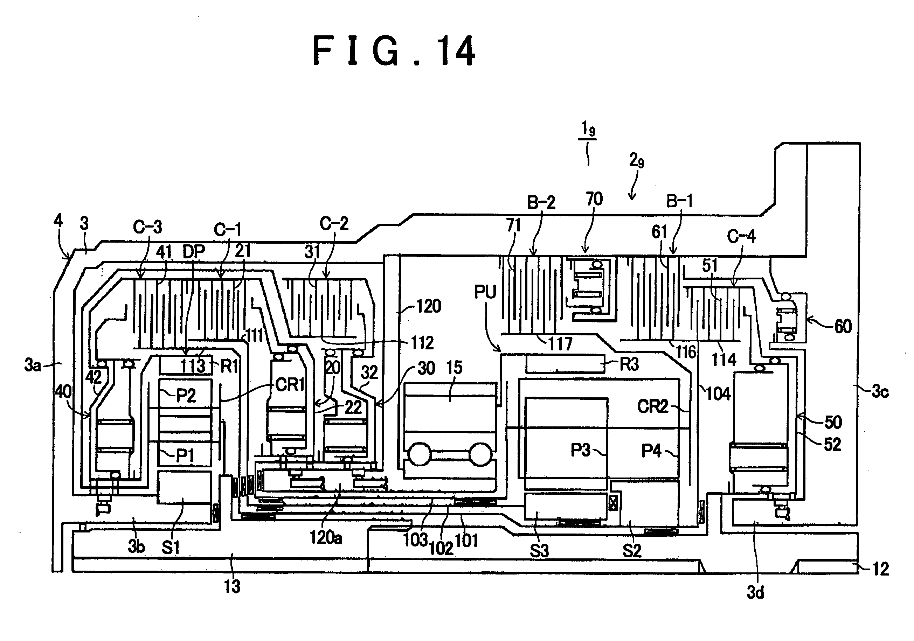

[FIG. 14] FIG. 14 is a cross-sectional view showing the automatic transmission 1₉ according to a ninth embodiment.
[FIG. 15] FIG. 15 is a cross-sectional view showing the automatic transmission 1₁₀ according to a tenth embodiment.
[FIG. 16] FIG. 16 is a cross-sectional view showing the automatic transmission 1₁₁ according to an eleventh embodiment.

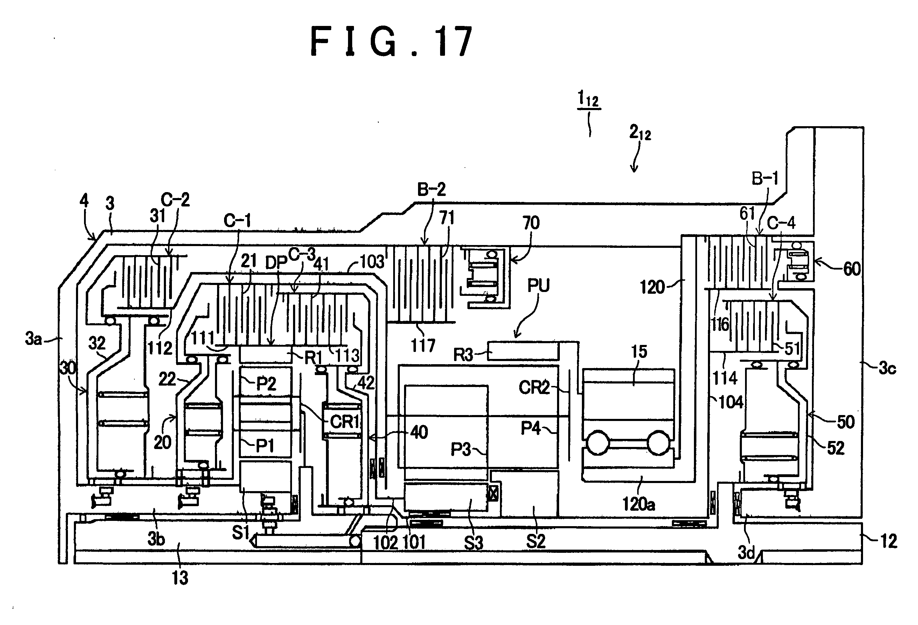

[FIG. 17] FIG. 17 is a cross-sectional view showing the automatic transmission 1₁₂ according to a twelfth embodiment.

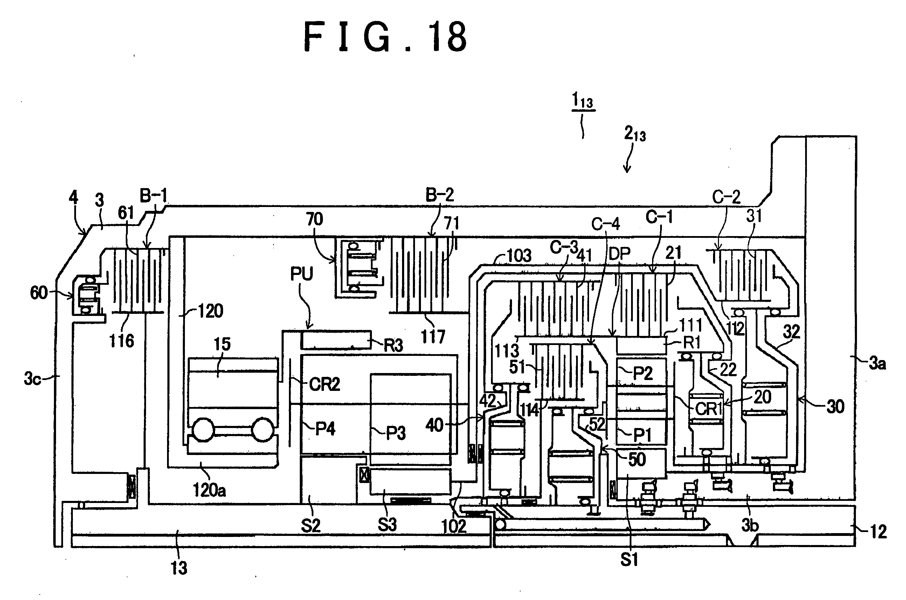

[FIG. 18] FIG. 18 is a cross-sectional view of the showing the automatic transmission 1₁₃ according to a thirteenth embodiment.

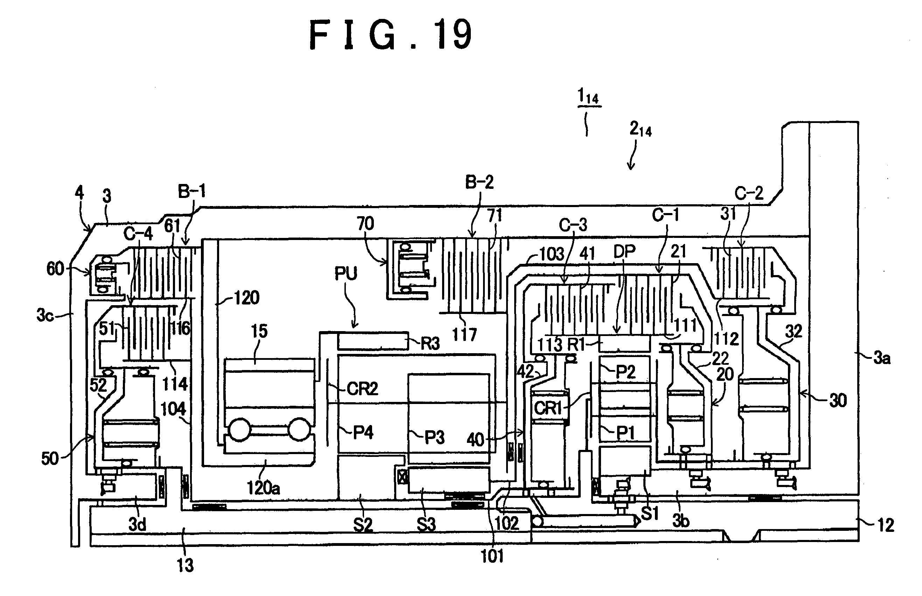

[FIG. 19] FIG. 19 is a cross-sectional view of the showing the automatic transmission 1₁₄ according to a fourteenth embodiment.

### BEST MODES FOR CARRYING OUT THE INVENTION

### First Embodiment

Below, a first embodiment of the present invention will be explained with reference to FIG. 1 to FIG. 4. FIG. 1 is a cross-sectional drawing showing the automatic transmission 1₁ according to the first embodiment. FIG. 2 is a skeleton drawing showing the automatic transmission 1. FIG. 3 is an operational diagram of the automatic transmission 1, and FIG. 4 is a velocity diagram of the automatic transmission 1.

Moreover, in the following explanation, up, down, left, and right in FIG. 1 and FIG. 2 correspond in sequence to "up", "down", "left", and "right" in the actual automatic transmission 1 for a vehicle (below, simply referred to as an "automatic transmission"). In addition, the back portion of the input shaft 12 and the front portion of the intermediate shaft 13 are spline engaged so that the input shaft 12 and the intermediate shaft 13 integrally form an input shaft in a broad sense. The input shaft 12 and the intermediate shaft 13 will be described in detail below. In addition, the lengthwise direction of the input shaft is referred to as the "axial direction" and the direction perpendicular to this axial direction is referred to as the "radial direction". Furthermore, for positions in the radial direction, the side near the shaft is referred to as the "inner diameter side (inner circumferential side)" and the side that is distant from the shaft is referred to as the "outer diameter side (the outer circumferential side)". Furthermore, in the rotation transfer path from the input shaft to the counter gear, for one clutch, the members on the input shaft side (that is, upstream of the transfer path) of the friction plates are referred to an "input side transfer member" of this clutch, and the member on the counter gear side (that is, downstream of the transfer path) is referred to as an "output side transfer member".

First, a schematic structure of the automatic transmission 1 which is preferably mounted, for example, in an FF-type (front drive, front engine) vehicle to which the present invention can be applied will be explained with reference to FIG. 2. As shown in FIG. 1 and FIG. 2, the automatic transmission 1 includes a transmission case 3 and a case 4 that is structured such that a housing case or the like that encloses a torque converter 7 is connected, and inside the transmission case 3, as shown in FIG. 2, a speed change mechanism 2, a counter shaft portion 80, and a differential portion 90 are disposed. The speed change mechanism 2 is disposed, for example, on an axis centered on the input shaft 12 and the intermediate shaft 13 (of the speed change mechanism), which are coaxial to the input shaft 11 of the automatic transmission 1 that is connected to the output shaft of the engine (not illustrated), and in addition, the counter shaft 81 of the counter shaft portion 80 is disposed on an axis that is parallel to the input shaft 12 and the intermediate shaft 13, and furthermore, a differential portion 90 is disposed so as to have a left and right vehicle axles 931 and 93r on an axis that is parallel to the counter shaft 81. Note that the input axis 12, the intermediate axis 13, the counter shaft 81, and the left and right vehicle axles 931 and 93r have a helical positional relationship when viewed from the side.

Note that in an automatic transmission that can be advantageously mounted in an FF-type vehicle, which will be explained below, the left-right direction in the figures is also the actual left-right direction in the vehicle, and depending on the direction in which the automatic transmission 1 is mounted, the right side of the figure may actually be the left side of the vehicle and the left side in the figure may actually be the right side of the vehicle, but in the case of the following explanations, "right side" and "left side" simply refer to the "right side" and the "left side" in the figures.

As shown in FIG. 2, the torque converter 7 includes a pump impeller 7a that is connected to the input shaft 11 of the automatic transmission 1 and a turbine runner 7a to which the rotation of the pump impeller 7a is transferred via a working liquid. A turbine runner 7b is connected to an input shaft 12 of the speed change mechanism 2, which is disposed coaxially to the input shaft 11. In addition, the torque converter 7 is provided with a lock up clutch 10, and when the lock up clutch 10 is engaged by the hydraulic control of a hydraulic control apparatus (not illustrated), the rotation of the input shaft 11 of the automatic transmission 1 is directly transferred to the input shaft 12 of the speed change mechanism 2.

The speed change mechanism 2 is provided with a planetary gear (speed reduction planetary gear) DP and a planetary gear unit (planetary gear set) PU above the input shaft 12 (and the intermediate shaft 13, which will be described below in detail). The planetary gear DP is provided with a sun gear (stationary element; first sun gear) S1, a carrier (input rotating element; first carrier) CR1, and a ring gear (reduced speed rotating element; first ring gear) R1, and the carrier CR1 includes a pinion (first pinion gear) P1 that meshes with the sun gear S1 and a pinion (second pinion gear) P2 that meshes with the ring gear R1, and the pinion P1 and the pinion P2 mesh with each other. Thereby, what is termed a "double pinion planetary gear" is formed.

In addition, the planetary gear unit PU includes, as four rotating elements, a sun gear S2 (first rotating element; second sun gear), a sun gear S3 (second rotating element; third sun gear), a carrier CR2 (CR3) (third rotating element; second carrier), and a ring gear R3 (R2) (fourth rotating element; second ring gear), and in the carrier CR2, a long pinion (fourth pinion gear) P4 that meshes with the sun gear S2 and the ring gear R3 and a short pinion (third pinion gear) P3 that meshes with a sun gear S3 mesh with each other to form what is termed a Ravigneaux-type planetary gear.

The rotation of the sun gear S 1 of the planetary gear DP is held stationary due to being connected to the transmission case 3 (in a wider sense, the case 4). In addition, the carrier CR1 is connected to the input shaft 12 described above and rotates identically to the rotation of the input shaft 12 (below, referred to as the "input rotation"), and at the same time, is connected to the second clutch C-2 (the second input transfer clutch). Furthermore, the ring gear R1 undergoes speed reduction rotation in which the input rotation is reduced by the sun gear S 1, which is stationary, and the carrier CR1, which provides the input rotation, and at the same time, it is connected to the first clutch C-1 (the second speed reduction transfer clutch) and a third clutch C-3 (the first speed reduction transfer clutch).

The sun gear S2 of the planetary gear unit PU is connected to the first brake B-1 and is freely attached to and detached from to the transmission case 3, and at the same time, the sun gear S2 is connected to a fourth clutch C-4 (first input transfer clutch) and the third clutch C-3, to which the rotation of the input shaft 12 is input, via the intermediate shaft 13. The input rotation of the input shaft 12 is freely input via the fourth clutch C-4 and the reduced speed rotation of the ring gear R1 is freely input via the third clutch C-3. In addition, the sun gear S3 is connected to the first clutch C-1, and the reduced speed rotation of the ring gear R1 is freely input.

Furthermore, the carrier CR2 is connected to the second clutch C-2, and the input rotation is freely input via the second clutch C-2. In addition, the carrier CR2 is connected to the second brake B-2, and the rotation is freely locked (held stationary) by the second brake B-2. In addition, the ring gear R3 is connected to the counter gear 15.

The large diameter gear 82, which meshes with the counter gear 15, is disposed on the left side end portion of the counter shaft 81 of the counter shaft portion 80, and at the same time, a small diameter gear 83 is disposed on the right side end portion. In addition, a differential gear apparatus 91 is disposed in the differential portion 90, and the differential ring gear 92 of the differential gear apparatus 91 meshes with the small diameter gear 83. Specifically, the rotation of the counter gear 15 is transferred to the differential ring gear 92 of the differential gear apparatus 91 via the large diameter gear 82, the counter shaft 81, and the small diameter gear 83, and the rotation of the differential ring gear 92 is transferred to the right and left vehicle axles 931 and 93r while permitting differences in the rotational speed of the right and left vehicle axles 931 and 93r by the differential gear apparatus 91.

Next, based on the structure described above, the operation of the speed change mechanism 2 will be explained with reference to FIG. 2, FIG. 3, and FIG. 4. Note that in the velocity diagram shown in FIG. 4, the ordinate represents the speed of the respective rotating elements (each gear) and the abscissa represents the corresponding gear ratios of these rotating elements. In addition, in the portion of the velocity diagram for the planetary gear DP, the ordinate at the farthest end in the horizontal direction (the left side in FIG. 4) corresponds to the sun gear S1 and, the subsequent ordinates correspond, in sequence toward the right in the figure, to the ring gear R1 and the carrier CR1. Furthermore, in the portion of the planetary gear unit PU in the velocity diagram, the ordinate at the farthest end in the horizontal direction (the right side in FIG. 4) corresponds to the sun gear S3, and the subsequent ordinates correspond, in sequence toward the left side in the figure, to the ring gear R3 (R2), the carrier CR2 (CR3), and the sun gear S2.

For example, in the D (drive) range, at the first forward speed (1st), as shown in FIG. 3, the first clutch C-1 and the second brake B-2 are engaged. Thus, as shown in FIG. 2 and FIG. 4, the rotation of the ring gear R1, for which the rotation is reduced by the sun gear S1, which is stationary, and the carrier CR1, which provides the input rotation, is input to the sun gear S3 via the first clutch C-1. In addition, the rotation of the carrier CR2 is held stationary by the locking of the second brake B-2. Thereby, the reduced speed rotation input to the sun gear S3 is output to the ring gear R3 via the stationary carrier CR2, and the normal rotation is output from the counter gear 15 as the first forward speed.

In the second forward speed (2nd), as shown in FIG. 3, the first clutch C-1 is engaged and the first brake B-1 is locked. Thus, as shown in FIG. 2 and FIG. 4, the rotation of the ring carrier R1, for which the rotation is reduced by the sun gear S1, which is stationary, and the carrier CR1, which provides the input rotation, is input to the sun gear S3 via the first clutch C-1. In addition, the rotation of the sun gear S2 is held stationary by the locking of the first brake B-1. Thereby, the carrier CR2 acquires rotation that is lower than that of the sun gear S3, the reduced speed rotation that is input to the sun gear S3 is then output to the ring gear R3 via the carrier CR2, and the normal rotation is output from the counter gear 15 as the second forward speed.

In the third forward gear (3rd), as shown in FIG. 3, the first clutch C-1 and the third clutch C-3 are engaged. Thus, as shown in FIG. 2 and FIG. 4, the rotation of the ring gear R1, for which the rotation is reduced by the sun gear S1, which is stationary, and by the carrier CR1, which provides the input rotation, is input to the sun gear S3 via the first clutch C-1. In addition, the reduced speed rotation of the ring gear R1 is input to the sun gear S2 due to the engagement of the third clutch C-3. Specifically, because the reduced speed rotation of the ring gear R1 is input to the sun gear S2 and the sun gear S3, the planetary gear unit PU becomes directly linked to the reduced speed rotation, the reduced speed rotation is output directly to the ring gear R3, and the normal rotation is output from the counter gear 15 as the third forward speed.

In the fourth forward speed (4th), as shown in FIG. 3, the first clutch C-1 and the fourth clutch C-4 are engaged. Thus, as shown in FIG. 2 and FIG. 4, the rotation of the ring gear R1, for which the rotation is reduced by the sun gear S1, which is stationary, and by the carrier CR1, which provides the input rotation, is input to the sun gear S3 via the first clutch C-1. In addition, the input rotation of the carrier CR1 is input to the sun gear S2 due to the engagement with the fourth clutch C-4. Thus, the carrier CR2 acquires a reduced speed rotation that is higher than that of the sun gear S3, the reduced speed rotation that is input to the sun gear S3 is then output to the ring gear R3 via the carrier CR2, and the normal rotation is output from the counter gear 15 as the fourth forward speed.

In the fifth forward speed (5th), as shown in FIG. 3, the first clutch C-1 and the second clutch C-2 are engaged. Thus, as shown in FIG. 2 and FIG. 4, the rotation of the ring gear R1, for which the rotation is reduced by the sun gear S1, which is stationary, and by the carrier CR1, which provides the input rotation, is input to the sun gear S3 via the first clutch C-1. In addition, the input rotation is input to the carrier CR2 due to the engagement with the second clutch C-2. Thus, a reduced speed rotation, which is higher than that of the fourth forward speed described above, is output into the ring gear R3 due to the reduced speed rotation input to the sun gear S3 and the input rotation input to the carrier CR2, and the normal rotation is output from the counter gear 15 as the fifth forward speed.

In the sixth forward speed (6th), as shown in FIG. 3, the second clutch C-2 and the fourth clutch C-4 are engaged. Thus, as shown in FIG. 2 and FIG. 4, the input rotation of the carrier CR1 is input to the sun gear S2 due to the engagement with the fourth clutch C-4. In addition, the input rotation is input to the carrier CR2 due to the engagement with the second clutch C-2. That is, because the input rotation is input to the sun gear S2 and to the carrier CR2, the planetary gear unit PU is coupled directly to the input rotation, the input rotation is output directly to the ring gear R3, and the normal rotation is output from the counter gear 15 as the sixth forward speed.

In the seventh forward speed (7th), as shown in FIG. 3, the second clutch C-2 and the third clutch C-3 are engaged. Thus, as shown in FIG. 2 and FIG. 4, the rotation of the ring gear R1, for which the rotation is reduced by the sun gear S1, which is stationary, and by the carrier CR1, which provides the input rotation, is input to the sun gear S2 via the third clutch C-3. In addition, the input rotation is input to the carrier CR2 due to the engagement with the second clutch C-2. Thus, an increased speed rotation that is slightly higher than the input rotation is output to the ring gear R3 due to the reduced speed rotation that is input to the sun gear S2 and the input rotation that is input to the carrier CR2, and the normal rotation is output from the counter gear 15 as the seventh forward speed.

In the eighth forward speed (8th), as shown in FIG. 3, the second clutch C-2 is engaged, and the first brake B-1 is locked. Thus, as shown in FIG. 2 and FIG. 4, the input rotation is input to the carrier CR2 due to the engagement with the second clutch C-2. In addition, the rotation of the sun gear S2 is held stationary due to the locking of the first brake B-1. Thus, the input rotation of the carrier CR2 becomes an increased speed rotation that is higher than that of the seventh forward speed described above due to the stationary sun gear S2, this rotation is output to the ring gear R3, and the normal rotation is output from the counter gear 15 as the eighth forward speed.

In the first reverse speed (Rev1), as shown in FIG. 3, the third clutch C-3 is engaged, and the second brake B-2 is locked. Thus, as shown in FIG. 2 and FIG. 4, the rotation of the ring gear R1, for which the rotation is reduced by the sun gear S1, which is stationary, and by the carrier CR1, which provides the input rotation, is input to the sun gear S2 via the third clutch C-3. In addition, the rotation of the carrier CR2 is held stationary by the locking of the second brake B-2. Thus, the reduced speed rotation that is input to the sun gear S2 is output to the ring gear R3 via the carrier CR2, which is stationary, and the reverse rotation is output from the counter gear 15 as the first reverse speed.

In the second reverse speed (Rev2), as shown in FIG. 3, the fourth clutch C-4 is engaged, and the second brake B-2 is locked. Thus, as shown in FIG. 2 and FIG. 4, the input rotation of the carrier CR1 due to the engagement with the clutch C-4 is input to the sun gear S2. In addition, the rotation of the carrier CR2 is held stationary by the locking of the second brake B-2. Thus, the input rotation that is input to the sun gear S2 is output to the ring gear R3 via the carrier CR2, which is stationary, and the reverse rotation is output from the counter gear 15 as the second reverse speed.

In addition, in the P (parking) range and the N (neutral) range, for example, the first clutch C-1, the second clutch C-2, the third clutch C-3, and the fourth clutch C-4 are released. Thereby, the carrier CR1 and the sun gear S2 are disengaged. In addition, the ring gear R1, the sun gear S2, and the sun gear S3 are disengaged, that is, the planetary gear DP and the planetary gear unit PU are disengaged. Additionally, the input shaft 12 (intermediate shaft 13) and the carrier CR2 are disengaged. Thereby, the transfer of the driving force between the input shaft 12 and the planetary gear unit PU is disengaged, that is, the transfer of the driving force between the input shaft 12 and the counter gear 15 is disengaged.

Next, the schematic configuration of the overall automatic transmission 1₁ according to a first embodiment, and in particular, the relative positional relationships between each of the essential components, will be briefly explained with reference to FIG. 1.

Note that in the following explanation, the words clutch (first through fourth clutches C-1 to C-4) and brake (first brake B-1, second brake B-2) are used in a sense that includes the respective friction plates (outer friction plates and inner friction plates) and the hydraulic servos that disengage them.

As shown in FIG. 1, the automatic transmission 1₁ is provided with a speed change mechanism 2₁ inside the transmission case 3. Inside the transmission case 3, the planetary gear unit PU is disposed over the intermediate shaft 13, on the right side (input side) of the planetary gear unit PU in an axial direction, in order from the right, the second clutch C-2, the first clutch C-1, the planetary gear DP, the third clutch C-3, and the counter gear 15 are disposed. In contrast, on the left side of the planetary gear unit PU, the fourth clutch C-4 and the first brake B-1 are disposed in an axial direction. In addition, on the outer circumferential side of the planetary gear unit PU, the second brake B-2 is disposed.

To explain the above in more detail, inside the transmission case 3 towards the right, that is, on a side more toward the right than the counter gear 15, in sequence from the right side, the friction plates 31 of the second clutch C-2, the friction plates 21 of the first clutch C-1, and the friction plates 41 of the third clutch C-3 are disposed above the input shaft 12 on the relatively outer diameter side inside the transmission case 3.

In addition, a partition wall member 3a that separates the transmission case 3 and a housing case (not illustrated) is attached as a portion of the case 4. The hydraulic servo 30 of second clutch C-2 is disposed on a boss portion 3b (the boss portion 3b and the partition wall member 3a do not have to be integrally formed) that is linked to partition wall member 3a. Furthermore, the hydraulic servo 20 of the first clutch C-1 is disposed on the left side of the hydraulic servo 30, the planetary gear DP is disposed on the inner diameter side of the friction plates 21, and the hydraulic servo 40 of the third clutch C-3 is disposed substantially on the inner diameter side of the friction plates 41. That is, on the right side of the transmission case 3, in sequence from the top of the boss portion 3b (i.e., in sequence from the base section of the boss portion 3b to the left side in an axial direction thereof), the hydraulic servo 30, the hydraulic servo 20, the planetary gear DP are disposed, and the hydraulic servo 40 is disposed on the input shaft 12 adjacent to the planetary gear DP.

Furthermore, a flange-shaped support wall (center support member) 120 is disposed by being attached to the inner circumferential surface of the transmission case 3 on the left side of the hydraulic servo 40 of the third clutch C-3. On the inner circumferential side of the support wall 120, a sleeve-shaped support portion 120a is disposed. In addition, on this support portion 120a, the counter gear 15, which is connected to the ring gear R3 of the planetary gear unit PU, which will be described below, is disposed so as to be freely rotatably supported on the support wall 120 via the ball bearing assembly 121.

In contrast, the planetary gear unit PU is disposed on the intermediate shaft 13 on the left side of the transmission case 3 in the figure, that is, on the left side of the counter gear 15. The friction plates 71 of the second brake B-2 and the hydraulic servo 70 of the second brake B-2 are disposed in the right portion of the planetary gear unit PU on the outer circumferential side, and the friction plates 61 of the first brake B-1 are disposed in the left portion of the planetary gear unit PU on the outer circumferential side. The friction plates 51 of the fourth clutch C-4 are disposed on the left side of the friction plates 61, and furthermore, the hydraulic servo 60 of the first brake B-1 is disposed on the left side of the friction plates 51. In addition, the hydraulic servo 50 of the fourth clutch C-4 is disposed on the inner circumferential side of the hydraulic servo 60.

As explained above, the hydraulic servo 30 of the second clutch C-2 and the hydraulic servo 20 of the first clutch C-1 are disposed in an axial direction on a side of the planetary gear DP that is opposite to the planetary gear unit PU, the hydraulic servo 40 of the third clutch C-3 and the counter gear 15 are disposed in an axial direction between the planetary gear DP and the planetary gear unit PU, and the hydraulic servo 50 of the fourth clutch C-4 and the hydraulic servo 60 of the first brake B-1 are disposed in an axial direction on a side of the planetary gear unit PU that is opposite to the planetary gear DP.

Next, the structure inside the transmission case 3 will be explained in detail with reference to FIG. 1. Note that the structure of each of the oil ducts will be explained together thereafter.

The planetary gear DP that is disposed inside the transmission case 3 is provided with a sun gear S1, a carrier CR1, and a ring gear R1. Such a sun gear S 1 is attached so as to be stationary on the boss portion 3b is linked to the partition wall member 3a described above. In addition, the carrier CR1 includes two carrier plates, one on the left and one on the right, and supports the pinions P1 and P2 so as to be freely rotatable. These pinions P1 and P2 mesh with each other, while the former pinion P1 meshes with the sun gear S 1 and the latter pinion P2 meshes with the ring gear R1. The left side carrier plate is connected to the input shaft 12 and the right side carrier plate connects to the clutch drum 32 that spline engages the outer friction plates among the friction plates 31 of the second clutch C-2. The inner friction plates among the friction plates 21 of the first clutch C-1 are spline engaged to the outer circumferential surface of the ring gear R1. In addition, a hub member 113 is linked to the left side of the ring gear R1, and the inner friction plates among the friction plates 41 of the third clutch C-3 are spline engaged to this hub member 113.

The first clutch C-1 is disposed on the boss portion 3b via the inner diameter portion of the clutch drum 32 of the second clutch C-2 on the right side of the planetary gear DP described above. The first clutch C-1 is provided with friction plates 21 and a hydraulic servo 20 that separates these friction plates 21. This hydraulic servo 20 includes a clutch drum 22, a piston member 23, a cancel plate 24, and a return spring 25, and these form the oil chamber 26 and the cancel oil chamber 27. The inner diameter portion of the clutch drum 22 is disposed on the outer circumferential side of the inner diameter portion of the clutch drum 32 of the second clutch C-2, and the outer friction plates of the friction plates 21 are spline engaged to the inner circumferential side of the outer diameter portion of the clutch drum 22. At the same time, the distal end of the outer diameter portion is connected to the transfer member 102 that links to the sun gear S3 of the planetary gear unit PU to be described below through the inner circumferential side of the counter gear 15. In addition, the inner friction plates among the friction plates 21 are spline engaged to the outer circumferential side of the ring gear R1 and the hub member 111 that extends from the ring gear R1. The piston member 23 is disposed so as to be able to move in an axial direction toward the left side of the clutch drum 22, and an oil-tight oil chamber 26 is formed in the space in the clutch drum 22 by the seal rings a1 and a2. Furthermore, the cancel plate 24 is prevented from moving toward the left side by a snap ring 29 that is fit on the clutch drum 22 described above. A return spring 25 is compressed between the cancel plate 24 and the piston 23 that is disposed at the right side thereof, and an oil-tight cancel oil chamber 27 is formed by the sealing rings a1 and a3.

The second clutch C-2 is disposed on the right side of the first clutch C-1 as described above, and is disposed above the boss portion 3b. The second clutch C-2 is provided with friction plates 31 and a hydraulic servo 30 that separates these friction plates 31. This hydraulic servo 30 includes a clutch drum 32, a piston member 33, a cancel plate 34, and a return spring 35, and these form the oil chamber 36 and the cancel oil chamber 37. The left side end portion of the inner diameter portion of the clutch drum 32 is linked to the carrier CR1 of the planetary gear DP, the hydraulic servo 20 of the first clutch C-1 is disposed on the outer circumferential portion on the left side of the clutch drum 32, and the hydraulic servo 30 is enclosed on the right side of the clutch drum 32. In addition, the outer friction plates among the friction plates 31 are spline engaged to the inner circumferential surface on the outer diameter portion of the clutch drum 22, and the inner friction plates among the friction plates 31 are spline engaged to the hub member 112. This hub member 112 passes through the outer circumferential side of the first clutch C-1, the planetary gear DP, and the third clutch C-3 and then passes through the inner circumferential side of the counter gear 15 to link to the transfer member 103 that is linked to the right side plate (that is, the planetary gear DP side) of the carrier CR2 of the planetary gear unit PU that will be described below. The piston member 33 is disposed so as to be able to move in an axial direction on the left side of the clutch drum 32, and an oil-tight oil chamber 36 is formed in the space in the clutch drum 32 by the seal rings a4 and a5. Furthermore, the cancel plate 34 is prevented from moving toward the left by a snap ring 39 that is fit on the clutch drum 32 described above. A return spring 35 is compressed between the cancel plate 34 and the piston member 33 that is disposed on the right side of the cancel plate 34, and at the same time, an oil-tight cancel oil chamber 37 is formed by the seal rings a4 and a6.

Note that because the clutch drum 32 of this second clutch C-2 is connected to the input shaft 12 via the carrier CR1, that is, is rotated by an input rotation that is identical to the rotation of the input shaft 12, it is possible to provide an input rotation speed sensor for measuring the input rotation speed on the outer circumferential side of the clutch drum 32. Thus, in comparison to the case in which the input rotation speed sensor is provided at a position that enables the rotations of the input shaft 12 to be directly measured, for example, it is possible to mount the input rotation speed sensor easily.

The third clutch C-3 is on the left side of the planetary gear DP and is disposed above the input shaft 12. The third clutch C-3 is provided with friction plates 41 and a hydraulic servo 40 that separates these friction plates 41. The inner friction plates among the friction plates 41 are spline engaged to the outer circumferential surface of the hub member 113 that is linked to the ring gear R1 described above. The outer friction plates among the friction plates 41 are spline engaged to the inner circumferential side of the clutch drum 42, which will be described below, and the clutch drum 42 passes through the inner circumferential side of the counter gear 15 and is connected to a transfer member 101 that is linked to the sun gear S2 of the planetary gear unit PU.

The hydraulic servo 40 includes a clutch drum 42, a piston member 43, a cancel plate 44, and a return spring 45, and these form the oil chamber 46 and the cancel oil chamber 47. The clutch drum 42 is installed so as to be freely rotatable on the left side of the outer circumferential surface of the input shaft 12. The piston member 43 is disposed at the clutch drum 42 so as to be movable in an axial direction, and an oil-tight oil chamber 46 is formed in the space between the piston member 43 and the clutch drum 42 by the seal rings a7 and a8. A portion of the outer circumferential surface of the piston member 43 opposes the front surface of the friction plates 41. Furthermore, the cancel plate 44 is prevented from moving toward the right by a snap ring 49 that is fit on the outer circumferential surface of the inner diameter side of the clutch drum 42 described above. The return spring 45 is compressed between the cancel plate 44 and the piston member 43 that is disposed on the left side of the cancel plate 44, and at the same time, forms an oil-tight cancel oil chamber 47 by the seal rings a7 and a9.

The first brake B-1 is disposed from the outer diameter side of the left portion of the planetary gear unit PU up to the side wall portion 3c of the left side of the transmission case 3. The first brake B-1 is provided with friction plates 61 and a hydraulic servo 60 that separates these friction plates 61. The outer friction plates among the friction plates 61 are spline engaged to the inner circumferential surface of the transmission case 3, and at the same time, the inner friction plates are spline engaged to the hub member 116 that links to the sun gear S2 of the planetary gear unit PU via the transfer member 104.

The hydraulic servo 60 includes a piston member 63, a cancel plate 64, and a return spring 65, and an oil chamber 66 is formed between the piston member 63 and the transmission case 3. The piston member 63 is disposed so as to be movable in an axial direction, and the right side end portion thereof opposes the friction plates 61. An oil-tight oil chamber 66 is formed in the space between the piston member 63 and the transmission case 3 by the two seal rings a13 and a14. Furthermore, the cancel plate 64 is prevented from moving toward the right side by a snap ring 69 that is fit on the inner circumferential surface of the transmission case 3.

The second brake B-2 is disposed on the outer diameter side of the ring gear R3 of the planetary gear unit PU. The second brake B-2 is provided with friction plates 71 and a hydraulic servo 70 that separates these friction plates 71. The outer friction plates among the friction plates 71 are spline engaged to the inner circumferential surface of the transmission case 3, and at the same time, the inner friction plates are spline engaged to the hub member 117 that links to the carrier CR2 of the planetary gear unit PU.

The hydraulic servo 70 includes a cylinder member 72, a piston member 73, a cancel plate 74, and a return spring 75, and the oil chamber 76 is formed between the cylinder member 72 and the piston member 73. The piston member 73 is disposed so as to be movable in an axial direction, and the right side end portion thereof opposes the friction plates 71. An oil-tight oil chamber 76 is formed in the space between the piston member 73 and the transmission case 3 by the two seal rings a15 and a16. Furthermore, the cancel plate 74 is prevented from moving toward the right side by a snap ring 79 that is fit on the inner circumferential surface of the transmission case 3.

The fourth clutch C-4 is at the left side of the planetary gear unit PU, is disposed on the inner circumferential side of the first brake B-1, and it is provided with friction plates 51 and a hydraulic servo 50 that separates these friction plates 51. The inner friction plates among the friction plates 51 are linked to the hub member 116 described above, and at the same time, are spline engaged to the hub member 114 that is linked to the carrier CR2 via the transfer member 104. The outer friction plates among the friction plates 51 are spline engaged to the inner circumferential side of the clutch drum 52, which will be explained below, and the clutch drum 52 is linked to the intermediate shaft 13. This intermediate shaft 13 is spline engaged to the input shaft 12 described above, that is, the clutch drum 52 is linked to the input shaft 12 via the intermediate shaft 13. In this manner, the fourth clutch C-4 can directly engage and disengage the input shaft 12 (intermediate shaft 13) and the sun gear S2, and not, for example, via the carrier CR1 of the planetary gear DP.

The hydraulic servo 50 includes a clutch drum 52, a piston member 53, a cancel plate 54, and a return spring 55, and these form the oil chamber 56 and the cancel oil chamber 57. The right side end portion of the inner circumferential side of the clutch drum 52 is installed on the intermediate shaft 13, and at the same time, the clutch drum 52 is supported so as to be freely rotatable on the boss portion 3d that is linked to the side wall portion 3a of the transmission case 3. The piston member 53 is disposed on the clutch drum 52 so as to be movable in an axial direction, and an oil-tight oil chamber 56 is formed in the space between the piston member 53 and the clutch drum 52 by seal rings a10 and a11. A portion of the outer circumferential side of the piston member 53 is opposed to the front surface of the friction plates 51. Furthermore, the cancel plate 54 is prevented from moving toward the right by a snap ring 59 that is fit on the outer circumferential surface of the inner diameter side of the clutch drum 52 described above. A return spring 55 is compressed between the cancel plate 54 and the piston member 53 that is disposed on the left side thereof, and at the same time, an oil-tight cancel oil chamber 57 is formed by the seal springs a10 and a12.

The planetary gear unit PU includes a sun gear S2, a sun gear S3, a short pinion P3 that meshes with the sun gear S3, a long pinion P4 that meshes with the sun gear S2, the short pinion P3, and the ring gear R3, a carrier CR2 that freely rotatably supports the short pinion P3 and the long pinion P4 by both end plates, and a ring gear R3 that meshes with the long pinion P4. Thereby, what is termed a Ravigneaux-type planetary gear is formed.

The transfer member 101 that passes through the inner circumferential side of the counter gear 15 described above is linked to the right side of the sun gear S2, and the sun gear S2 is thereby linked to the clutch drum 42 of the third clutch C-3 via the transfer member 101. In addition, the transfer member 104 described above is linked to the left side of the sun gear S2, and the sun gear S2 is linked to the hub member 114 of the fourth clutch C-4 and the hub member 116 of the first brake B-1 via the transfer member 104. The transfer member 102 that passes through the inner circumferential side of the counter gear 15 described above is linked to the right side of the sun gear S3, and the clutch drum 22 of the first clutch C-1 is linked to the sun gear S3 via the linking member 102.

The right side of the carrier CR2, that is, the side plate on the planetary gear DP side, is linked to the transfer member 103 that passes through the inner circumferential side of the counter gear 15 described above, and the carrier CR2 is thereby linked to the hub member 112 of the second clutch C-2 via the transfer member 103. The side plate on the left side of the carrier CR2 is linked to the hub member 117 of the second brake B-2 described above. In addition, the ring gear R3 is connected to the counter gear 15 via the transfer member 105. Note that the counter gear 15 meshes with the large diameter gear 82 that is linked to the counter shaft 81 as described above, and links to the left and right wheels 931 and 93r (that is, the drive wheels) via the counter shaft portion 80, the differential gear portion 90, and the like.

Next, the structure of each of the oil ducts and the supply of the working oil will be briefly explained. The oil duct c30 in the boss portion 3b communicates with the oil chamber 36 of the hydraulic servo 30 of the second clutch C-2, that is, the oil chamber 36 that is formed by sealing the space between the clutch drum 32 and the piston member 33 by the seal rings a4 and a5, by sealing the space between the clutch drum 32 and the boss portion 3b by the seal rings d1 and d2, and thereby working oil is supplied from the oil duct c30. Note that oil is supplied from an oil duct (not illustrated) to the cancel oil chamber 37 that is formed by sealing the space between the piston member 33 and the cancel plate 34 by the seal rings a4 and a6.

In addition, the oil duct c20 in the boss portion 3b communicates with the oil chamber 26 of the hydraulic servo 20 of the first clutch C-1, that is, the oil chamber 26 that is formed by sealing the space between the clutch drum 22 and the piston member 23 by the seal rings a1 and a2, by sealing the space between the clutch drum 32 of the second clutch C-2 and the boss portion 3b by the seal rings d3 and d4, and by sealing the space between the clutch drum 32 and the clutch drum 22 by the seal rings d5 and d6. Thereby, working oil is supplied from the oil duct c20. Note that oil is supplied from an oil duct (not illustrated) to the cancel oil chamber 27 that is formed by sealing the space between the piston member 23 and the cancel plate 24 by the seal rings a1 and a3.

In addition, the oil duct c40 in the boss portion 3b communicates via the oil ducts c41, c42, and c43 in the input shaft 12, with the oil chamber 46 of the hydraulic servo 40 of the third clutch C-3, that is, the oil chamber 46 formed by sealing the space between the clutch drum 42 and the piston member 43 by the seal rings a7 and a8, by sealing the space between the boss portion 3b and the input shaft 12 by the seal rings d7 and d8, and by sealing the space between the input shaft 12 and the clutch drum 42 by the seal rings d9 and d10. Thereby, working oil is supplied from the oil duct c43. Note that oil is supplied from an oil duct (not illustrated) to the cancel oil chamber 47 that is formed by sealing the space between the piston member 43 and the cancel plate 44 by the seal rings a7 and a9.

In addition, the oil duct c50 in the boss portion 3d communicates with the oil chamber 56 of the hydraulic servo 50 of the fourth clutch C-4, that is, the oil chamber 56 formed by sealing the space between the clutch drum 52 and the piston member 53 by the sealing rings a10 and a11, by sealing the space between the clutch drum 52 and the boss portion 3d by the seal rings d11 and d12. Thereby, working oil is supplied from the oil duct c50. Note that oil is supplied from an oil duct (not illustrated) to the cancel oil chamber 57 that is formed by sealing the space between the piston member 53 and the cancel plate 54 by the seal rings a10 and a12.

In addition, working oil is supplied from an oil duct in the side wall portion 3c (not illustrated) to the oil chamber 66 of the hydraulic servo 60 of the first brake B-1, that is, the oil chamber 66 that is formed by sealing the space between the side wall portion 3c of the transmission case 3 and the piston member 63 by the seal rings a13 and a14.

In addition, working oil is supplied from an oil duct in the transmission case 3 (not illustrated) to the oil chamber 76 of the hydraulic servo 70 of the second brake B-2, that is, the oil chamber 76 that is formed by sealing the space between the cylinder member 72 and the piston member 73 by the seal rings a15 and a16.

In addition, an oil duct c80 is formed in a axial direction in the input shaft 12 and the intermediate shaft 13, and lubricating oil is supplied from an oil duct (not illustrated) in the boss portion 3b or the boss portion 3d to the oil duct c80. A plurality of holes (not illustrated) are bored into the input shaft 12 and the intermediate shaft 13 in the radial direction from the oil duct 80, and the lubricating oil that is supplied to the oil duct c80 is supplied into the speed change mechanism 2₁ by being sprayed from these holes.

In addition, an oil duct c90 is formed in the input shaft 12 in an axial direction. The oil duct 90 communicates with the lock up clutch 10 described above via an oil duct (not illustrated), and when working oil is supplied to the oil duct c90 from a hydraulic control apparatus (not illustrated) via an oil duct in the boss portion 3b, this working oil is supplied up to the friction plates of the lock up clutch 10, the friction plates are pressed, and thereby the lock up clutch 10 is engaged.

However, for example, in the automatic transmission that is shown in FIG. 19 of Japanese Patent Application Publication No. JP-A-2004-183705, an input rotating element of a speed reduction planetary gear and a rotating element of a planetary gear set are structured so as to be freely locked by clutches, but assuming that the transfer member that transfers this input rotation is linked to the rotating element of the planetary gear set through the outer circumferential side of the planetary gear set in the radial direction from the input rotating element of the speed reduction planetary gear, the transfer member is linked to the rotating element by enclosing the planetary gear set.

Disposing the transfer member that transfers the input rotation on the outer circumferential side of the planetary gear set in this manner hinders making the automatic transmission more compact in the radial direction. In addition, because the transfer member is disposed in the outermost circumferential side in the radial direction, a centrifugal force is generated during rotation and a high rigidity becomes necessary. Thus, it is necessary to make the transfer member thick, reducing the weight is hindered, inertia is increased, and improving the controllability of the automatic transmission for a vehicle is hindered.

In addition, because each of the rotating elements of the planetary gear set rotate relatively to each other, lubricating oil must be supplied and cooled, but because the transfer member encloses the planetary gear set, there are problems in that discharging the supplied lubricating oil becomes difficult, heat is accumulated easily, that is, it is not possible to ensure the cooling performance. Furthermore, when, for example, sufficient holes are provided in the transfer member so that the lubricating oil can be discharged smoothly, there are problems in that it is necessary to make the transfer member even more thick in order to ensure a high rigidity, as described above, and the weight is further increased.

In addition, because the transfer member encloses a section from the speed reduction planetary gear to the planetary gear set, the assembly of the automatic transmission for a vehicle becomes difficult. Furthermore, even if, for example, the transfer member is partitioned into a plurality of sections and linked by splines or the like, these splines are positioned and assembled, and simplifying the assembly of the automatic transmission for a vehicle is difficult.

In addition, because the transfer member also encloses other clutches, for example, it is not possible to provide a structure in which a center support member is disposed and the working oil for a clutch is supplied from this center support member. That is, because it is necessary to supply the working oil to such a hydraulic servo of the clutch from the input shaft (in particular, via members that rotate relatively with respect to each other), there are problems in that the number of seal rings is increased in order to supply working oil to the hydraulic servos of these clutches, and the sliding resistance increases and improving the power transfer efficiency of the automatic transmission for a vehicle is hindered.

However, according to according to the automatic transmission 1₁ for a vehicle according to the present invention explained above, it is possible to eliminate a member that encloses the planetary gear unit PU because the fourth clutch C-4 is disposed so as to be interposed on the transfer path that connects the space between input shaft 12 and the sun gear S2, the second clutch C-2 is disposed so as to be interposed on the transfer path that connects the space between the carrier CR1 and the carrier CR2, and the output side transfer member 103 of the second clutch C-2 is linked to the carrier CR2 in the planetary gear unit PU at the planetary gear DP side in the axial direction. Thereby, it is possible to make the automatic transmission 1₁ for a vehicle more compact in the radial direction. In addition, it is possible to shorten the transfer member that requires a high rigidity, and it is possible to improve the controllability of an automatic transmission 1₁ for a vehicle. Further, it is possible to provide a structure in which the supplied lubricating oil is readily discharged, thereby ensuring the cooling performance. In addition, it is possible to simplify the assembly of the automatic transmission 1₁ for a vehicle. Furthermore, the structure of the disposition of each of the clutches enables a structure in which a support wall 120 is erected and the working oil of a clutch is supplied from the support wall 120. Thus, it is possible to reduce the number of seal rings, to reduce the sliding resistance of the seal rings, and to improve the power transfer efficiency of the automatic transmission 1₁ for a vehicle.

In addition, because the counter gear 15 that is linked to the ring gear R3 is provided, the counter gear 15 is disposed in an axial direction between the planetary gear unit PU and the planetary gear DP, and the output side member 101 of the third clutch C-3, the output side transfer member 102 of the first clutch C-1, and the output side transfer member 103 of the second clutch C-2 communicate with the planetary gear unit PU through the inner circumferential side of the counter gear 15, it is possible to dispose in an axial direction the counter gear 15 between the planetary gear unit PU and the planetary gear DP, and it is possible to advantageously use the automatic transmission 1₁ for a vehicle in an FF-type vehicle.

Furthermore, because the hydraulic servo 30 of the second clutch C-2 is disposed in an axial direction on a side of the planetary gear DP that is opposite to the planetary gear unit PU, it is possible to supply working oil from the oil duct c30 that is provided in the boss portion 3b is linked to one end of the case 4 to the hydraulic servo 30 of the second clutch C-2. Thereby, it is possible to reduce the number of seal rings in comparison to the case in which the working oil is supplied from an oil duct that is provided in the input shaft 12. It is possible to reduce the sliding resistance of the seal rings, and it is possible to improve the power transfer efficiency of the automatic transmission 1₁ for a vehicle.

In addition, because the hydraulic servo 50 of the fourth clutch C-4 is disposed in an axial direction on a side of the planetary gear unit PU that is opposite to the planetary gear DP, it is possible to dispose the friction plates 51 of the fourth clutch C-4 at a relatively outer circumferential side, and it is possible to make the area of the friction plates 51 large. Thereby, it is possible to ensure a transferable torque capacity, and it is possible to reduce the number of the friction plates 51. Furthermore, it is possible to supply working oil to the hydraulic servo 50 of the fourth clutch C-4 from the oil duct c50 that is provided inside the boss portion 3d that is linked to one end of the case 4. Thereby, it is possible to decrease the number of seal rings in comparison to the case in which the working oil is supplied from an oil duct that is provided inside the input shaft 12, to reduce the sliding resistance of the seal rings, and to improve the power transfer efficiency of the automatic transmission 1₁ for a vehicle.

Furthermore, because the hydraulic servo 40 of the third clutch C-3 is disposed in an axial direction between the planetary gear unit PU and the planetary gear DP, in comparison to the case in which the hydraulic servo 40 of the third clutch C-3 is disposed in an axial direction on a side of the planetary gear DP that is opposite to the planetary gear unit PU, it is possible to shorten the distance between the third clutch C-3 and the planetary gear unit PU, and it is possible to shorten the output side transfer member 101 of the third clutch C-3, which requires strength for transferring a high torque. Thereby, it is possible to reduce the weight, and it is possible to improve the controllability of the automatic transmission 1₁ for a vehicle.

In addition, because the hydraulic servo 20 of the first clutch C-1 is disposed in an axial direction on a side of the planetary gear DP that is opposite to the planetary gear unit PU, it is possible to supply working oil to the hydraulic servo 20 of the first clutch C-1 from the oil duct c20 that is provided inside the boss portion 3b, which is linked to one end of the case 4. Thereby, for example, in comparison to the case in which the hydraulic servo 20 of the first clutch C-1 is disposed in the input shaft 12 and working oil is supplied via the input shaft 12, it is possible to make the length of the oil duct short, and it is possible to improve the controllability as an automatic transmission 1₁ for a vehicle.

Furthermore, because a first brake B-1 that freely locks the rotation of the sun gear S2 with respect to the case 4 is provided and the hydraulic servo 60 of the first brake B-1 is disposed in an axial direction on a side of the planetary gear unit PU that is opposite to the planetary gear DP, it is possible to link the output side transfer member of the first brake B-1 and the sun gear S2 without making the members complicated, and it is possible to make the automatic transmission 1₁ for a vehicle more compact.

In the automatic transmission 1₁ for a vehicle according to the present invention as explained above, the transfer member 103 of the output side of the second clutch C-2 is linked to the carrier CR2 through the outer circumferential side of the transfer members 101, 102 of the output side of the third and first clutches C-3, C-1, the transfer member 104 of the output side of the fourth clutch C-4 and the transfer member 101 of the output side of third clutch C-3 are linked to the sun gear S2, and the transfer member 104 of the output side of the fourth clutch C-4, the transfer member 101 of the output side of third clutch C-3, and the sun gear S2, which rotate integrally therewith, are disposed on the inner circumferential side with respect to the transfer member 102 of the output side of the first clutch C-1. Therefore, the transfer member 104 of the output side of the fourth clutch C-4, which rotates faster than the transfer member 103 of the output side of the second clutch C-2, is further toward the inner circumferential side than the transfer member 102 of the output side of the first clutch C-1, which is on the inner circumferential side of the transfer member 103 of the output side of the second clutch C-2. As a result, it is possible to make the diameter of the transfer member 104 of the output side of the fourth clutch C-4 smaller than the diameter of the transfer member 103 of the output side of the second clutch C-2, and thus it is possible to reduce the weight more than the case in which it is on the outer circumferential side. In addition, because the inertia is reduced in comparison to the case in which it is disposed on the outer circumferential side, it is possible to improve the controllability of the automatic transmission 1₁ for a vehicle.

In addition, the third and first clutches C-3, C-1 are disposed on a side of the planetary gear DP with respect to the planetary gear set PU, the transfer members 101, 102 of the output side of the third and first clutches C-3, C-1 are linked respectively to the sun gear S2 and the sun gear S3, the fourth clutch C-4 is disposed in an axial direction on a side of the planetary gear unit PU that is opposite to the planetary gear DP, the transfer member 104 of the output side of the fourth clutch C-4 is linked to the sun gear S2, the second clutch C-2 is disposed on the planetary gear DP side with respect to the planetary unit PU, and the transfer member 103 of the output side of the second clutch C-2 is linked to the carrier CR2 through the outer circumferential side of the transfer members 101, 102 of the output side of the third and first clutches C-3, C-1. Thereby, because the transfer member 104 of the output side of the fourth clutch C-4, which rotates faster than the transfer member of the output side of the second clutch C-2, is on the inner circumferential side, the diameter of the transfer member 104 of the output side of the fourth clutch C-4 can be made smaller than the diameter of the transfer member 103 of the output side of the second clutch C-2, and it is possible to reduce the weight more than the case in which it is disposed on the outer circumferential side. In addition, because it is possible to reduce the inertia in comparison to the case in which it is on the outside, it is possible to improve the controllability of the automatic transmission 1₁ for a vehicle.

In addition, in comparison to disposing the hydraulic servo 50 of the fourth clutch C-4 between the planetary gear unit PU and the planetary gear DP, it is possible to dispose the friction plates 51 of the fourth clutch C-4 on a relatively outer circumferential side, and it is possible to increase the area of the friction plates. Thus, it is possible to ensure a transferable torque volume, and it is possible to reduce the number of friction plates 51. Furthermore, it is possible to shorten the distance between the third and first clutches C-3, C-1 and the planetary gear unit PU, and it is possible to shorten the transfer members 101, 102 of the output side of the third and first clutches C-3, C-1, which must be strong in order to transfer a high torque. Thereby, it is possible to decrease the weight, and it is possible to improve the controllability of the automatic transmission 1₁ for a vehicle.

Furthermore, it is possible, for example, to supply the working oil to the hydraulic servo 50 of the fourth clutch C-4 from an oil duct c50 that is provided in the boss portion 3b that is linked to the side wall 3a of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₁ for a vehicle.

In addition, because the transfer member of the input side of the fourth clutch C-4 is linked to the input shaft 12 and the intermediate shaft 13 through the inner circumferential side of the planetary gear unit PU and a portion of the transfer member of the input side of the fourth clutch C-4 is formed as the clutch drum 52 of the hydraulic servo 50 of the fourth clutch C-4, in comparison to the case in which the transfer member of the output side of the fourth clutch C-4 is formed as the clutch drum of the hydraulic servo 50, the clutch drum of the hydraulic servo 50 can also act as a member that transfers power from the input shaft 12, and thus it is possible to form the transfer member compactly in the axial direction.

Furthermore, because there is a boss portion 3b that links to the side wall 3a of the case 4 and holds the sun gear S1 stationary, the transfer member of the input side of the second clutch C-2 is linked to the carrier CR1 and a portion of the transfer member of the input side of the second clutch C-2 is formed as the clutch drum 32 of the hydraulic servo 30 of the second clutch C-2, and the hydraulic servo 30 is disposed above the boss portion 3b in an axial direction between the planetary gear DP and the side wall 3a, it is possible to supply the working oil to the hydraulic servo 30 of the second clutch C-2 from an oil duct c30 that it provided in the boss portion 3b. Thus, in comparison to the case in which the hydraulic servo 30 of the second clutch C-2 is disposed above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₁ for a vehicle.

In addition, because the hub member 111 of the first clutch C-1 is linked to the ring gear R1, the transfer member 102 of the output side of the first clutch C-1 is linked to the sun gear S3, a portion of the transfer member 102 of the output side of the first clutch C-1 is formed as the clutch drum 22 of the hydraulic servo 20 of the first clutch C-1, and the hydraulic servo 20 is disposed above the boss portion 3b in an axial direction between the planetary gear DP and the hydraulic servo 20 of the second clutch C-1, it is possible to supply the working oil to the hydraulic servo 20 of the first clutch C-1 from an oil duct c20 that is provided in the boss portion 3b that is linked to the side wall 3a of the case 4. Thus, in comparison to the case in which, for example, the hydraulic servo 20 of the first clutch C-1 is disposed above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₁ for a vehicle.

Furthermore, because a counter shaft 81 is provided that is disposed parallel to the input shaft 12 and linked via the counter gear 15 that is linked to the ring gear R3, and the output rotation from the ring gear R3 is transferred to the counter shaft 81 via the counter gear 15, it is possible to use the automatic transmission 1₁ for a vehicle advantageously in an FF-type vehicle.

In addition, because the counter gear 15 is disposed in an axial direction between the planetary gear unit PU and the planetary gear DP and is supported by a support portion 120a that is linked to the support wall 120 that extends from the case 4, it is possible to prevent the counter gear 15 from becoming distant from the input side in an axial direction. For example, it is possible to position the counter shaft portion 80 and the differential gear portion 90 near the torque converter 7 side, thereby making the automatic transmission 1₁ for a vehicle more compact. Thus, it is possible to prevent interference between the members and the frame of the vehicle, and it is possible to improve the mounting characteristics for the automatic transmission 1₁ for a vehicle in the vehicle.

Furthermore, because the carrier CR1 is linked to the input shaft 12 on the planetary gear unit PU side with respect to the planetary gear DP and linked in an axial direction to the clutch drum 32, which is the transfer member of the input side of the second clutch C-2, at a side of the planetary gear DP that is opposite to the planetary gear unit PU, it is possible to link the carrier CR1, the transfer member 32 of the input side of the second clutch C-2, and the input shaft 12 without making the members complicated, and it is possible to make the automatic transmission 1₁ for a vehicle more compact.

In addition, because the hub member 116 of the first brake B-1 and the transfer member 104 that is linked thereto are linked in an axial direction to the sun gear S2 at a side of the planetary gear unit PU that is opposite to the planetary gear DP, it is possible to link the hub member 116 of the first brake B-1, the transfer member 104, and the sun gear S2 without making the members complicated, and it is possible to make the automatic transmission 1₁ for a vehicle more compact.

In addition, because the planetary gear DP includes a sun gear S 1 for which the rotation is normally held stationary with respect to the case 4, a carrier CR1 that freely rotatably supports the pinion gear P1 and the pinion gear P2 and is normally linked to the input shaft 12, and a ring gear R1 that meshes with the pinion gear P2 and outputs a reduced speed rotation, it is possible to output from the ring gear R1 a reduced speed rotation that reduces the input rotation of the input shaft 12.

In addition, because the planetary gear unit PU contains a Ravigneaux-type planetary gear unit PU that includes a sun gear S2, a sun gear S3, short pinion P3 that meshes with the sun gear S3, a long pinion P4 that meshes with the sun gear S2 and meshes with the short pinion P3, a carrier CR2 that freely rotatably supports the short pinion P3 and the long pinion P4, and the ring gear R3 that meshes with the long pinion P4, it is possible to link each of the rotating elements of the planetary gear unit PU and the output side members of each of the clutches and brakes without making these members complicated, and at the same time it is possible to prevent the rotation of each of the rotating members from becoming high, and it is possible to obtain favorable gear ratios.

In addition, the first forward speed can be established by engaging the first clutch C-1 and locking the second brake B-2; the second forward speed can be established by engaging the first clutch C-1 and locking the first brake B-1; the third forward speed can be established by engaging the first clutch C-1 and the third clutch C-3; the fourth forward speed can be established by engaging the first clutch C-1 and the fourth clutch C-4; the fifth forward speed can be established by engaging the first clutch C-1 and the second clutch C-2; the sixth forward speed can be established by engaging the second clutch C-2 and the fourth clutch C-4; the seventh forward speed can be established by engaging the second clutch C-2 and the third clutch C-3; the eighth forward speed can be established by engaging the second clutch C-2 and locking the first brake B-1; and reverse speeds can be established by engaging the third clutch C-3 or the fourth clutch C-4 and locking the second brake B-2.

In addition, in a velocity diagram in which the respective speeds of the sun gear S2, the sun gear S3, the carrier CR2, and the ring gear R3 of the planetary gear unit PU are shown on the ordinates, and the corresponding gear ratios of the sun gear S2, the sun gear S3, the carrier CR2, and the ring gear R3 are shown in the abscissa, a structure becomes possible in which the sun gear S2 is positioned at the farthest end in the horizontal direction and in sequence the carrier CR2, the ring gear R3 that is linked to the counter gear 15, and the sun gear S3 are associated.

Note that the automatic transmission 1₁ for a vehicle according to the first embodiment can form an automatic transmission 1₆ for a vehicle according to a sixth embodiment described below by inverting the speed change mechanism 2₁ substantially as-is in the left-right direction (an axial direction).

### Second embodiment

Next, a second embodiment, in which a portion of the first embodiment has been modified, will be explained with reference to FIG. 5. FIG. 5 is a cross-sectional view showing an automatic transmission 1₂ according to the second embodiment. Note that in the second embodiment explained below, only the portions that differ from the automatic transmission 1₁ according to the first embodiment will be explained. The other portions are substantially identical, and thus their explanations will be omitted.

In contrast to the automatic transmission 1₁ according to the first embodiment, the automatic transmission 1₂ according to the second embodiment has a structure that is modified such that the hydraulic servo 30 of the second clutch C-2 is disposed in an axial direction between the planetary gear DP and the planetary gear unit PU, and more specifically, the hydraulic servo 30 of the second clutch C-2 is disposed in an axial direction between the counter gear 15 and the hydraulic servo 40 of the third clutch C-3 and adjacent to a support wall 120.

Specifically, in this automatic transmission 1₂, the hydraulic servo 20 of the first clutch C-1 is disposed in an axial direction on a side of the planetary gear DP that is opposite to the planetary gear unit PU, the hydraulic servo 40 of the third clutch C-3, the hydraulic servo 30 of the second clutch C-2, and the counter gear 15 are disposed in an axial direction between the planetary gear DP and the planetary gear unit PU, and the hydraulic servo 50 of the fourth clutch C-4 and the hydraulic servo 60 of the first brake B-1 are disposed in an axial direction on a side of the planetary gear unit PU that is opposite to the planetary gear DP.

According to such an automatic transmission 1₂ for a vehicle described above, because the fourth clutch C-4 is disposed so as to be interposed on the transfer path that connects the space between the input shaft 12 and the sun gear S2, the second clutch C-2 is disposed so as to be interposed on the transfer path that connects the space between the carrier CR1 and the carrier CR2, and the output side transfer member 103 of the second clutch C-2 is linked in an axial direction to the carrier CR2 in the planetary gear unit PU at the planetary gear DP side, it is possible to eliminate a member that encloses the planetary gear unit PU. Thereby, the automatic transmission 1₂ for a vehicle can be made more compact in the radial direction. In addition, it is possible to shorten the transfer member, which requires a high rigidity, it is possible to reduce the weight, and it is possible to improve the controllability of the automatic transmission 1₂ for a vehicle. Furthermore, a structure becomes possible in which the supplied lubricating oil is readily discharged, and the cooling performance can be ensured. In addition, the assembly of the automatic transmission 1₂ for a vehicle can be simplified. Furthermore, because a structure becomes possible in which a support wall 120 can be erected and the working oil for the clutches can be supplied from this support wall 120 due to the configuration of each of the clutches, it is possible to reduce the number of seal rings, to reduce the sliding resistance of the seal rings, and to improve the power transfer efficiency of the automatic transmission 1₂ for a vehicle.

In addition, because the hydraulic servo 30 of the second clutch C-2 is disposed in an axial direction between the planetary gear unit PU and the planetary gear DP, it is possible to supply working oil to the hydraulic servo 30 of the second clutch C-2 from an oil duct provided in the support wall 120. Thereby, in comparison to the case in which the working oil is supplied from an oil duct is provided in the input shaft 12, it is possible to reduce the number of seal rings, to reduce the sliding resistance of the seal rings, and to improve the power transfer efficiency of the automatic transmission 1₂ for a vehicle.

Furthermore, because the hydraulic servo 50 of the fourth clutch C-4 is disposed in an axial direction on a side of the planetary gear unit PU that is opposite to the planetary gear DP, it is possible to dispose the friction plates 51 of the fourth clutch C-4 on a relatively outer circumferential side and it is possible to make the surface area of the friction plates 51 large. Therefore, it is possible to ensure a transferable torque volume, and it is possible to reduce the number of friction plates. Furthermore, it is possible to supply working oil to the hydraulic servo 50 of the fourth clutch C-4 from an oil duct that is provided in the boss portion 3d that is linked to one end of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₂ for a vehicle.

In addition, because the hydraulic servo 40 of the third clutch C-3 is disposed in an axial direction between the planetary gear unit PU and the planetary gear DP, in comparison to the case in which the hydraulic servo 40 of the third clutch C-3 is disposed in a axial direction on a side of the planetary gear DP that is opposite to the planetary gear unit PU, it is possible to shorten the distance between the third clutch C-3 and the planetary gear unit PU, and it is possible to shorten the output side transfer member 101 of the third clutch C-3, which must be strong in order to transfer high torque. Thereby, it is possible to reduce the weight, and it is possible to improve the controllability of the automatic transmission 1₂ for a vehicle.

Furthermore, because the hydraulic servo 20 of the first clutch C-1 is disposed in an axial direction on a side of the planetary gear DP that is opposite to the planetary gear unit PU, it is possible to supply working oil to the hydraulic servo 20 of the first clutch C-1 from an oil duct provided in the boss portion 3b that is linked one end of the case 4. Thereby, in comparison to the case in which working oil is supplied from an oil duct that is provided in the input shaft 12, it is possible to reduce the number of seal rings, and to reduce the sliding resistance of the seal rings, and to improve the power transfer efficiency of the automatic transmission 1₂ for an engine.

In addition, because a first brake B-1 that freely locks the rotation of the sun gear S2 with respect to the case 4 is provided and the hydraulic servo 60 of the first brake B-1 is disposed in an axial direction on a side of planetary gear unit PU that is opposite to the planetary gear DP, the locking force transfer member of the first brake B-1 and the sun gear S2 can be linked without making the members complicated, and it is possible to make the automatic transmission 1₂ for a vehicle more compact.

In the automatic transmission 1₂ for a vehicle according to the present invention as explained above, the transfer member 103 of the output side of the second clutch C-2 is linked to the carrier CR2 through the outer circumferential side of the transfer members 101, 102 of the output side of the third and first clutches C-3, C-1, the transfer member 104 of the output side of the fourth clutch C-4 and the transfer member 101 of the output side of third clutch C-3 are linked to the sun gear S2, and the transfer member 104 of the output side of the fourth clutch C-4, the transfer member 101 of the output side of third clutch C-3, and the sun gear S2, which rotate integrally therewith, are disposed on the inner circumferential side with respect to the transfer member 102 of the output side of the first clutch C-1. Therefore, the transfer member 104 of the output side of the fourth clutch C-4, which rotates faster than the transfer member 103 of the output side of the second clutch C-2, is further toward the inner circumferential side than the transfer member 102 of the output side of the first clutch C-1, which is on the inner circumferential side of the transfer member 103 of the output side of the second clutch C-2. As a result, it is possible to make the diameter of the transfer member 104 of the output side of the fourth clutch C-4 smaller than the diameter of the transfer member 103 of the output side of the second clutch C-2, and it is possible to reduce the weight more than the case in which it is on the outer circumferential side. In addition, because the inertia is reduced in comparison to the case in which it is disposed on the outer circumferential side, it is possible to improve the controllability of the automatic transmission 1₂ for a vehicle.

In addition, the third and first clutches C-3, C-1 are disposed on a side of the planetary gear DP with respect to the planetary gear set PU, the transfer members 101, 102 of the output side of the third and first clutches C-3, C-1 are linked respectively to the sun gear S2 and the sun gear S3, the fourth clutch C-4 is disposed in an axial direction on a side of the planetary gear unit PU that is opposite to the planetary gear DP, the transfer member 104 of the output side of the fourth clutch C-4 is linked to the sun gear S2, the second clutch C-2 is disposed on the planetary gear DP with respect to the planetary unit PU, and the transfer member 103 of the output side of the second clutch C-2 is linked to the carrier CR2 through the outer circumferential side of the transfer members 101, 102 of the output side of the third and first clutches C-3, C-1. Thereby, because the transfer member 104 of the output side of the fourth clutch C-4, which rotates faster than the transfer member of the output side of the second clutch C-2, is on the inner circumferential side, the diameter of the transfer member 104 of the output side of the fourth clutch C-4 can be made smaller than the diameter of the transfer member 103 of the output side of the second clutch C-2, and it is possible to reduce the weight more than the case in which it is disposed on the outer circumferential side. In addition, because it is possible to reduce the inertia in comparison to the case in which it is on the outside, it is possible to improve the controllability of the automatic transmission 1₂ for a vehicle.

In addition, in comparison to disposing the hydraulic servo 50 of the fourth clutch C-4 between the planetary gear unit PU and the planetary gear DP, it is possible to dispose the friction plates 51 the fourth clutch C-4 on a relatively outer circumferential side, and it is possible to increase the area of the friction plates. Thus, it is possible to ensure a transferable torque volume, and it is possible to reduce the number of friction plates 51. Furthermore, it is possible to shorten the distance between the third and first clutches C-3, C-1 and the planetary gear unit PU, and it is possible to shorten the transfer members 101, 102 of the output side of the third and first clutches C-3, C-1, which must be strong in order to transfer a high torque. Thereby, it is possible to decrease the weight, and it is possible to improve the controllability of the automatic transmission 1₂ for a vehicle.

Furthermore, it is possible, for example, to supply the working oil to the hydraulic servo 50 of the fourth clutch C-4 from an oil duct c50 that is provided in the boss portion 3b that is linked to the side wall 3a of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₂ for a vehicle.

In addition, because the transfer member of the input side of the fourth clutch C-4 is linked to the input shaft 12 and the intermediate shaft 13 through the inner circumferential side of the planetary gear unit PU and a portion of the transfer member of the input side of the fourth clutch C-4 is formed as the clutch drum 52 of the hydraulic servo 50 of the fourth clutch C-4, in comparison to the case in which the transfer member of the output side of the fourth clutch C-4 is formed as the clutch drum of the hydraulic servo 50, the clutch drum of the hydraulic servo 50 can also act as a member that transfers power from the input shaft 12, and thus it is possible to form the transfer member compactly in the axial direction.

Furthermore, because a counter gear 15 that is linked to the ring gear R3 and is disposed in an axial direction between the planetary gear unit PU and the planetary gear DP is provided, there is a support wall 120a that is linked to the support wall 120 that extends from the case 4 and that supports the counter gear 15, the hub member 112 of the second clutch C-2 is linked to the carrier CR1 through the outer circumferential side of the third and first clutches C-3, C-1, a portion of the transfer member 103 of the output side of the second clutch C-2 is formed as the clutch drum 32 of the hydraulic servo 30 of the second clutch C-2, and the hydraulic servo 30 is disposed in an axial direction above the support portion 120a between the planetary gear DP and counter gear 15, it is possible to supply the working oil to the hydraulic servo 30 of the second clutch C-2 from an oil duct c30 that is provided in the support portion 120a. Thus, in comparison to the case in which, for example, the working oil is supplied from an oil duct that is provided in the input shaft 12, it is possible to reduce the number of seal rings, to reduce the sliding friction of the seal rings, and to improve the power transfer efficiency of the automatic transmission 1₂ for a vehicle.

In addition, because a counter shaft 81 is provided that is disposed parallel to the input shaft 12 and linked via the counter gear 15 that is linked to the ring gear R3 and the output rotation from the ring gear R3 is transferred to the counter shaft 81 via the counter gear 15, it is possible to use the automatic transmission 1₂ for a vehicle advantageously in an FF-type vehicle.

Furthermore, because the counter gear 15 is disposed in an axial direction between the planetary gear unit PU and the planetary gear DP and is supported by a support portion 120a that is linked to the support wall 120 that extends from the case 4, it is possible to prevent the counter gear 15 from becoming distant from the input side in an axial direction. For example, it is possible to position the counter shaft portion 80 and the differential gear portion 90 near the torque converter 7 side, thereby making the automatic transmission 1₂ for a vehicle more compact. Thus, it is possible to prevent interference between the members and the frame of the vehicle, and it is possible to improve the mounting characteristics for the automatic transmission 1₂ for a vehicle in the vehicle.

In addition, because the carrier CR1 is linked to the input shaft 12 on the planetary gear unit PU side with respect to the planetary gear DP and linked in an axial direction to the hub member 112, which is the transfer member of the input side of the second clutch C-2, at a side of the planetary gear DP that is opposite to the planetary gear unit PU, it is possible to link the carrier CR1, the transfer member 112 of the input side of the second clutch C-2, and the input shaft 12 without making the members complicated, and it is possible to make the automatic transmission 1₂ for a vehicle more compact.

In addition, because the hub member 116 of the first brake B-1 and the transfer member 104 that is linked thereto are linked in an axial direction to the sun gear S2 at a side of the planetary gear unit PU that is opposite to the planetary gear DP, it is possible to link the hub member 116 of the first brake B-1, the transfer member 104, and the sun gear S2 without making the members complicated, and it is possible to make the automatic transmission 1₂ for a vehicle more compact.

In addition, because the planetary gear DP includes the sun gear S1, for which the rotation is normally held stationary with respect to the case 4, a carrier CR1 that supports the pinion gear P1 and the pinion gear P2 so as to be freely rotatable and normally links to the output shaft 12, and a ring gear R1 that meshes with the pinion gear P2 and outputs a reduced speed rotation, it is possible to output a reduced speed rotation that reduces the input rotation of the input shaft 12 from the ring gear R1.

In addition, because the planetary gear unit PU is a Ravigneaux-type planetary gear unit PU that includes the sun gear S2, the sun gear S3, the short pinion P3 that meshes with the sun gear S3, the long pinion P4 that meshes with the sun gear S2 and meshes with the short pinion P3, the carrier CR2 that freely rotatably supports the short pinion P3 and the long pinion P4, and the ring gear R3 that meshes with the long pinion P4, it is possible to prevent the rotation of each of the rotating elements from becoming high and it is possible to obtain advantageous gear ratios while enabling each of the rotating elements of the planetary gear unit PU and the output side members of each of the clutches and brakes to be linked without making the members complicated.

In addition, the first forward speed can be established by engaging the first clutch C-1 and locking the second brake B-2; the second forward speed can be established by engaging the first clutch C-1 and locking the first brake B-1; the third forward speed can be established by engaging the first clutch C-1 and the third clutch C-3; the fourth forward speed can be established by engaging the first clutch C-1 and the fourth clutch C-4; the fifth forward speed can be established by engaging the first clutch C-1 and the second clutch C-2; the sixth forward speed can be established by engaging the second clutch C-2 and the fourth clutch C-4; the seventh forward speed can be established by engaging the second clutch C-2 and the third clutch C-3; the eighth forward speed can be established by engaging the second clutch C-2 and locking the first brake B-1; and reverse speeds can be established by engaging the third clutch C-3 or the fourth clutch C-4 and locking the second brake B-2.

In addition, in a velocity diagram in which the respective speed of the sun gear S2, the sun gear S3, the carrier CR2, and the ring gear R3 of the planetary gear unit PU are shown on the ordinates, and the corresponding gear ratios of the sun gear S2, the sun gear S3, and carrier CR2, and the ring gear R3 are shown on the abscissa, a structure becomes possible in which the sun gear S2 is positioned at the farthest end in the horizontal direction and in sequence the carrier CR2, the ring gear R3 that is linked to the counter gear 15, and the sun gear S3 are associated.

Note that the automatic transmission 1₂ for a vehicle according to the second embodiment can form an automatic transmission 1₇ for a vehicle according to a seventh embodiment described below by substantially inverting the speed change mechanism 2₂ as-is in the left-right direction (an axial direction).

### Third Embodiment

Next, a third embodiment, in which a portion of the first embodiment has been modified, will be explained with reference to FIG. 6. FIG. 6 is a cross-sectional view showing an automatic transmission 1₃ according to the third embodiment. Note that in the third embodiment described below, only the portions that differ from the automatic transmission 1₁ according to the first embodiment, will be explained. The other portions are substantially identical, and thus their explanations will be omitted.

The automatic transmission 1₃ according to the third embodiment has a structure that, in contrast to the automatic transmission 1₁ according to the first embodiment, is modified such that the hydraulic servo 30 of the second clutch C-2 and the hydraulic servo 20 of the first clutch C-1 are disposed in an axial direction between the planetary gear DP and the planetary gear unit PU, and specifically, the hydraulic servo 30 of the second clutch C-2 is disposed in an axial direction between the counter gear 15 and the hydraulic servo 20 of the first clutch C-1 and adjacent to a support wall 120, and the hydraulic servo 20 of the first clutch C-1 is disposed in an axial direction between the hydraulic servo 30 of the second clutch C-2 and the hydraulic servo 40 of the third clutch C-3 on the support wall 120.

Specifically, in the automatic transmission 1_{3,} the hydraulic servo 40 of the third clutch C-3, the hydraulic servo 20 of the first clutch C-1, the hydraulic servo 30 of the second clutch C-2, and the counter gear 15 are disposed in an axial direction between the planetary gear DP and the planetary gear unit PU, and the hydraulic servo 50 of the fourth clutch C-4 and the hydraulic servo 60 of the first brake B-1 are disposed in an axial direction on a side of the planetary gear unit PU that is opposite to the planetary gear DP.

According to this type of automatic transmission 1₃ described above, because the fourth clutch C-4 is disposed so as to be interposed on the transfer path that connects the space between the input shaft 12 and the sun gear S2, the second clutch C-2 is disposed so as to be interposed on the transfer path that connects the space between the carrier CR1 and the carrier CR2, and the output side transfer member 103 of the second clutch C-2 is linked to the carrier CR2 in the planetary gear unit PU at the planetary gear DP side in an axial direction, it is possible to eliminate a member that encloses the planetary gear unit PU. Thereby, the automatic transmission 1₃ for a vehicle can be made more compact in the radial direction. In addition, it is possible to shorten the transfer member that requires a high rigidity, it is possible to reduce the weight, and it is possible to improve the controllability of the automatic transmission 1₃ for a vehicle. Furthermore, a structure becomes possible in which the supplied lubricating oil is readily discharged, and the cooling performance can be ensured. In addition, the assembly of the automatic transmission 1₃ for a vehicle can be simplified. Furthermore, because a structure becomes possible in which a support wall 120 can be erected and the working oil for the clutches can be supplied from this support wall 120 due to the configuration of each of the clutches, it is possible to reduce the number of seal rings, to reduce the sliding resistance of the seal rings, and to improve the power transfer efficiency of the automatic transmission 1₃ for a vehicle.

In addition, because the hydraulic servo 30 of the second clutch C-2 is disposed in an axial direction between the planetary gear unit PU and the planetary gear DP, it is possible to supply working oil to the hydraulic servo 30 of the second clutch C-2 from an oil duct provided in the support wall 120. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₃ for a vehicle.

Furthermore, the hydraulic servo 50 of the fourth clutch C-4 is disposed in an axial direction on a side of the planetary gear unit PU that is opposite to the planetary gear DP, it is possible to dispose the friction plates 51 of the fourth clutch C-4 on a relatively outer circumferential side, and it is possible to make the surface area of the friction plates 51 large. Thereby it is possible to ensure a transferable torque volume and it is possible to reduce the number of friction plates. Furthermore, it is possible to supply working oil to the hydraulic servo 50 of the fourth clutch C-4 from an oil duct provided in the boss portion 3d that is linked to one end of the case 4. Thereby, in comparison to supplying working oil from an oil duct provided in the input shaft 12, it is possible to reduce the number of seal rings, to reduce the sliding resistance of the seal rings, and to improve the power transfer efficiency of the automatic transmission 1₃ for a vehicle.

In addition, because the hydraulic servo 40 of the third clutch C-3 is disposed in an axial direction between the planetary gear unit PU and the planetary gear DP, in comparison to the case in which the hydraulic servo 40 of the third clutch C-3 is disposed in an axial direction on a side of the planetary gear DP that is opposite to the planetary gear unit PU, it is possible to shorten the distance between the third clutch C-3 and the planetary gear unit PU, and it is possible to shorten the output side transfer member 101 of the third clutch C-3, which requires strength for transferring a high torque. Thereby, it is possible to reduce the weight and it is possible to improve the controllability as an automatic transmission 1₃ for a vehicle.

In addition, because the hydraulic servo 20 of the first clutch C-1 is disposed in an axial direction between the planetary gear unit PU and the planetary gear DP, in comparison to the case in which the hydraulic servo 20 of the third clutch C-1 is disposed in an axial direction on a side of the planetary gear DP that is opposite to the planetary gear unit PU, it is possible to shorten the distance between the first clutch C-1 and the planetary gear unit PU, and it is possible to shorten the output side transfer member 102 of the first clutch C-1, which requires strength for transferring a high torque. Thereby, it is possible to reduce the weight and it is possible to improve the controllability of the automatic transmission 1₃ for a vehicle.

In addition, because a first brake B-1 that freely locks the rotation of the sun gear S2 with respect to the case 4 is provided and the hydraulic servo 60 of the first brake B-1 is disposed in an axial direction on the side of the planetary gear unit PU that is opposite to the planetary gear DP, it is possible to link the locking force transfer member of the first brake B-1 and the sun gear S2 without making the members complicated, and it is possible to make the automatic transmission 1₃ for a vehicle more compact.

In the automatic transmission 1₃ for a vehicle according to the present invention as explained above, the transfer member 103 of the output side of the second clutch C-2 is linked to the carrier CR2 through the outer circumferential side of the transfer members 101, 102 of the output side of the third and first clutches C-3, C-1, the transfer member 104 of the output side of the fourth clutch C-4 and the transfer member 101 of the output side of third clutch C-3 are linked to the sun gear S2, and the transfer member 104 of the output side of the fourth clutch C-4, the transfer member 101 of the output side of third clutch C-3, and the sun gear S2, which rotate integrally therewith, are disposed on the inner circumferential side with respect to the transfer member 102 of the output side of the first clutch C-1. Therefore, the transfer member 104 of the output side of the fourth clutch C-4, which rotates faster than the transfer member 103 of the output side of the second clutch C-2, is further toward the inner circumferential side than the transfer member 102 of the output side of the first clutch C-1, which is on the inner circumferential side of the transfer member 103 of the output side of the second clutch C-2. As a result, it is possible to make the diameter of the transfer member 104 of the output side of the fourth clutch C-4 smaller than the diameter of the transfer member 103 of the output side of the second clutch C-2, and it is possible to reduce the weight more than the case in which it is on the outer circumferential side. In addition, because the inertia is reduced in comparison to the case in which it is disposed on the outer circumferential side, it is possible to improve the controllability of the automatic transmission 1₃ for a vehicle.

In addition, the third and first clutches C-3, C-1 are disposed on a side of the planetary gear DP with respect to the planetary gear set, the transfer members 101, 102 of the output side of the third and first clutches C-3, C-1 are linked respectively to the sun gear S2 and the sun gear S3, the fourth clutch C-4 is disposed in an axial direction on a side of the planetary gear unit PU that is opposite to the planetary gear DP, the transfer member 104 of the output side of the fourth clutch C-4 is linked to the sun gear S2, the second clutch C-2 is disposed on the planetary gear DP with respect to the planetary unit PU, and the transfer member 103 of the output side of the second clutch C-2 is linked to the carrier CR2 through the outer circumferential side of the transfer members 101, 102 of the output side of the third and first clutches C-3, C-1. Thereby, because the transfer member 104 of the output side of the fourth clutch C-4, which rotates faster than the transfer member of the output side of the second clutch C-2, is on the inner circumferential side, the diameter of the transfer member 104 of the output side of the fourth clutch C-4 can be made smaller than the diameter of the transfer member 103 of the output side of the second clutch C-2, and it is possible to reduce the weight more than the case in which it is disposed on the outer circumferential side. In addition, because it is possible to reduce the inertia in comparison to the case in which it is on the outside, it is possible to improve the controllability of the automatic transmission 1₃ for a vehicle.

In addition, in comparison to disposing the hydraulic servo 50 of the fourth clutch C-4 between the planetary gear unit PU and the planetary gear DP, it is possible to dispose the friction plates 51 of the fourth clutch C-4 on a relatively outer circumferential side, and it is possible to increase the area of the friction plates. Thus, it is possible to ensure a transferable torque volume, and it is possible to reduce the number of friction plates 51. Furthermore, it is possible to shorten the distance between the third and first clutches C-3, C-1 and the planetary gear unit PU, and it is possible to shorten the transfer members 101, 102 of the output side of the third and first clutches C-3, C-1, which must be strong in order to transfer a high torque. Thereby, it is possible to decrease the weight, and it is possible to improve the controllability of the automatic transmission 1₃ for a vehicle.

Furthermore, it is possible, for example, to supply the working oil to the hydraulic servo 50 of the fourth clutch C-4 from an oil duct c50 that is provided in the boss portion 3b that is linked to the side wall 3a of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₃ for a vehicle.

In addition, because the transfer member of the input side of the fourth clutch C-4 is linked to the input shaft 12 and the intermediate shaft 13 through the inner circumferential side of the planetary gear unit PU and a portion of the transfer member of the input side of the fourth clutch C-4 is formed as the clutch drum 52 of the hydraulic servo 50 of the fourth clutch C-4, in comparison to the case in which the transfer member of the output side of the fourth clutch C-4 is formed as the clutch drum of the hydraulic servo 50, the clutch drum of the hydraulic servo 50 can also act as a member that transfers power from the input shaft 12, and thus it is possible to form the transfer member compactly in the axial direction.

Furthermore, because a counter gear 15 that is linked to the ring gear R3 and is disposed in an axial direction between the planetary gear unit PU and the planetary gear DP is provided, there is a support wall 120a that is linked to the support wall 120 that extends from the case 4 and that supports the counter gear 15, the hub member 112 of the second clutch C-2 is linked to the carrier CR1 through the outer circumferential side of the third and first clutches C-3, C-1, a portion of the transfer member 103 of the output side of the second clutch C-2 is formed as the clutch drum 32 of the hydraulic servo 30 of the second clutch C-2, and the hydraulic servo 30 is disposed above the support portion 120a between the planetary gear DP and counter gear 15, it is possible to supply the working oil to the hydraulic servo 30 of the second clutch C-2 from an oil duct c30 that is provided in the support portion 120a. Thus, in comparison to the case in which, for example, the working oil is supplied from an oil duct that is provided in the input shaft 12, it is possible to reduce the number of seal rings, to reduce the sliding friction of the seal rings, and to improve the power transfer efficiency of the automatic transmission 1₃ for a vehicle.

In addition, the transfer member 102 of the output side of the first clutch C-1 is linked to the sun gear S3, a portion of the transfer member 102 of the output side of the first clutch C-1 is formed as the clutch drum 22 of the hydraulic servo 20 of the first clutch C-1, the hydraulic servo 20 is disposed above the support portion 120a in an axial direction between the planetary gear DP and the hydraulic servo 30 of the second clutch C-2, the transfer member 101 of the output side of the third clutch C-3 is linked to the sun gear S2, a portion of the transfer member 101 of the output side of the third clutch C-3 is formed as the clutch drum 42 of the hydraulic servo 40 of the third clutch C-3, and the hydraulic servo 40 is disposed in an axial direction between the planetary gear DP and hydraulic servo 20 the first clutch C-1. Therefore, it is possible to supply the working oil to the hydraulic servo 20 of the first clutch C-1 from an oil duct c20 that is provided in the support wall 120 that extends from the case 4 and the support member 120a. Thus, in comparison to the case in which, for example, the working oil is supplied from an oil duct that is provided in the input shaft 12, it is possible to reduce the number of seal rings, to reduce the sliding resistance of the seal rings, and to improve the power transfer efficiency of the automatic transmission 1₃ for a vehicle. In addition, because the hydraulic servo 40 of the third clutch C-3 is disposed in an axial direction between the planetary gear unit PU and the planetary gear DP, in comparison to the case in which, for example, the hydraulic servo 40 of the third clutch C-3 is disposed in an axial direction on a side of the planetary gear DP that is opposite to the planetary gear unit PU, it is possible to shorten the distance between the third clutch C-3 and the planetary gear unit PU, and it is possible to shorten the transfer member 101 of the output side of the third clutch C-3 which must be strong in order to transfer high torque. Thereby, it is possible to reduce the weight, and it is possible to improve the controllability of the automatic transmission.

Furthermore, because a counter shaft 81 is provided that is disposed parallel to the input shaft 12 and linked via the counter gear 15 that is linked to the ring gear R3 and the output rotation from the ring gear R3 is transferred to the counter shaft 81 via the counter gear 15, it is possible to use the automatic transmission 1₃ for a vehicle advantageously in an FF-type vehicle.

In addition, because the counter gear 15 is disposed in an axial direction between the planetary gear unit PU and the planetary gear DP and is supported by a support portion 120a that is linked to the support wall 120 that extends from the case 4, it is possible to prevent the counter gear 15 from becoming distant from the input side in an axial direction. For example, it is possible to position the counter shaft portion 80 and the differential gear portion 90 near the torque converter 7, thereby making the automatic transmission 1₃ for a vehicle more compact. Thus, it is possible to prevent interference between the members of the vehicle and the frame, and it is possible to improve the mounting characteristics for the automatic transmission 1₃ for a vehicle in the vehicle.

Furthermore, because the carrier CR1 is linked to the input shaft 12 on the planetary gear unit PU side with respect to the planetary gear DP and linked to the hub member 112, which is the transfer member of the input side of the second clutch C-2, at a side of the planetary gear DP that is opposite to the planetary gear unit PU in an axial direction, it is possible to link the carrier CR1, the transfer member 112 of the input side of the second clutch C-2, and the input shaft 12 without making the members complicated, and it is possible to make the automatic transmission 1₃ for a vehicle more compact.

In addition, because the hub member 116 of the first brake B-1 and the transfer member 104 that is linked thereto are linked in an axial direction to the sun gear S2 at a side of the planetary gear unit PU that is opposite to the planetary gear DP, it is possible to link the hub member 116 of the first brake B-1, the transfer member 104, and the sun gear S2 without making the members complicated, and it is possible to make the automatic transmission 1₃ for a vehicle more compact.

In addition, because the planetary gear DP includes a sun gear S 1 for which the rotation is normally held stationary with respect to the case 4, a carrier CR1 that freely rotatably supports the pinion gear P 1 and the pinion gear P2 and is normally linked to the input shaft 12, and a ring gear R1 that meshes with the pinion gear P2 and outputs a reduced speed rotation, it is possible to output from the ring gear R1 a reduced speed rotation that reduces the input rotation of the input shaft 12.

In addition, because the planetary gear unit PU is a Ravigneaux-type planetary gear unit PU that includes a sun gear S2, a sun gear S3, short pinion P3 that meshes with the sun gear S3, a long pinion P4 that meshes with the sun gear S2 and meshes with the short pinion P3, a carrier CR2 that freely rotatably supports the short pinion P3 and the long pinion P4, and the ring gear R3 that meshes with the long pinion P4, it is possible to prevent rotation of each of the rotating members from becoming high and it is possible to obtain favorable gear ratios while enabling each of the rotating elements of the planetary gear unit PU and the output side members of each of the clutches and brakes to be linked without making these members complicated.

In addition, the first forward speed can be established by engaging the first clutch C-1 and locking the second brake B-2; the second forward speed can be established by engaging the first clutch C-1 and locking the first brake B-1; the third forward speed can be established by engaging the first clutch C-1 and the third clutch C-3; the fourth forward speed can be established by engaging the first clutch C-1 and the fourth clutch C-4; the fifth forward speed can be established by engaging the first clutch C-1 and the second clutch C-2; the sixth forward speed can be established by engaging the second clutch C-2 and the fourth clutch C-4; the seventh forward speed can be established by engaging the second clutch C-2 and the third clutch C-3; the eighth forward speed can be established by engaging the second clutch C-2 and locking the first brake B-1; and reverse speeds can be established by engaging the third clutch C-3 or the fourth clutch C-4 and locking the second brake B-2.

In addition, in a velocity diagram in which the respective speeds of the sun gear S2, the sun gear S3, the carrier CR2, and the ring gear R3 of the planetary gear unit PU are shown on the ordinates, and the corresponding gear ratios of the sun gear S2, the sun gear S3, the carrier CR2, and the ring gear R3 are shown in the abscissa, a structure becomes possible in which the sun gear S2 is positioned at the farthest end in the horizontal direction and in sequence the carrier CR2, the ring gear R3 that is linked to the counter gear 15, and the sun gear S3 are associated.

Note that the automatic transmission 1₃ for a vehicle according to the third embodiment can form an automatic transmission 1₈ for a vehicle according to a eighth embodiment described below by inverting the speed change mechanism 2₃ substantially as-is in the left-right direction (the radial direction).

### Fourth Embodiment

Next, a fourth embodiment, in which a portion of the first embodiment has been modified, will be explained with reference to FIG. 7. FIG. 7 is a cross-sectional drawing showing an automatic transmission 1₄ according to the fourth embodiment. Note that in the fourth embodiment described below, only the portions that differ from the automatic transmission 1₁ according to the first embodiment will be explained. The other portions are substantially identical, and thus their explanations will be omitted.

The automatic transmission 1₄ according to the fourth embodiment has a structure that, in contrast to the automatic transmission 1₁ according to the first embodiment, is modified such that the hydraulic servo 30 of the second clutch C-2 and the hydraulic servo 20 of the first clutch C-1 are disposed in an axial direction between the planetary gear DP and the planetary gear unit PU, and the hydraulic servo 40 of the third clutch C-3 is disposed in an axial direction on a side of the planetary gear DP that is opposite to the planetary gear unit PU. Specifically, the hydraulic servo 30 of the second clutch C-2 is disposed in an axial direction between the counter gear 15 and the hydraulic servo 20 of the first clutch C-1 and adjacent to a support wall 120, the hydraulic servo 20 of the first clutch C-1 is disposed in an axial direction between the hydraulic servo 30 of the second clutch C-2 and the planetary gear DP and on the support wall 120, and the hydraulic servo 40 of the third clutch C-3 is disposed on the boss portion 3b.

Specifically, in this automatic transmission 1₄, the hydraulic servo 40 of the third clutch C-3 is disposed in an axial direction on a side of the planetary gear DP that is opposite to the planetary gear unit PU, the hydraulic servo 20 of the first clutch C-1, the hydraulic servo 30 of the second clutch C-2, and the counter gear 15 are disposed in an axial direction between the planetary gear DP and the planetary gear unit PU, and the hydraulic servo 50 of the fourth clutch C-4 and the hydraulic servo 60 of the first brake B-1 are disposed in an axial direction on a side of the planetary gear unit PU that is opposite to the planetary gear DP.

According to the automatic transmission 1₄ described above, because the fourth clutch C-4 is disposed so as to be interposed on the transfer path that connects the space between the input shaft 12 and the sun gear S2, the second clutch C-2 is disposed so as to be interposed on the transfer path that connects the space between the carrier CR1 and the carrier CR2, and the output side transfer member 103 of the second clutch C-2 is linked to the carrier CR2 in the planetary gear unit PU at the planetary gear DP side in an axial direction, it is possible to eliminate a member that encloses the planetary gear unit PU. Thereby, the automatic transmission 1₄ for a vehicle can be more compact in the radial direction. In addition, it is possible to shorten the transfer member that requires a high rigidity, it is possible to reduce the weight, and it is possible to improve the controllability of the automatic transmission 1₄ for a vehicle. Furthermore, a structure becomes possible in which the supplied lubricating oil is readily discharged, and the cooling performance can be ensured. In addition, the assembly of the automatic transmission 1₄ for a vehicle can be simplified. Furthermore, because a structure becomes possible in which a support wall 120 can be erected and the working oil for the clutches can be supplied from this support wall 120 due to the configuration of each of the clutches, it is possible to reduce the number of seal rings, to reduce the sliding resistance of the seal rings, and to improve the power transfer efficiency of the automatic transmission 1₄ for a vehicle.

In addition, because the hydraulic servo 30 of the second clutch C-2 is disposed in an axial direction between the planetary gear unit PU and the planetary gear DP, it is possible to supply the working oil to the hydraulic servo 30 of the second clutch C-2 from an oil duct that is provided in the support wall 120. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₄ for a vehicle.

Furthermore, because the hydraulic servo 50 of the fourth clutch C-4 is disposed in an axial direction on a side of the planetary gear unit PU that is opposite to the planetary gear DP, it is possible to dispose the friction plates 51 of the fourth clutch C-4 on a relatively outer circumferential side and it is possible to make the surface area of the friction plates 51 large, and thus, it is possible to ensure a transferable torque volume, and it is possible to reduce the number of friction plates. Furthermore, it is possible to supply working oil to the hydraulic servo 50 of the fourth clutch C-4 from an oil duct that is provided in the boss portion 3d that is linked to one end of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₄ for a vehicle.

In addition, because the hydraulic servo 40 of the third clutch C-3 is disposed in an axial direction on a side of the planetary gear DP that is opposite to the planetary gear unit PU, it is possible to supply the working oil to the hydraulic servo 40 of the third clutch C-3 from an oil duct that is provided in the boss portion 3b that is linked to one end of the case 4. Thereby, in comparison to supplying the working oil from an oil duct that is provided in the input shaft 12, it is possible to reduce the number of seal rings, to reduce the sliding resistance of the seal rings, and to improve the power transfer efficiency of the automatic transmission 1₄ for a vehicle.

Furthermore, because the hydraulic servo 20 of the first clutch C-1 is disposed in an axial direction between the planetary gear DP and the planetary gear unit PU, in comparison to the case in which the hydraulic servo 20 of the first clutch C-1 is disposed in an axial direction on a side of the planetary gear DP that is opposite to the planetary gear unit PU, it is possible to shorten the distance between the first clutch C-1 and the planetary gear unit PU, it is possible to shorten the output side transfer member 102 of the first clutch C-1, which must be strong in order to transfer high torque, it is possible to reduce the weight, and it is possible to improve the controllability of the automatic transmission 1₄ for a vehicle.

In addition, because a first brake B-1 that freely locks the rotation of the sun gear S2 with respect to the case 4 is provided and the hydraulic servo 60 of the first brake B-1 is disposed in an axial direction on a side of planetary gear unit PU that is opposite to the planetary gear DP, the locking force transfer member of the first brake B-1 and the sun gear S2 can be linked without making the members complicated, and it is possible to make the automatic transmission 1₄ for a vehicle more compact.

In the automatic transmission 1₄ for a vehicle according to the present invention as explained above, the transfer member 103 of the output side of the second clutch C-2 is linked to the carrier CR2 through the outer circumferential side of the transfer members 101, 102 of the output side of the third and first clutches C-3, C-1, the transfer member 104 of the output side of the fourth clutch C-4 and the transfer member 101 of the output side of third clutch C-3 are linked to the sun gear S2, and the transfer member 104 of the output side of the fourth clutch C-4, the transfer member 101 of the output side of third clutch C-3, and the sun gear S2, which rotate integrally therewith, are disposed on the inner circumferential side with respect to the transfer member 102 of the output side of the first clutch C-1. Therefore, the transfer member 104 of the output side of the fourth clutch C-4, which rotates faster than the transfer member 103 of the output side of the second clutch C-2, is further toward the inner circumferential side than the transfer member 102 of the output side of the first clutch C-1, which is on the inner circumferential side of the transfer member 103 of the output side of the second clutch C-2. As a result, it is possible to make the diameter of the transfer member 104 of the output side of the fourth clutch C-4 smaller than the diameter of the transfer member 103 of the output side of the second clutch C-2, and it is possible to reduce the weight more than the case in which it is on the outer circumferential side. In addition, because the inertia is reduced in comparison to the case in which it is disposed on the outer circumferential side, it is possible to improve the controllability of the automatic transmission 1₄ for a vehicle.

In addition, the third and first clutches C-3, C-1 are disposed on the planetary gear DP side with respect to the planetary gear set, the transfer members 101, 102 of the output side of the third and first clutches C-3, C-1 are linked respectively to the sun gear S2 and the sun gear S3, the fourth clutch C-4 is disposed in an axial direction on a side of the planetary gear unit PU that is opposite to the planetary gear DP, the transfer member 104 of the output side of the fourth clutch C-4 is linked to the sun gear S2, the second clutch C-2 is disposed on the planetary gear DP side with respect to the planetary unit PU, and the transfer member 103 of the output side of the second clutch C-2 is linked to the carrier CR2 through the outer circumferential side of the transfer members 101, 102 of the output side of the third and first clutches C-3, C-1. Thereby, because the transfer member 104 of the output side of the fourth clutch C-4, which rotates faster than the transfer member of the output side of the second clutch C-2, is on the inner circumferential side, the diameter of the transfer member 104 of the output side of the fourth clutch C-4 can be made smaller than the diameter of the transfer member 103 of the output side of the second clutch C-2, and it is possible to reduce the weight more than the case in which it is disposed on the outer circumferential side. In addition, because it is possible to reduce the inertia in comparison to the case in which it is on the outside, it is possible to improve the controllability of the automatic transmission 1₄ for a vehicle.

In addition, in comparison to disposing the hydraulic servo 50 of the fourth clutch C-4 between the planetary gear unit PU and the planetary gear DP, it is possible to dispose the friction plates 51 of the fourth clutch C-4 on a relatively outer circumferential side, and it is possible to increase the area of the friction plates. Thus, it is possible to ensure a transferable torque volume, and it is possible to reduce the number of friction plates 51. Furthermore, it is possible to shorten the distance between the third and first clutches C-3, C-1 and the planetary gear unit PU, and it is possible to shorten the transfer members 101, 102 of the output side of the third and first clutches C-3, C-1, which must be strong in order to transfer a high torque. Thereby, it is possible to decrease the weight, and it is possible to improve the controllability of the automatic transmission 1₄ for a vehicle.

Furthermore, it is possible, for example, to supply the working oil to the hydraulic servo 50 of the fourth clutch C-4 from an oil duct c50 that is provided in the boss portion 3b that is linked to the side wall 3a of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₄ for a vehicle.

In addition, because the transfer member of the input side of the fourth clutch C-4 is linked to the input shaft 12 and the intermediate shaft 13 through the inner circumferential side of the planetary gear unit PU and a portion of the transfer member of the input side of the fourth clutch C-4 is formed as the clutch drum 52 of the hydraulic servo 50 of the fourth clutch C-4, in comparison to the case in which the transfer member of the output side of the fourth clutch C-4 is formed as the clutch drum of the hydraulic servo 50, the clutch drum of the hydraulic servo 50 can also act as a member that transfers power from the input shaft 12, and thus it is possible to form the transfer member compactly in the axial direction.

Furthermore, because a counter gear 15 that is linked to the ring gear R3 and is disposed in an axial direction between the planetary gear unit PU and the planetary gear DP is provided, there is a support wall 120a that is linked to the support wall 120 that extends from the case 4 and that supports the counter gear 15, the hub member 112 of the second clutch C-2 is linked to the carrier CR1 through the outer circumferential side of the third and first clutches C-3, C-1, a portion of the transfer member 103 of the output side of the second clutch C-2 is formed as the clutch drum 32 of the hydraulic servo 30 of the second clutch C-2, and the hydraulic servo 30 is disposed above the support portion 120a between the planetary gear DP and counter gear 15, it is possible to supply the working oil to the hydraulic servo 30 of the second clutch C-2 from an oil duct c30 that is provided in the support portion 120a. Thus, in comparison to the case in which, for example, the working oil is supplied from an oil duct that is provided in the input shaft 12, it is possible to reduce the number of seal rings, to reduce the sliding friction of the seal rings, and to improve the power transfer efficiency of the automatic transmission 1₄ for a vehicle.

In addition, there is a boss portion 3b that is linked to the side wall 3a of the case 4 and holds the sun gear S1 stationary, the transfer member of the input side of the third clutch C-3 is linked to the ring gear R1, a portion of the transfer member of the input side of the third clutch C-3 is formed as the clutch drum 42 of the hydraulic servo 40 of the third clutch C-3, the hydraulic servo 40 is disposed above the boss portion 3b in an axial direction between the planetary gear DP and the side wall 3a, the transfer member of the input side of the first clutch C-1 is linked to the transfer member of the input side of the third clutch C-3, a portion of the transfer member of the input side of the first clutch C-1 is formed as the clutch drum 22 of the hydraulic servo 20 of the first clutch C-1, and the hydraulic servo 20 is disposed above the support portion 120a in an axial direction between the planetary gear DP and the hydraulic servo 30 of the second clutch C-2. Therefore, it is possible to supply the working oil to the hydraulic servo 40 of the third clutch C-3 from an oil duct c40 that is provided in the boss portion 3b that is linked to the side wall 3a of the case 4. Thus, in comparison to the case in which, for example, the hydraulic servo 40 of the third clutch C-3 is disposed above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₄ for a vehicle. In addition, it is possible to supply the working oil to the hydraulic servo 20 of the first clutch C-1 from an oil duct c20 that is provided in the support wall 120 that extends from the case 4 and the support portion 120a. Thus, in comparison to the case in which, for example, the working oil is supplied from an oil duct that is provided in the input shaft 12, it is possible to reduce the number of seal rings, to reduce the sliding resistance of the seal rings, and to improve the power transfer efficiency of the automatic transmission 1₄ for a vehicle.

Furthermore, because a counter shaft 81 is provided that is disposed parallel to the input shaft 12 and linked via the counter gear 15 that is linked to the ring gear R3 and the output rotation from the ring gear R3 is transferred to the counter shaft 81 via the counter gear 15, it is possible to use the automatic transmission 1₄ for a vehicle advantageously in an FF-type vehicle.

In addition, because the counter gear 15 is disposed in an axial direction between the planetary gear unit PU and the planetary gear DP and is supported by a support portion 120a that is linked to the support wall 120 that extends from the case 4, it is possible to prevent the counter gear 15 from becoming distant from the input side in an axial direction. For example, it is possible to position the counter shaft portion 80 and the differential gear portion 90 near the torque converter 7 side, and it is possible to make the automatic transmission 1₄ for a vehicle more compact. Thereby, it is possible to prevent interference between the members and the frame of the vehicle, and it is possible to improve the mounting characteristics for the automatic transmission 1₄ for a vehicle in the vehicle.

Furthermore, because the carrier CR1 is linked to the input shaft 12 on the planetary gear unit PU side with respect to the planetary gear DP and linked in an axial direction to the hub member 112, which is the transfer member of the input side of the second clutch C-2, at a side of the planetary gear DP that is opposite to the planetary gear unit PU, it is possible to link the carrier CR1, the transfer member 112 of the input side of the second clutch C-2, and the input shaft 12 without making the members complicated, and it is possible to make the automatic transmission 1₄ for a vehicle more compact.

In addition, because the hub member 116 of the first brake B-1 and the transfer member 104 that is linked thereto are linked in an axial direction to the sun gear S2 at a side of the planetary gear unit PU that is opposite to the planetary gear DP, it is possible to link the hub member 116 of the first brake B-1, the transfer member 104, and the sun gear S2 without making the members complicated, and it is possible to make the automatic transmission 1₄ for a vehicle more compact.

In addition, because the planetary gear DP includes the sun gear S1, for which the rotation is normally held stationary with respect to the case 4, a carrier CR1 that supports the pinion gear P1 and the pinion gear P2 so as to be freely rotatable and normally links to the output shaft 12, and a ring gear R1 that meshes with the pinion gear P2 and outputs a reduced speed rotation, it is possible to output a reduced speed rotation that reduces the input rotation of the input shaft 12 from the ring gear R1.

In addition, because the planetary gear unit PU is a Ravigneaux-type planetary gear unit PU that includes the sun gear S2, the sun gear S3, the short pinion P3 that meshes with the sun gear S3, the long pinion P4 that meshes with the sun gear S2 and meshes with the short pinion P3, the carrier CR2 that freely rotatably supports the short pinion P3 and the long pinion P4, and the ring gear R3 that meshes with the long pinion P4, it is possible to prevent the rotation of each of the rotating elements from having a high rotation and it is possible to obtain advantageous gear ratios while enabling each of the rotating elements of the planetary gear unit PU and the output side members of each of the clutches and brakes to be linked without making the members complicated.

In addition, the first forward speed can be established by engaging the first clutch C-1 and locking the second brake B-2; the second forward speed can be established by engaging the first clutch C-1 and locking the first brake B-1; the third forward speed can be established by engaging the first clutch C-1 and the third clutch C-3; the fourth forward speed can be established by engaging the first clutch C-1 and the fourth clutch C-4; the fifth forward speed can be established by engaging the first clutch C-1 and the second clutch C-2; the sixth forward speed can be established by engaging the second clutch C-2 and the fourth clutch C-4; the seventh forward speed can be established by engaging the second clutch C-2 and the third clutch C-3; the eighth forward speed can be established by engaging the second clutch C-2 and locking the first brake B-1; and reverse speeds can be established by engaging the third clutch C-3 or the fourth clutch C-4 and locking the second brake B-2.

In addition, in a velocity diagram in which the respective speed of the sun gear S2, the sun gear S3, the carrier CR2, and the ring gear R3 of the planetary gear unit PU are shown on the ordinates, and the corresponding gear ratios of the sun gear S2, the sun gear S3, and carrier CR2, and the ring gear R3 are shown on the abscissa, a structure becomes possible in which the sun gear S2 is positioned at the farthest end in the horizontal direction and in sequence the carrier CR2, the ring gear R3 that is linked to the counter gear 15, and the sun gear S3 are associated.

Note that the automatic transmission 1₄ for a vehicle according to the fourth embodiment can form an automatic transmission 1₉ for a vehicle according to a ninth embodiment described above by substantially inverting the speed change mechanism 2₄ as-is in the left-right direction (an axial direction).

### Fifth Embodiment

Next, a fifth embodiment, in which a portion of the first embodiment described above has been modified, will be explained with reference to FIG. 8 to FIG. 10. FIG. 8 is a cross-sectional view showing an automatic transmission 1₅ according to the fifth embodiment, FIG. 9 is a skeleton drawing showing the automatic transmission 1₅ according to the fifth embodiment, and FIG. 10 is an operation table for the automatic transmission 1₅ according to the fifth embodiment. Note that in the fifth embodiment described below, only the portions that differ from the automatic transmission 1₁ according to the first embodiment will be explained. The other portions are substantially identical, and thus their explanations will be omitted.

The automatic transmission 1₅ according to the fifth embodiment has a structure that is modified such that, in contrast to the automatic transmission 1₁ according to the first embodiment, the hydraulic servo 30 of the second clutch C-2, the hydraulic servo 20 of the first clutch C-1, and the hydraulic servo 50 of the fourth clutch C-4 are disposed in an axial direction between the planetary gear DP and the planetary gear unit PU, and the hydraulic servo 40 of the third clutch C-3 is disposed in an axial direction on the side of the planetary gear DP that is opposite to the planetary gear unit PU. Specifically, the hydraulic servo 30 of the second clutch C-2 is disposed in an axial direction between the counter gear 15 and the hydraulic servo 20 of the first clutch C-1 and adjacent to the support wall 120, the hydraulic servo 20 of the first clutch C-1 is disposed in an axial direction between the hydraulic servo 30 of the second clutch C-2 and the hydraulic servo 50 of the fourth clutch C-4 on the support wall 120, the hydraulic servo 50 of the fourth clutch C-4 is disposed in an axial direction between the hydraulic servo 20 of the first clutch C-1 and the planetary gear DP and on the input shaft 12, and the hydraulic servo 40 of the third clutch C-3 is disposed on the boss portion 3b.

Specifically, in the automatic transmission 1₅, the hydraulic servo 40 of the third clutch C-3 is disposed in an axial direction on a side of the planetary gear DP that is opposite to the planetary gear unit PU, the hydraulic servo 50 of the fourth clutch C-4, the hydraulic servo 20 of the first clutch C-1, the hydraulic servo 30 of the second clutch C-2, and the counter gear 15 are disposed in an axial direction between the planetary gear DP and the planetary gear unit PU, and the hydraulic servo 60 of the first brake B-1 is disposed in an axial direction on a side of the planetary gear unit PU that is opposite to the planetary gear DP.

In addition, due to this structure, because the fourth clutch C-4 can be disposed on the input shaft 12, it is possible to eliminate continuous transferring the input rotation to the intermediate shaft 13. Thus, the input shaft 12 and the intermediate shaft 13 can be separated so as to freely rotate relatively to each other, the intermediate shaft 13 can be used as what is termed an intermediate shaft, it becomes possible to use this intermediate shaft 13 as a power transfer member that transfers the speed reduction rotation from the third clutch C-3 and the input rotation from the fourth clutch C-4, that is, the intermediate shaft 13 can use in common the output side transfer member 101 of the third clutch C-3 and the output side transfer member 104 of the fourth clutch C-4. Thereby, in comparison to the case in which the transfer member 101 is covered on the intermediate shaft 13, it is possible to reduce the sliding resistance, and it is possible to improve the transfer efficiency of the automatic transmission 1₅ for a vehicle.

In addition, as shown in FIG. 8 and FIG. 9, the second brake B-2 is formed by what is termed a band brake that locks the clutch drum 32 of the second clutch C-2 to the case 4 by being clamped by a brake band 171, and is provided with a one-way clutch F-1 that restricts the rotation of the carrier CR2 of the planetary gear unit PU to one direction.

Specifically, for example, in the D (drive) range and in the first forward speed (1st), as shown in FIG. 10, the first clutch C-1 and the one-way clutch F-1 are engaged. Thus, as shown in FIG. 9 (and also refer to FIG. 5), the rotation of the ring gear R1, which is reduced by the sun gear S1, which is stationary, and the carrier CR1, which provides the input rotation, is input to the sun gear S3 via the first clutch C-1. In addition, the rotation of the carrier CR2 is restricted to one direction (the normal rotation direction), that is, the reverse rotation of the carrier CR2 is prevented and held stationary. Thereby, the reduced speed rotation that is input to the sun gear S3 is output to the ring gear R3 via the carrier CR2, which is stationary, and the normal rotation is output from the counter gear 15 as the first forward speed.

In addition, during engine braking (i.e., during coasting), by locking the second brake B-2, holding the carrier CR2 stationary, and preventing the normal rotation of this carrier CR2, the state of the first forward speed is maintained. In addition, in the first forward speed, because the reverse rotation of the carrier CR2 is prevented by the one-way clutch F-1 and normal rotation is permitted, establishing the first forward speed when, for example, switching from a non-travel range to a travel range can be carried out smoothly due to the automatic engagement of the one-way clutch F-1.

Note that because the additional second forward speed to the eighth forward speed, the first reverse speed, and the second reverse speed operate identically to those of the automatic transmission 1₁ according to the first embodiment, the explanations thereof are omitted.

According to this type of automatic transmission 1₅ described above, because the fourth clutch C-4 is disposed so as to be interposed on the transfer path that connects the space between the input shaft 12 and the sun gear S2, the second clutch C-2 is disposed so as to be interposed on the transfer path that connects the space between the carrier CR1 and the carrier CR2, and the output side transfer member 103 of the second clutch C-2 is linked to the carrier CR2 in the planetary gear unit PU at the planetary gear DP side in an axial direction, it is possible to eliminate a member that encloses the planetary gear unit PU. Thereby, the automatic transmission 1₅ for a vehicle can be made more compact in the radial direction. In addition, it is possible to shorten the transfer member that requires a high rigidity, to reduce the weight, and to improve the controllability of the automatic transmission 1₅ for a vehicle. Furthermore, a structure becomes possible in which the supplied lubricating oil is readily discharged, and the cooling performance can be ensured. In addition, the assembly of the automatic transmission 1₅ for a vehicle can be simplified. Furthermore, because a structure becomes possible in which a support wall 120 can be erected and the working oil for the clutches can be supplied from this support wall 120 due to the configuration of each of the clutches, it is possible to reduce the number of seal rings, to reduce the sliding resistance of the seal rings, and to improve the power transfer efficiency of the automatic transmission 1₅ for a vehicle.

In addition, because the hydraulic servo 30 of the second clutch C-2 is disposed in an axial direction between the planetary gear unit PU and the planetary gear DP, it is possible to supply working oil to the hydraulic servo 30 of the second clutch C-2 from an oil duct provided in the support wall 120. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₅ for a vehicle.

In addition, because the hydraulic servo 50 of the fourth clutch C-4 is disposed in an axial direction between the planetary gear unit PU and the planetary gear DP and adjacent to the planetary gear DP, a portion of the member that forms the carrier CR1 and the clutch drum 52 of the hydraulic servo 50 of the fourth clutch C-4 can be used in common, (that is, the clutch drum 52 and the side plate of the carrier CR1) and thus it is possible to reduce both the size and weight.

Furthermore, because the hydraulic servo 40 of the third clutch C-3 is disposed in an axial direction on a side of the planetary gear DP that is opposite to the planetary gear unit PU, it is possible to supply working oil to the hydraulic servo 40 of the third clutch C-3 from an oil duct provided in the boss portion 3b that is linked to one end of the case 4. Thereby, in comparison to the case in which working oil is supplied from an oil duct provided in the input shaft 12, it is possible to reduce the number of seal rings, to reduce the sliding resistance of the seal rings, and to improve the power transfer efficiency of the automatic transmission 1₅ for a vehicle.

In addition, because the hydraulic servo 20 of the first clutch C-1 is disposed in an axial direction on a side of the planetary gear unit PU that is opposite to the planetary gear DP, it is possible to supply working oil to the hydraulic servo 20 of the first clutch C-1 from an oil duct provided in the support wall 120. Thereby, in comparison to the case in which working oil is supplied from an oil duct that is provided in the input shaft 12, it is possible to reduce the number of seal rings, and to reduce the sliding resistance of the seal rings, and to improve the power transfer efficiency of the automatic transmission 1₅ for an engine.

Furthermore, because a first brake B-1 that freely locks the rotation of the sun gear S2 with respect to the case 4 is provided and the hydraulic servo 60 of the first brake B-1 is disposed in an axial direction on a side of planetary gear unit PU that is opposite to the planetary gear DP, the locking force transfer member of the first brake B-1 and the sun gear S2 can be linked without making the members complicated, and it is possible to make the automatic transmission 1₅ for a vehicle more compact.

In the automatic transmission 1₅ for a vehicle according to the present invention as explained above, the transfer member 103 of the output side of the second clutch C-2 is linked to the carrier CR2 through the outer circumferential side of the transfer members 101, 102 of the output side of the third and first clutches C-3, C-1, the intermediate shaft 13, which is the transfer member of the output side of the fourth clutch C-4 and the transfer member 101 of the output side of third clutch C-3 are linked to the sun gear S2, and the intermediate shaft 13, which is the transfer member 104 of the output side of the fourth clutch C-4, the transfer member 101 of the output side of third clutch C-3, and the sun gear S2, which rotate integrally therewith, are disposed on the inner circumferential side with respect to the transfer member 102 of the output side of the first clutch C-1. Therefore, the intermediate shaft 13, which is the transfer member of the output side of the fourth clutch C-4, which rotates faster than the transfer member 103 of the output side of the second clutch C-2, is further toward the inner circumferential side than the transfer member 102 of the output side of the first clutch C-1, which is on the inner circumferential side of the transfer member 103 of the output side of the second clutch C-2. Thus, it is possible to make the diameter of the intermediate shaft 13, which is the transfer member of the output side of the fourth clutch C-4 smaller than the diameter of the transfer member 103 of the output side of the second clutch C-2, and it is possible to reduce the weight more than the case in which it is on the outer circumferential side. In addition, because the inertia is reduced in comparison to the case in which it is disposed on the outer circumferential side, it is possible to improve the controllability of the automatic transmission 1₅ for a vehicle.

In addition, the third and first clutches C-3, C-1 are disposed on a side of the planetary gear DP with respect to the planetary gear set, the transfer members 101, 102 of the output side of the third and first clutches C-3, C-1 are linked respectively to the sun gear S2 and the sun gear S3, the fourth clutch C-4 is disposed in an axial direction on a side of the planetary gear unit PU that is opposite to the planetary gear DP, the intermediate shaft 13, which is the transfer member of the output side of the fourth clutch C-4 is linked to the sun gear S2, the second clutch C-2 is disposed on the planetary gear DP side with respect to the planetary unit PU, and the transfer member 103 of the output side of the second clutch C-2 is linked to the carrier CR2 through the outer circumferential side of the transfer members 101, 102 of the output side of the third and first clutches C-3, C-1. Thereby, the intermediate shaft 13, which is the transfer member of the output side of the fourth clutch C-4, which rotates faster than the transfer member of the output side of the second clutch C-2, is on the inner circumferential side. Thus, the diameter of the intermediate shaft 13, which is the transfer member of the output side of the fourth clutch C-4 can be made smaller than the diameter of the transfer member 103 of the output side of the second clutch C-2, and it is possible to reduce the weight more than the case in which it is disposed on the outer circumferential side. In addition, because it is possible to reduce the inertia in comparison to the case in which it is on the outside, it is possible to improve the controllability of the automatic transmission 1₅ for a vehicle.

Furthermore, because the transfer member of the input side of the fourth clutch C-4 is directly linked to the carrier CR1 and a portion of the carrier CR1 is formed as a portion of the hydraulic servo 50 of the fourth clutch C-4, it is possible to use the portions of the members that form the carrier CR1 and the hydraulic servo 50 of the fourth clutch C-4 (that is, a portion of the clutch drum 52 and the side plate of the carrier CR1) in common, and it is possible to reduce the weight and size.

Furthermore, a counter gear 15 that is linked to the ring gear R3 and is disposed in an axial direction between the planetary gear unit PU and the planetary gear DP is provided, there is a support wall 120a that is linked to the support wall 120 that extends from the case 4 and that supports the counter gear 15, the hub member 112 of the second clutch C-2 is linked to the carrier CR1 through the outer circumferential side of the third and first clutches C-3, C-1, a portion of the transfer member 103 of the output side of the second clutch C-2 is formed as the clutch drum 32 of the hydraulic servo 30 of the second clutch C-2, and the hydraulic servo 30 is disposed above the support portion 120a between the planetary gear DP and counter gear 15. Therefore, it is possible to supply the working oil to the hydraulic servo 30 of the second clutch C-2 from an oil duct c30 that is provided in the support portion 120a. Thus, in comparison to the case in which, for example, the working oil is supplied from an oil duct that is provided in the input shaft 12, it is possible to reduce the number of seal rings, to reduce the sliding friction of the seal rings, and to improve the power transfer efficiency of the automatic transmission 1₅ for a vehicle.

Furthermore, there is a boss portion 3b that is linked to the side wall 3a of the case 4 and that holds the sun gear S1 stationary, the transfer member of the input side of the third clutch C-3 is linked to the ring gear R1 and a portion of the transfer member of the input side of the third clutch C-3 is formed as the clutch drum 42 of the hydraulic servo 40 of the third clutch C-3, the hydraulic servo 40 is disposed above the boss portion 3b in an axial direction between the planetary gear DP and the side wall 3a, the transfer member of the input side of the first clutch C-1 is linked to the transfer member of the input side of the third clutch C-3 and a portion of the transfer member of the input side of the first clutch C-1 is formed as the clutch drum 22 of the hydraulic servo 20 of the first clutch C-1, and the hydraulic servo 20 is disposed above the support portion 120a in an axial direction between the planetary gear DP and the hydraulic servo 30 of the second clutch C-2. Therefore, it is possible to supply the working oil to the hydraulic servo 40 of the third clutch C-3 from an oil duct c40 that is provided in the boss portion 3b that is linked to the side wall 3a of the case 4. Thus, in comparison to the case in which, for example, the hydraulic servo 40 of the third clutch C-3 is disposed above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₅ for a vehicle. In addition, it is possible to supply the working oil to the hydraulic servo 20 of the first clutch C-1 from an oil duct c20 that is provided in the support wall 120 that extends from the case 4 and the support member 120a. Thus, in comparison to the case in which, for example, the working oil is supplied from an oil duct that is provided in the input shaft 12, it is possible to reduce the number of seal rings, to reduce the sliding resistance of the seal rings, and to improve the power transfer efficiency of the automatic transmission 1₅ for a vehicle.

In addition, because a counter shaft 81 is provided that is disposed parallel to the input shaft 12 and linked via the counter gear 15 that is linked to the ring gear R3 and the output rotation from the ring gear R3 is transferred to the counter shaft 81 via the counter gear 15, it is possible to use the automatic transmission 1₅ for a vehicle advantageously in an FF-type vehicle.

Furthermore, because the counter gear 15 is disposed in an axial direction between the planetary gear unit PU and the planetary gear DP and is supported by a support portion 120a that is linked to the support wall 120 that extends from the case 4, it is possible to prevent the counter gear 15 from becoming distant from the input side in an axial direction. For example, it is possible to position the counter shaft portion 80 and the differential gear portion 90 near the torque converter 7 side, and it is possible to make the automatic transmission 1₅ for a vehicle more compact. Thereby, it is possible to prevent interference between the members and the frame of the vehicle, and it is possible to improve the mounting characteristics for the automatic transmission 1₅ for a vehicle in the vehicle.

In addition, because the carrier CR1 is linked to the input shaft 12 on the planetary gear unit PU side with respect to the planetary gear DP and linked in an axial direction to the hub member 112, which is the transfer member of the input side of the second clutch C-2, at a side of the planetary gear DP that is opposite to the planetary gear unit PU, it is possible to link the carrier CR1, the transfer member 112 of the input side of the second clutch C-2, and the input shaft 12 without making the members complicated, and it is possible to make the automatic transmission 1₅ for a vehicle more compact.

In addition, because the hub member 116 of the first brake B-1 and the transfer member 104 that is linked thereto are linked in an axial direction to the sun gear S2 at a side of the planetary gear unit PU that is opposite to the planetary gear DP, it is possible to link the hub member 116 of the first brake B-1, the transfer member 104, and the sun gear S2 without making the members complicated, and it is possible to make the automatic transmission 1₅ for a vehicle more compact.

In addition, because the planetary gear DP includes the sun gear S1, for which the rotation is normally held stationary with respect to the case 4, a carrier CR1 that supports the pinion gear P1 and the pinion gear P2 so as to be freely rotatable and normally links to the input shaft 12, and a ring gear R1 that meshes with the pinion gear P2 and outputs a reduced speed rotation, it is possible to output a reduced speed rotation that reduces the input rotation of the input shaft 12 from the ring gear R1.

In addition, because the planetary gear unit PU is a Ravigneaux-type planetary gear unit PU that includes the sun gear S2, the sun gear S3, the short pinion P3 that meshes with the sun gear S3, the long pinion P4 that meshes with the sun gear S2 and meshes with the short pinion P3, the carrier CR2 that freely rotatably supports the short pinion P3 and the long pinion P4, and the ring gear R3 that meshes with the long pinion P4, it is possible to prevent the rotation of each of the rotating elements from becoming high and it is possible to obtain advantageous gear ratios while enabling each of the rotating elements of the planetary gear unit PU and the output side members of each of the clutches and brakes to be linked without making the members complicated.

In addition, the first forward speed can be established by engaging the first clutch C-1 and locking the second brake B-2; the second forward speed can be established by engaging the first clutch C-1 and locking the first brake B-1; the third forward speed can be established by engaging the first clutch C-1 and the third clutch C-3; the fourth forward speed can be established by engaging the first clutch C-1 and the fourth clutch C-4; the fifth forward speed can be established by engaging the first clutch C-1 and the second clutch C-2; the sixth forward speed can be established by engaging the second clutch C-2 and the fourth clutch C-4; the seventh forward speed can be established by engaging the second clutch C-2 and the third clutch C-3; the eighth forward speed can be established by engaging the second clutch C-2 and locking the first brake B-1; and reverse speeds can be established by engaging the third clutch C-3 or the fourth clutch C-4 and locking the second brake B-2.

In addition, in a velocity diagram in which the respective speeds of the sun gear S2, the sun gear S3, the carrier CR2, and the ring gear R3 of the planetary gear unit PU are shown on the ordinates, and the corresponding gear ratios of the sun gear S2, the sun gear S3, the carrier CR2, and the ring gear R3 are shown in the abscissa, a structure becomes possible in which the sun gear S2 is positioned at the farthest end in the horizontal direction and in sequence the carrier CR2, the ring gear R3 that is linked to the counter gear 15, and the sun gear S3 are associated.

Note that the automatic transmission 1₅ for a vehicle according to the fifth embodiment can form an automatic transmission 1₁₀ for a vehicle according to a tenth embodiment described below by inverting the speed change mechanism 2₅ substantially as-is in the left-right direction (an axial direction). However, in the automatic transmission 1₁₀ for a vehicle according to the tenth embodiment explained below, because the input rotation must be transferred to the fourth clutch C-4 through the inner circumferential side of the planetary gear unit PU, it is not possible to separate the input shaft 12 and the intermediate shaft 13.

### Sixth Embodiment

Next, a sixth embodiment, in which a portion of the first embodiment has been modified, will be explained with reference to FIG. 11. FIG. 11 is a cross-sectional view showing the automatic transmission 1₆ according to the sixth embodiment. Note that in the sixth embodiment explained below, the portions having structures that are identical to those of the automatic transmission 1₁ according to the first embodiment are denoted by identical reference numerals, and the explanation thereof is omitted.

The automatic transmission 1₆ according to the sixth embodiment is formed, in contrast to the automatic transmission 1₁ according to according to the first embodiment, such that the input shaft 12 and the intermediate shaft 13 remain as-is (that is, the direction in which the engine is disposed as-is), and the disposition of the first through fourth clutches C-1 to C-4, the first and second brakes B-1 and B-2, the planetary gear DP, the planetary gear unit PU, the counter gear 15 and the like is substantially bilaterally inverted, that is, the speed change mechanism 2₆ is structured by substantially bilaterally inverting (in an axial direction) the speed change mechanism 2₁.

That is, in the automatic transmission 1₆, the hydraulic servo 30 of the second clutch C-2 and the hydraulic servo 20 of the first clutch C-1 are disposed in an axial direction on a side of the planetary gear DP that is opposite to the planetary gear unit PU, the hydraulic servo 40 of the third clutch C-3 and the counter gear 15 are disposed in an axial direction between the planetary gear DP and the planetary gear unit PU, and the hydraulic servo 50 of the fourth clutch C-4 and the hydraulic servo 60 of the first brake B-1 are disposed in an axial direction on a side of the planetary gear unit PU that is opposite to the planetary gear DP.

According to this type of automatic transmission 1₆ described above, because the fourth clutch C-4 is disposed so as to be interposed on the transfer path that connects the space between the input shaft 12 and the sun gear S2, the second clutch C-2 is disposed so as to be interposed on the transfer path that connects the space between carrier CR1 and the carrier CR2, and the output side transfer member 103 of the second clutch C-2 is linked to the carrier CR2 in the planetary gear unit PU at the planetary gear DP side in an axial direction, it is possible to eliminate a member that encloses the planetary gear unit PU. Thereby, the automatic transmission 1₆ for a vehicle can be made more compact in the radial direction. In addition, it is possible to shorten the transfer member that requires a high rigidity, it is possible to reduce the weight, and it is possible to improve the controllability of the automatic transmission 1₆ for a vehicle. Furthermore, a structure becomes possible in which the supplied lubricating oil is readily discharged, and the cooling performance can be ensured. In addition, the assembly of the automatic transmission 1₆ for a vehicle can be simplified. Furthermore, because a structure becomes possible in which a support wall 120 can be erected and the working oil for the clutches can be supplied from this support wall due to the configuration of each of the clutches, it is possible to reduce the number of seal rings, to reduce the sliding resistance of the seal rings, and to improve the power transfer efficiency of the automatic transmission 1₆ for a vehicle.

In addition, a counter gear 15 that is linked to the ring gear R3 is provided, this counter gear 15 is disposed in an axial direction between the planetary gear unit PU and the planetary gear DP, the output side member 101 of the third clutch C-3, the output side member 102 of the first clutch C-1, and the output side transfer member 103 of the second clutch C-2 are linked to the planetary gear unit PU through the inner circumferential side of the counter gear 15. Thus, it is possible to dispose the counter gear 15 in an axial direction between the planetary gear unit PU and the planetary gear DP, and it is possible to use the automatic transmission 1₆ for a vehicle advantageously in an FF-type vehicle.

Furthermore, because the hydraulic servo 30 of the second clutch C-2 is disposed in an axial direction on a side of the planetary gear DP that is opposite to the planetary gear unit PU, it is possible to supply the working oil to the hydraulic servo 30 of the second clutch C-2 from an oil duct provided in the boss portion 3b that is linked to one end of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₆ for a vehicle.

In addition, because the hydraulic servo 50 of the fourth clutch C-4 is disposed in an axial direction on a side of the planetary gear unit PU that is opposite to the planetary gear DP, it is possible to dispose the friction plates 51 of the fourth clutch C-4 on a relatively outer circumferential side and it is possible to make the surface area of the friction plates 51 large, and thus, it is possible to ensure a transferable torque volume, and it is possible to reduce the number of friction plates 51. Furthermore, it is possible to supply working oil to the hydraulic servo 50 of the fourth clutch C-4 from an oil duct c50 in the boss portion 3d that is linked to one end of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₆ for a vehicle.

In addition, because the hydraulic servo 40 of the third clutch C-3 is disposed in an axial direction between the planetary gear unit PU and the planetary gear DP, in comparison to the case in which the hydraulic servo 40 of the third clutch C-3 is disposed in an axial direction on a side of the planetary gear DP that is opposite to the planetary gear unit PU, it is possible to shorten the distance between the third clutch C-3 and the planetary gear unit PU, and it is possible to shorten the output side transfer member 101 of the third clutch C-3, which must be strong in order to transfer high torque. Thereby, it is possible to reduce the weight and it is possible to improve the controllability of the automatic transmission 1₆ for a vehicle.

Furthermore, because the hydraulic servo 20 of the first clutch C-1 is disposed in an axial direction on a side of the planetary gear DP that is opposite to the planetary gear unit PU, it is possible to supply working oil to the hydraulic servo 20 of the first clutch C-1 from an oil duct c20 that is provided in the boss portion 3b that is linked to one end of the case 4. Thereby, in comparison to the case in which, for example, the hydraulic servo 20 of the first clutch C-1 is disposed on the input shaft 12 and the working oil is supplied via the input shaft 12, it is possible shorten the length of the oil duct, and it is possible to improve the controllability of the automatic transmission 1₆ for an engine.

Furthermore, because a first brake B-1 that freely locks the rotation of the sun gear S2 with respect to the case 4 is provided and the hydraulic servo 60 of the first brake B-1 is disposed in an axial direction on a side of planetary gear unit PU that is opposite to the planetary gear DP, the locking force transfer member of the first brake B-1 and the sun gear S2 can be linked without making the members complicated, and it is possible to make the automatic transmission 1₆ for a vehicle more compact.

In the automatic transmission 1₆ for a vehicle according to the present invention as explained above, the transfer member 103 of the output side of the second clutch C-2 is linked to the carrier CR2 through the outer circumferential side of the transfer members 101, 102 of the output side of the third and first clutches C-3, C-1, the transfer member 104 of the output side of the fourth clutch C-4 and the transfer member 101 of the output side of third clutch C-3 are linked to the sun gear S2, and the transfer member 104 of the output side of the fourth clutch C-4, the transfer member 101 of the output side of third clutch C-3, and the sun gear S2, which rotate integrally therewith, are disposed on the inner circumferential side with respect to the transfer member 102 of the output side of the first clutch C-1. Therefore, the transfer member 104 of the output side of the fourth clutch C-4, which rotates faster than the transfer member 103 of the output side of the second clutch C-2, is further toward the inner circumferential side than the transfer member 102 of the output side of the first clutch C-1, which is on the inner circumferential side of the transfer member 103 of the output side of the second clutch C-2. Thus, it is possible to make the diameter of the transfer member 104 of the output side of the fourth clutch C-4, smaller than the diameter of the transfer member 103 of the output side of the second clutch C-2, and it is possible to reduce the weight more than the case in which it is on the outer circumferential side. In addition, because the inertia is reduced in comparison to the case in which it is disposed on the outer circumferential side, it is possible to improve the controllability of the automatic transmission 1₆ for a vehicle.

In addition, the third and first clutches C-3, C-1 are disposed on the planetary gear DP side with respect to the planetary gear set, the transfer members 101, 102 of the output side of the third and first clutches C-3, C-1 are linked respectively to the sun gear S2 and the sun gear S3, the fourth clutch C-4 is disposed in an axial direction on a side of the planetary gear unit PU that is opposite to the planetary gear DP, the transfer member 104 of the output side of the fourth clutch C-4 is linked to the sun gear S2, the second clutch C-2 is disposed on the planetary gear DP side with respect to the planetary unit PU, and the transfer member 103 of the output side of the second clutch C-2 is linked to the carrier CR2 through the outer circumferential side of the transfer members 101, 102 of the output side of the third and first clutches C-3, C-1. Thereby, because the transfer member 104 of the output side of the fourth clutch C-4, which rotates faster than the transfer member 103 of the output side of the second clutch C-2, is on the inner circumferential side, the diameter of the transfer member 104 of the output side of the fourth clutch C-4 can be made smaller than the diameter of the transfer member 103 of the output side of the second clutch C-2, and it is possible to reduce the weight more than the case in which it is disposed on the outer circumferential side. In addition, because it is possible to reduce the inertia in comparison to the case in which it is on the outside, it is possible to improve the controllability of the automatic transmission 1₆ for a vehicle.

In addition, in comparison to disposing the hydraulic servo 50 of the fourth clutch C-4 between the planetary gear unit PU and the planetary gear DP, it is possible to dispose the friction plates 51 of the fourth clutch C-4 on a relatively outer circumferential side, and it is possible to increase the area of the friction plates. Thus, it is possible to ensure a transferable torque volume, and it is possible to reduce the number of friction plates 51. Furthermore, it is possible to shorten the distance between the third and first clutches C-3, C-1 and the planetary gear unit PU, and it is possible to shorten the transfer members 101, 102 of the output side of the third and first clutches C-3, C-1, which must be strong in order to transfer a high torque. Thereby, it is possible to decrease the weight, and it is possible to improve the controllability of the automatic transmission 1₆ for a vehicle.

Furthermore, it is possible, for example, to supply the working oil to the hydraulic servo 50 of the fourth clutch C-4 from an oil duct c50 that is provided in the boss portion 3b that is linked to the side wall 3a of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₆ for a vehicle.

In addition, because the transfer member of the input side of the fourth clutch C-4 is linked to the input shaft 12 and the intermediate shaft 13 through the inner circumferential side of the planetary gear unit PU and a portion of the transfer member of the input side of the fourth clutch C-4 is formed as the clutch drum 52 of the hydraulic servo 50 of the fourth clutch C-4, in comparison to the case in which the transfer member of the output side of the fourth clutch C-4 is formed as the clutch drum of the hydraulic servo 50, the clutch drum of the hydraulic servo 50 can also act as a member that transfers power from the input shaft 12, and thus it is possible to form the transfer member compactly in the axial direction.

Furthermore, because there is a boss portion 3b that is linked to the side wall 3a of the case 4 and that holds the sun gear S1 stationary, the transfer member of the input side of the second clutch C-2 is linked to the carrier CR1, a portion of the transfer member of the input side of the second clutch C-2 is formed as the clutch drum 32 of the hydraulic servo 30 of the second clutch C-2, and the hydraulic servo 30 is disposed above the boss portion 3b in an axial direction between the planetary gear DP and the side wall 3a, it is possible to supply the working oil to the hydraulic servo 30 of the second clutch C-2 from an oil duct c30 that is provided in the boss portion 3b. Thus, in comparison to the case in which, for example, the hydraulic servo 30 of the second clutch C-2 is provided above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₆ for a vehicle.

In addition, because the hub member 111 of the first clutch C-1 is linked to the ring gear R1, the transfer member 102 of the output side of the first clutch C-1 is linked to the sun gear S3, a portion of the transfer member 102 of the output side of the first clutch C-1 is formed as the clutch drum 22 of the hydraulic servo 20 of the first clutch C-1, and the hydraulic servo 20 is disposed above the boss portion 3b in an axial direction between the planetary gear DP and the hydraulic servo 20 of the second clutch C-1, it is possible to supply the working oil to the hydraulic servo 20 of the first clutch C-1 from an oil duct c20 that is provided in the boss portion 3b that is linked to the side wall 3a of the case 4. Thus, in comparison to the case in which, for example, the hydraulic servo 20 of the first clutch C-1 is disposed above the input shaft 12 that is separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₆ for a vehicle.

Furthermore, because a counter shaft 81 is provided that is disposed parallel to the input shaft 12 and linked via the counter gear 15 that is linked to the ring gear R3 and the output rotation from the ring gear R3 is transferred to the counter shaft 81 via the counter gear 15, it is possible to use the automatic transmission 1₆ for a vehicle advantageously in an FF-type vehicle.

In addition, because the counter gear 15 is disposed in an axial direction between the planetary gear unit PU and the planetary gear DP and is supported by a support portion 120a that is linked to the support wall 120 that extends from the case 4, it is possible to prevent the counter gear 15 from becoming distant from the input side in an axial direction, it is possible, for example, to position the counter shaft portion 80 and the differential gear portion 90 near the torque converter 7 side, and it is possible to make the automatic transmission 1₆ for a vehicle more compact. Thereby, it is possible to prevent interference between the members and the frame of the vehicle, and it is possible to improve the mounting characteristics for the automatic transmission 1₆ for a vehicle in the vehicle.

Furthermore, because the carrier CR1 is linked to the input shaft 12 on the planetary gear unit PU side with respect to the planetary gear DP and linked in an axial direction to the clutch drum 32, which is the transfer member of the input side of the second clutch C-2, at a side of the planetary gear DP that is opposite to the planetary gear unit PU, it is possible to link the carrier CR1, the transfer member 32 of the input side of the second clutch C-2, and the input shaft 12 without making the members complicated, and it is possible to make the automatic transmission 1₆ for a vehicle more compact.

In addition, because the hub member 116 of the first brake B-1 and the transfer member 104 that is linked thereto are linked in an axial direction to the sun gear S2 at a side of the planetary gear unit PU that is opposite to the planetary gear DP, it is possible to link the hub member 116 of the first brake B-1, the transfer member 104, and the sun gear S2 without making the members complicated, and it is possible to make the automatic transmission 1₆ for a vehicle more compact.

In addition, because the planetary gear DP includes the sun gear S1, for which the rotation is normally held stationary with respect to the case 4, a carrier CR1 that supports the pinion gear P1 and the pinion gear P2 so as to be freely rotatable and normally links to the output shaft 12, and a ring gear R1 that meshes with the pinion gear P2 and outputs a reduced speed rotation, it is possible to output a reduced speed rotation that reduces the input rotation of the input shaft 12 from the ring gear R1.

In addition, because the planetary gear unit PU is a Ravigneaux-type planetary gear unit PU that includes the sun gear S2, the sun gear S3, the short pinion P3 that meshes with the sun gear S3, the long pinion P4 that meshes with the sun gear S2 and meshes with the short pinion P3, the carrier CR2 that freely rotatably supports the short pinion P3 and the long pinion P4, and the ring gear R3 that meshes with the long pinion P4, it is possible to prevent the rotation of each of the rotating elements from becoming high and it is possible to obtain advantageous gear ratios while enabling each of the rotating elements of the planetary gear unit PU and the output side members of each of the clutches and brakes to be linked without making the members complicated.

In addition, the first forward speed can be established by engaging the first clutch C-1 and locking the second brake B-2; the second forward speed can be established by engaging the first clutch C-1 and locking the first brake B-1; the third forward speed can be established by engaging the first clutch C-1 and the third clutch C-3; the fourth forward speed can be established by engaging the first clutch C-1 and the fourth clutch C-4; the fifth forward speed can be established by engaging the first clutch C-1 and the second clutch C-2; the sixth forward speed can be established by engaging the second clutch C-2 and the fourth clutch C-4; the seventh forward speed can be established by engaging the second clutch C-2 and the third clutch C-3; the eighth forward speed can be established by engaging the second clutch C-2 and locking the first brake B-1; and reverse speeds can be established by engaging the third clutch C-3 or the fourth clutch C-4 and locking the second brake B-2.

In addition, in a velocity diagram in which the respective speed of the sun gear S2, the sun gear S3, the carrier CR2, and the ring gear R3 of the planetary gear unit PU are shown on the ordinates, and the corresponding gear ratios of the sun gear S2, the sun gear S3, and carrier CR2, and the ring gear R3 are shown on the abscissa, a structure becomes possible in which the sun gear S2 is positioned at the farthest end in the horizontal direction and in sequence the carrier CR2, the ring gear R3 that is linked to the counter gear 15, and the sun gear S3 are associated.

### Seventh Embodiment

Next, a seventh embodiment, in which a portion of the second embodiment described above has been modified, will be explained with reference to FIG. 12. FIG. 12 is a cross-sectional view showing an automatic transmission 1₇ according to the second embodiment. Note that in the seventh embodiment described below, the portions having structures that are identical to those of the automatic transmission 1₂ according to the second embodiment are denoted by identical reference numerals, and their explanation has been omitted.

The automatic transmission 1₇ according to the seventh embodiment is formed, in contrast to the automatic transmission 12 according to the second embodiment, such that the input shaft 12 and the intermediate shaft 13 remain as-is (that is, the direction in which the engine is disposed as-is), and the disposition of the first through fourth clutches C-1 to C-4, the first and second brakes B-1 to B-2, the planetary gear DP, the planetary gear unit PU, and the counter gear 15 and the like is substantially bilaterally (an axial direction) inverted, that is, the speed change mechanism 2₇ is structured by substantially bilaterally inverting (in an axial direction) that speed change mechanism 2₂.

Specifically, in the automatic transmission 1₇, the hydraulic servo 20 of the first clutch C-1 is disposed in an axial direction on a side of the planetary gear DP that is opposite to the planetary gear unit PU, the hydraulic servo 40 of the third clutch C-3, the hydraulic servo 30 of the second clutch C-2, and the counter gear 15 are disposed in an axial direction between the planetary gear DP and the planetary gear unit PU, and the hydraulic servo 50 of the fourth clutch C-4 and the hydraulic servo 60 of the first brake B-1 are disposed in an axial direction on a side of the planetary gear unit PU that is opposite to the planetary gear DP.

According to this type of automatic transmission 1₇ for a vehicle described above, because the fourth clutch C-4 is disposed so as to be interposed on the transfer path that connects the space between the input shaft 12 and the sun gear S2, the second clutch C-2 is disposed so as to be interposed on the transfer path that connects the carrier CR1 and the carrier CR2, and the output side transfer member 103 of the second clutch C-2 is linked to the carrier CR2 in the planetary gear unit PU at the planetary gear DP side in an axial direction, it is possible to eliminate a member that encloses the planetary gear unit PU. Thereby, the automatic transmission 1₇ for a vehicle can be made more compact in the radial direction. In addition, it is possible to shorten the transfer member that requires a high rigidity, it is possible to reduce the weight, and it is possible to improve the controllability of the automatic transmission 1₇ for a vehicle. Furthermore, a structure becomes possible in which the supplied lubricating oil is readily discharged, and the cooling performance can be ensured. In addition, the assembly of the automatic transmission 1₇ for a vehicle can be simplified. Furthermore, because a structure becomes possible in which a support wall 120 can be erected and the working oil for the clutches can be supplied from this support wall 120 due to the configuration of each of the clutches, it is possible to reduce the number of seal rings, to reduce the sliding resistance of the seal rings, and to improve the power transfer efficiency of the automatic transmission 1₇ for a vehicle.

In addition, because the hydraulic servo 30 of the second clutch C-2 is disposed in an axial direction between the planetary gear unit PU and the planetary gear DP, it is possible to supply working oil to the hydraulic servo 30 of the second clutch C-2 from an oil duct that is provided in the support wall 120. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₇ for a vehicle.

Furthermore, because the hydraulic servo 50 of the fourth clutch C-4 is disposed in an axial direction on a side of the planetary gear unit PU that is opposite to the planetary gear DP, it is possible to dispose the friction plates 51 of the fourth clutch C-4 on a relatively outer circumferential side and it is possible to make the surface area of the friction plates 51 large, and thus, it is possible to ensure a transferable torque volume, and it is possible to reduce the number of friction plates. Furthermore, it is possible to supply working oil to the hydraulic servo 50 of the fourth clutch C-4 from an oil duct that is provided in the boss portion 3d that is linked to one end of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₇ for a vehicle.

In addition, because the hydraulic servo 40 of the third clutch C-3 is disposed in an axial direction between the planetary gear unit PU and the planetary gear DP, in comparison to the case in which the hydraulic servo 40 of the third clutch C-3 is disposed in an axial direction on a side of the planetary gear DP that is opposite to the planetary gear unit PU, it is possible to shorten the distance between the third clutch C-3 and the planetary gear unit PU, and it is possible to shorten the output side transfer member 101 of the third clutch C-3, which must be strong in order to transfer high torque. Thereby, it is possible to reduce the weight and it is possible to improve the controllability of the automatic transmission 1₇ for a vehicle.

Furthermore, because the hydraulic servo 20 of the first clutch C-1 is disposed in an axial direction on a side of the planetary gear DP that is opposite to the planetary gear unit PU, it is possible to supply working oil to the hydraulic servo 20 of the first clutch C-1 from an oil duct provided in the boss portion 3b that is linked to one end of the case 4. Thereby, in comparison to the case in which working oil is supplied from an oil duct that is provided in the input shaft 12, it is possible to reduce the number of seal rings, and to reduce the sliding resistance of the seal rings, and to improve the power transfer efficiency of the automatic transmission 1₇ for an engine.

In addition, because a first brake B-1 that freely locks the rotation of the sun gear S2 with respect to the case 4 is provided and the hydraulic servo 60 of the first brake B-1 is disposed in an axial direction on a side of planetary gear unit PU that is opposite to the planetary gear DP, the locking force transfer member of the first brake B-1 and the sun gear S2 can be linked without making the members complicated, and it is possible to make the automatic transmission 1₇ for a vehicle more compact.

In the automatic transmission 1₇ for a vehicle according to the present invention as explained above, the transfer member 103 of the output side of the second clutch C-2 is linked to the carrier CR2 through the outer circumferential side of the transfer members 101, 102 of the output side of the third and first clutches C-3, C-1, the transfer member 104 of the output side of the fourth clutch C-4 and the transfer member 101 of the output side of third clutch C-3 are linked to the sun gear S2, and the transfer member 104 of the output side of the fourth clutch C-4, the transfer member 101 of the output side of third clutch C-3, and the sun gear S2, which rotate integrally therewith, are disposed on the inner circumferential side with respect to the transfer member 102 of the output side of the first clutch C-1. Therefore, the transfer member 104 of the output side of the fourth clutch C-4, which rotates faster than the transfer member 103 of the output side of the second clutch C-2, is further toward the inner circumferential side than the transfer member 102 of the output side of the first clutch C-1, which is on the inner circumferential side of the transfer member 103 of the output side of the second clutch C-2. Thus, it is possible to make the diameter of the transfer member 104 of the output side of the fourth clutch C-4, smaller than the diameter of the transfer member 103 of the output side of the second clutch C-2, and it is possible to reduce the weight more than the case in which it is on the outer circumferential side. In addition, because the inertia is reduced in comparison to the case in which it is disposed on the outer circumferential side, it is possible to improve the controllability of the automatic transmission 1₇ for a vehicle.

In addition, the third and first clutches C-3, C-1 are disposed on a side of the planetary gear set that is opposite to the planetary gear DP, the transfer members 101, 102 of the output side of the third and first clutches C-3, C-1 are linked respectively to the sun gear S2 and the sun gear S3, the fourth clutch C-4 is disposed in an axial direction on a side of the planetary gear unit PU that is opposite to the planetary gear DP, the transfer member 104 of the output side of the fourth clutch C-4 is linked to the sun gear S2, the second clutch C-2 is disposed on the planetary gear DP side with respect to the planetary unit PU, and the transfer member 103 of the output side of the third and first clutches C-3, C-1 are linked to the carrier CR2 through the outer circumferential side of the transfer members 101, 102 of the output side of the third and first clutches C-3, C-1. Thereby, because the transfer member 104 of the output side of the fourth clutch C-4, which rotates faster than the transfer member of the output side of the second clutch C-2, is on the inner circumferential side, the diameter of the transfer member 104 of the output side of the fourth clutch C-4 can be made smaller than the diameter of the transfer member 103 of the output side of the second clutch C-2, and it is possible to reduce the weight more than the case in which it is disposed on the outer circumferential side. In addition, because it is possible to reduce the inertia in comparison to the case in which it is on the outside, it is possible to improve the controllability of the automatic transmission 1₇ for a vehicle.

In addition, in comparison to disposing the hydraulic servo 50 of the fourth clutch C-4 between the planetary gear unit PU and the planetary gear DP, it is possible to dispose the friction plates 51 of the fourth clutch C-4 on a relatively outer circumferential side, and it is possible to increase the area of the friction plates 51. Thus, it is possible to ensure a transferable torque volume, and it is possible to reduce the number of friction plates 51. Furthermore, it is possible to shorten the distance between the third and first clutches C-3, C-1 and the planetary gear unit PU, and it is possible to shorten the transfer members 101, 102 of the output side of the third and first clutches C-3, C-1, which must be strong in order to transfer a high torque. Thereby, it is possible to decrease the weight, and it is possible to improve the controllability of the automatic transmission 1₇ for a vehicle.

Furthermore, it is possible, for example, to supply the working oil to the hydraulic servo 50 of the fourth clutch C-4 from an oil duct c50 that is provided in the boss portion 3b that is linked to the side wall 3a of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₇ for a vehicle.

In addition, because the transfer member of the input side of the fourth clutch C-4 is linked to the input shaft 12 and the intermediate shaft 13 through the inner circumferential side of the planetary gear unit PU and a portion of the transfer member of the input side of the fourth clutch C-4 is formed as the clutch drum 52 of the hydraulic servo 50 of the fourth clutch C-4, in comparison to the case in which the transfer member of the output side of the fourth clutch C-4 is formed as the clutch drum 52 of the hydraulic servo 50 of the fourth clutch C-4, the clutch drum of the hydraulic servo 50 can also act as a member that transfers power from the input shaft 12, and thus it is possible to form the transfer member compactly in the axial direction.

Furthermore, because a counter gear 15 that is linked to the ring gear R3 and is disposed in an axial direction between the planetary gear unit PU and the planetary gear DP is provided, there is a support wall 120a that is linked to the support wall 120 that extends from the case 4 and that supports the counter gear 15, the hub member 112 of the second clutch C-2 is linked to the carrier CR1 through the outer circumferential side of the third and first clutches C-3, C-1, a portion of the transfer member 103 of the output side of the second clutch C-2 is formed as the clutch drum 32 of the hydraulic servo 30 of the second clutch C-2, and the hydraulic servo 30 is disposed above the support portion 120a between the planetary gear DP and counter gear 15, it is possible to supply the working oil to the hydraulic servo 30 of the second clutch C-2 from an oil duct c30 that is provided in the support portion 120a. Thus, in comparison to the case in which, for example, the working oil is supplied from an oil duct that is provided in the input shaft 12, it is possible to reduce the number of seal rings, to reduce the sliding friction of the seal rings, and to improve the power transfer efficiency of the automatic transmission 1₇ for a vehicle.

In addition, because a counter shaft 81 is provided that is disposed parallel to the input shaft 12 and linked via the counter gear 15 that is linked to the ring gear R3 and the output rotation from the ring gear R3 is transferred to the counter shaft 81 via the counter gear 15, it is possible to use the automatic transmission 1₇ for a vehicle advantageously in an FF-type vehicle.

Furthermore, because the counter gear 15 is disposed in an axial direction between the planetary gear unit PU and the planetary gear DP and is supported by a support portion 120a that is linked to the support wall 120 that extends from the case 4, it is possible to prevent the counter gear 15 from becoming distant from the input side in an axial direction, it is possible, for example, to position the counter shaft portion 80 and the differential gear portion 90 near the torque converter 7, and it is possible to make the automatic transmission 1₇ for a vehicle more compact. Thereby, it is possible to prevent interference between the members of the vehicle and the frame, and it is possible to improve the mounting characteristics for the automatic transmission 1₇ for a vehicle in the vehicle.

In addition, because the carrier CR1 is linked to the input shaft 12 on the planetary gear unit PU side with respect to the planetary gear DP and linked to the hub member 112, which is the transfer member of the input side of the second clutch C-2, at a side of the planetary gear DP that is opposite to the planetary gear unit PU in an axial direction, it is possible to link the carrier CR1, the transfer member 112 of the input side of the second clutch C-2, and the input shaft 12 without making the members complicated, and it is possible to make the automatic transmission 1₇ for a vehicle more compact.

In addition, because the hub member 116 of the first brake B-1 and the transfer member 104 that is linked thereto are linked in an axial direction to the sun gear S2 at a side of the planetary gear unit PU that is opposite to the planetary gear DP, it is possible to link the hub member 116 of the first brake B-1, the transfer member 104, and the sun gear S2 without making the members complicated, and it is possible to make the automatic transmission 1₇ for a vehicle more compact.

In addition, because the planetary gear DP includes the sun gear S1, for which the rotation is normally held stationary with respect to the case 4, a carrier CR1 that supports the pinion gear P1 and the pinion gear P2 so as to be freely rotatable and normally links to the output shaft 12, and a ring gear R1 that meshes with the pinion gear P2 and outputs a reduced speed rotation, it is possible to output a reduced speed rotation that reduces the input rotation of the input shaft 12 from the ring gear R1.

In addition, because the planetary gear unit PU is a Ravigneaux-type planetary gear unit PU that includes the sun gear S2, the sun gear S3, the short pinion P3 that meshes with the sun gear S3, the long pinion P4 that meshes with the sun gear S2 and meshes with the short pinion P3, the carrier CR2 that freely rotatably supports the short pinion P3 and the long pinion P4, and the ring gear R3 that meshes with the long pinion P4, it is possible to prevent the rotation of each of the rotating elements from becoming high and it is possible to obtain advantageous gear ratios while enabling each of the rotating elements of the planetary gear unit PU and the output side members of each of the clutches and brakes to be linked without making the members complicated.

In addition, the first forward speed can be established by engaging the first clutch C-1 and locking the second brake B-2; the second forward speed can be established by engaging the first clutch C-1 and locking the first brake B-1; the third forward speed can be established by engaging the first clutch C-1 and the third clutch C-3; the fourth forward speed can be established by engaging the first clutch C-1 and the fourth clutch C-4; the fifth forward speed can be established by engaging the first clutch C-1 and the second clutch C-2; the sixth forward speed can be established by engaging the second clutch C-2 and the fourth clutch C-4; the seventh forward speed can be established by engaging the second clutch C-2 and the third clutch C-3; the eighth forward speed can be established by engaging the second clutch C-2 and locking the first brake B-1; and reverse speeds can be established by engaging the third clutch C-3 or the fourth clutch C-4 and locking the second brake B-2.

In addition, in a velocity diagram in which the respective speed of the sun gear S2, the sun gear S3, the carrier CR2, and the ring gear R3 of the planetary gear unit PU are shown on the ordinates, and the corresponding gear ratios of the sun gear S2, the sun gear S3, and carrier CR2, and the ring gear R3 are shown on the abscissa, a structure becomes possible in which the sun gear S2 is positioned at the farthest end in the horizontal direction and in sequence the carrier CR2, the ring gear R3 that is linked to the counter gear 15, and the sun gear S3 are associated.

### Eighth Embodiment

Next, an eighth embodiment, in which a portion of the eighth embodiment has been modified, will be explained with reference to FIG. 13. FIG. 13 is a cross-sectional view showing an automatic transmission 1₈ according to the eighth embodiment. Note that in the eighth embodiment described below, portions having structures that are identical to those of the automatic transmission 1₃ according to the third embodiment are denoted by identical reference numerals, and their explanation is omitted.

The automatic transmission 1₈ according to the eighth embodiment is formed, in contrast to the automatic transmission 1₃ according to the third embodiment, such that the input shaft 12 and the intermediate shaft 13 remain as-is (that is, the direction in which the engine is disposed as-is), and the disposition of the first through fourth clutches C-1 to C-4, the first and second brakes B-1 to B-2, the planetary gear DP, the planetary gear unit PU, and the counter gear 15 and the like is inverted in a substantially bilateral direction (an axial direction), that is, the speed change mechanism 2₈ is structured by substantially inverting that speed change mechanism 2₃ in a bilateral direction (in an axial direction).

Specifically, in the automatic transmission 1_{8,} the hydraulic servo 40 of the third clutch C-3, the hydraulic servo 20 of the first clutch C-1, the hydraulic servo 30 of the second clutch C-2, and the counter gear 15 are disposed in an axial direction between the planetary gear DP and the planetary gear unit PU, and the hydraulic servo 50 of the fourth clutch C-4 and the hydraulic servo 60 of the first brake B-1 are disposed in an axial direction on a side of the planetary gear unit PU that is opposite to the planetary gear DP.

According to the automatic transmission 1₈ described above, because the fourth clutch C-4 is disposed so as to be interposed on the transfer path that connects the space between the input shaft 12 and the sun gear S2, the second clutch C-2 is disposed so as to be interposed on the transfer path that connects the carrier CR1 and the carrier CR2, and the output side transfer member 103 of the second clutch C-2 is linked to the carrier CR2 in the planetary gear unit PU at the planetary gear DP side in an axial direction, it is possible to eliminate a member that encloses the planetary gear unit PU. Thereby, the automatic transmission 1₈ for a vehicle can be made more compact in the radial direction. In addition, it is possible to shorten the transfer member that requires a high rigidity, it is possible to reduce the weight, and it is possible to improve the controllability of the automatic transmission 1₈ for a vehicle. Furthermore, a structure becomes possible in which the supplied lubricating oil is readily discharged, and the cooling performance can be ensured. In addition, the assembly of the automatic transmission 1₈ for a vehicle can be simplified. Furthermore, because a structure becomes possible in which a support wall 120 can be erected and the working oil for the clutches can be supplied from this support wall 120 due to the configuration of each of the clutches, it is possible to reduce the number of seal rings, to reduce the sliding resistance of the seal rings, and to improve the power transfer efficiency of the automatic transmission 1₈ for a vehicle.

In addition, because the hydraulic servo 30 of the second clutch C-2 is disposed in an axial direction between the planetary gear unit PU and the planetary gear DP, it is possible to supply working oil to the hydraulic servo 30 of the second clutch C-2 from an oil duct that is provided in the support wall 120. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₈ for a vehicle.

Furthermore, because the hydraulic servo 50 of the fourth clutch C-4 is disposed in an axial direction on a side of the planetary gear unit PU that is opposite to the planetary gear DP, it is possible to dispose the friction plates 51 of the fourth clutch C-4 on a relatively outer circumferential side and it is possible to make the surface area of the friction plates 51 large, and thus, it is possible to ensure a transferable torque volume, and it is possible to reduce the number of friction plates. Furthermore, it is possible to supply working oil to the hydraulic servo 50 of the fourth clutch C-4 from an oil duct that is provided in the boss portion 3d that is linked to one end of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₈ for a vehicle.

In addition, because the hydraulic servo 40 of the third clutch C-3 is disposed in an axial direction between the planetary gear unit PU and the planetary gear DP, in comparison to the case in which the hydraulic servo 40 of the third clutch C-3 is disposed in an axial direction on a side of the planetary gear DP that is opposite to the planetary gear unit PU, it is possible to shorten the distance between the third clutch C-3 and the planetary gear unit PU, and it is possible to shorten the output side transfer member 101 of the third clutch C-3, which must be strong in order to transfer high torque. Thereby, it is possible to reduce the weight and it is possible to improve the controllability of the automatic transmission 1₂ for a vehicle.

Furthermore, because the hydraulic servo 20 of the first clutch C-1 is disposed in an axial direction between the planetary gear unit PU and the planetary gear DP, in comparison to the case in which the hydraulic servo 20 of the first clutch C-1 is disposed in an axial direction on a side of the planetary gear DP that is opposite to the planetary gear unit PU, it is possible to shorten the distance between the first clutch C-1 and the planetary gear unit PU, and it is possible to shorten the output side transfer member 102 of the first clutch C-1, which must be strong in order to transfer high torque. Thereby, it is possible to reduce the weight, and it is possible to improve the controllability of the automatic transmission 1₈ for a vehicle.

In addition, because a first brake B-1 that freely locks the rotation of the sun gear S2 with respect to the case 4 is provided and the hydraulic servo 60 of the first brake B-1 is disposed in an axial direction on a side of planetary gear unit PU that is opposite to the planetary gear DP, the locking force transfer member of the first brake B-1 and the sun gear S2 can be linked without making the members complicated, and it is possible to make the automatic transmission 1₈ for a vehicle more compact.

In the automatic transmission 1₈ for a vehicle according to the present invention as explained above, the transfer member 103 of the output side of the second clutch C-2 is linked to the carrier CR2 through the outer circumferential side of the transfer members 101, 102 of the output side of the third and first clutches C-3, C-1, the transfer member 104 of the output side of the fourth clutch C-4 and the transfer member 101 of the output side of third clutch C-3 are linked to the sun gear S2, and the transfer member 104 of the output side of the fourth clutch C-4, the transfer member 101 of the output side of third clutch C-3, and the sun gear S2, which rotate integrally therewith, are disposed on the inner circumferential side with respect to the transfer member 102 of the output side of the first clutch C-1..Therefore, the transfer member 104 of the output side of the fourth clutch C-4, which rotates faster than the transfer member 103 of the output side of the second clutch C-2, is further toward the inner circumferential side than the transfer member 102 of the output side of the first clutch C-1, which is on the inner circumferential side of the transfer member 103 of the output side of the second clutch C-2. Thus, it is possible to make the diameter of the transfer member 104 of the output side of the fourth clutch C-4, smaller than the diameter of the transfer member 103 of the output side of the second clutch C-2, and it is possible to reduce the weight more than the case in which it is on the outer circumferential side. In addition, because the inertia is reduced in comparison to the case in which it is disposed on the outer circumferential side, it is possible to improve the controllability of the automatic transmission 1₈ for a vehicle.

In addition, the third and first clutches C-3, C-1 are disposed on the planetary gear DP side with respect to the planetary gear set PU, the transfer members 101, 102 of the output side of the third and first clutches C-3, C-1 are linked respectively to the sun gear S2 and the sun gear S3, the fourth clutch C-4 is disposed in an axial direction on a side of the planetary gear unit PU that is opposite to the planetary gear DP, the transfer member 104 of the output side of the fourth clutch C-4 is linked to the sun gear S2, the second clutch C-2 is disposed on the planetary gear DP side with respect to the planetary unit PU, and the transfer member 103 of the output side of the second clutch C-2 is linked to the carrier CR2 through the outer circumferential side of the transfer members 101, 102 of the output side of the third and first clutches C-3, C-1. Thereby, because the transfer member 104 of the output side of the fourth clutch C-4, which rotates faster than the transfer member of the output side of the second clutch C-2, is on the inner circumferential side, the diameter of the transfer member 104 of the output side of the fourth clutch C-4 can be made smaller than the diameter of the transfer member 103 of the output side of the second clutch C-2, and it is possible to reduce the weight more than the case in which it is disposed on the outer circumferential side. In addition, because it is possible to reduce the inertia in comparison to the case in which it is on the outside, it is possible to improve the controllability of the automatic transmission 1₈ for a vehicle.

In addition, in comparison to disposing the hydraulic servo 50 of the fourth clutch C-4 between the planetary gear unit PU and the planetary gear DP, it is possible to dispose the friction plates of the fourth clutch C-4 on a relatively outer circumferential side, and it is possible to increase the area of the friction plates 51. Thus, it is possible to ensure a transferable torque volume, and it is possible to reduce the number of friction plates 51. Furthermore, it is possible to shorten the distance between the third and first clutches C-3, C-1 and the planetary gear unit PU, and it is possible to shorten the transfer members 101, 102 of the output side of the third and first clutches C-3, C-1, which must be strong in order to transfer a high torque. Thereby, it is possible to decrease the weight, and it is possible to improve the controllability of the automatic transmission 1₈ for a vehicle.

Furthermore, it is possible, for example, to supply the working oil to the hydraulic servo 50 of the fourth clutch C-4 from an oil duct c50 that is provided in the boss portion 3b that is linked to the side wall 3a of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₈ for a vehicle.

In addition, because the transfer member of the input side of the fourth clutch C-4 is linked to the input shaft 12 and the intermediate shaft 13 through the inner circumferential side of the planetary gear unit PU and a portion of the transfer member of the input side of the fourth clutch C-4 is formed as the clutch drum 52 of the hydraulic servo 50 of the fourth clutch C-4, in comparison to the case in which the transfer member of the output side of the fourth clutch C-4 is formed as the clutch drum of the hydraulic servo 50, the clutch drum of the hydraulic servo 50 can also act as a member that transfers power from the input shaft 12, and thus it is possible to form the transfer member compactly in the axial direction.

Furthermore, because a counter gear 15 is provided that is linked to the ring gear R3 and is disposed in an axial direction between the planetary gear unit PU and the planetary gear DP, there is a support wall 120a that is linked to the support wall 120 that extends from the case 4 and supports the counter gear 15, the hub member 112 of the second clutch C-2 is linked to the carrier CR1 through the outer circumferential side of the third and first clutches C-3, C-1, a portion of the transfer member 103 of the output side of the second clutch C-2 is formed as the clutch drum 32 of the hydraulic servo 30 of the second clutch C-2, and the hydraulic servo 30 is disposed above the support portion 120a between the planetary gear DP and counter gear 15, it is possible to supply the working oil to the hydraulic servo 30 of the second clutch C-2 from an oil duct c30 that is provided in the support portion 120a. Thus, in comparison to the case in which, for example, the working oil is supplied from an oil duct that is provided in the input shaft 12, it is possible to reduce the number of seal rings, to reduce the sliding friction of the seal rings, and to improve the power transfer efficiency of the automatic transmission 1₈ for a vehicle.

Furthermore, because the transfer member 102 of the output side of the first clutch C-1 is linked to the sun gear S3, a portion of the transfer member 102 of the output side of the first clutch C-1 is formed as the clutch drum 22 of the hydraulic servo 20 of the first clutch C-1, the hydraulic servo 20 is disposed above the support portion 120a in an axial direction between the planetary gear DP and the hydraulic servo 30 of the second clutch C-2, the transfer member 101 of the output side of the third clutch C-3 is linked to the sun gear S2, a portion of the transfer member 101 of the output side of the third clutch C-3 is formed as the drum clutch 42 of the hydraulic servo 40 of the third clutch C-3, and the hydraulic servo 40 is disposed in an axial direction between the planetary gear DP and the hydraulic servo 20 of the first clutch C-1, it is possible to provide the working oil to the hydraulic servo 20 of the first clutch C-1 from an oil duct c20 that is provided in the support wall 120 that extends from the case 4 and the support portion 120a. Thus, in comparison to the case in which, for example, the working oil is supplied from an oil duct that is provided in the input shaft 12, it is possible to reduce the number of seal rings, to reduce the sliding resistance of the seal rings, and to improve the power transfer efficiency of the automatic transmission 1₈ for a vehicle. In addition, because the hydraulic servo 40 of the third clutch C-3 is disposed in an axial direction between the planetary gear unit PU and the planetary gear DP, in comparison to the case in which, for example, the hydraulic servo 40 of the third clutch C-3 is disposed on a side of the planetary gear DP that is opposite to the planetary gear unit PU, it is possible to shorten the distance between the third clutch C-3 and the planetary gear unit PU, and it is possible to shorten the transfer member 101 of the output side of the third clutch C-3, which must be strong in order to transfer a high torque. Thereby, it is possible to reduce the weight, and it is possible to improve the controllability of the automatic transmission for a vehicle.

In addition, because a counter shaft 81 is provided that is disposed parallel to the input shaft 12 and linked via the counter gear 15 that is linked to the ring gear R3 and the output rotation from the ring gear R3 is transferred to the counter shaft 81 via the counter gear 15, it is possible to use the automatic transmission 1₈ for a vehicle advantageously in an FF-type vehicle.

Furthermore, because the counter gear 15 is disposed in an axial direction between the planetary gear unit PU and the planetary gear DP and is supported by a support portion 120a that is linked to the support wall 120 that extends from the case 4, it is possible to prevent the counter gear 15 from becoming distant from the input side in an axial direction, it is possible, for example, to position the counter shaft portion 80 and the differential gear portion 90 near the torque converter 7, and it is possible to make the automatic transmission 1₈ for a vehicle more compact. Thereby, it is possible to prevent interference between the members of the vehicle and the frame, and it is possible to improve the mounting characteristics for the automatic transmission 1₈ for a vehicle in the vehicle.

In addition, because the carrier CR1 is linked to the input shaft 12 on the planetary gear unit PU side with respect to the planetary gear DP and linked to the hub member 112, which is the transfer member of the input side of the second clutch C-2, at a side of the planetary gear DP that is opposite to the planetary gear unit PU in an axial direction, it is possible to link the carrier CR1, the transfer member 112 of the input side of the second clutch C-2, and the input shaft 12 without making the members complicated, and it is possible to make the automatic transmission 1₈ for a vehicle more compact.

In addition, because the hub member 116 of the first brake B-1 and the transfer member 104 that is linked thereto are linked in an axial direction to the sun gear S2 at a side of the planetary gear unit PU that is opposite to the planetary gear DP, it is possible to link the hub member 116 of the first brake B-1, the transfer member 104, and the sun gear S2 without making the members complicated, and it is possible to make the automatic transmission 1₈ for a vehicle more compact.

In addition, because the planetary gear DP includes the sun gear S1, for which the rotation is normally held stationary with respect to the case 4, a carrier CR1 that supports the pinion gear P1 and the pinion gear P2 so as to be freely rotatable and normally links to the output shaft 12, and a ring gear R1 that meshes with the pinion gear P2 and outputs a reduced speed rotation, it is possible to output a reduced speed rotation that reduces the input rotation of the input shaft 12 from the ring gear R1.

In addition, because the planetary gear unit PU is a Ravigneaux-type planetary gear unit PU that includes the sun gear S2, the sun gear S3, the short pinion P3 that meshes with the sun gear S3, the long pinion P4 that meshes with the sun gear S2 and meshes with the short pinion P3, the carrier CR2 that freely rotatably supports the short pinion P3 and the long pinion P4, and the ring gear R3 that meshes with the long pinion P4, it is possible to prevent the rotation of each of the rotating elements from becoming high and it is possible to obtain advantageous gear ratios while enabling each of the rotating elements of the planetary gear unit PU and the output side members of each of the clutches and brakes to be linked without making the members complicated.

In addition, the first forward speed can be established by engaging the first clutch C-1 and locking the second brake B-2; the second forward speed can be established by engaging the first clutch C-1 and locking the first brake B-1; the third forward speed can be established by engaging the first clutch C-1 and the third clutch C-3; the fourth forward speed can be established by engaging the first clutch C-1 and the fourth clutch C-4; the fifth forward speed can be established by engaging the first clutch C-1 and the second clutch C-2; the sixth forward speed can be established by engaging the second clutch C-2 and the fourth clutch C-4; the seventh forward speed can be established by engaging the second clutch C-2 and the third clutch C-3; the eighth forward speed can be established by engaging the second clutch C-2 and locking the first brake B-1; and reverse speeds can be established by engaging the third clutch C-3 or the fourth clutch C-4 and locking the second brake B-2.

In addition, in a velocity diagram in which the respective speed of the sun gear S2, the sun gear S3, the carrier CR2, and the ring gear R3 of the planetary gear unit PU are shown on the ordinates, and the corresponding gear ratios of the sun gear S2, the sun gear S3, and carrier CR2, and the ring gear R3 are shown on the abscissa, a structure becomes possible in which the sun gear S2 is positioned at the farthest end in the horizontal direction and in sequence the carrier CR2, the ring gear R3 that is linked to the counter gear 15, and the sun gear S3 are associated

### Ninth Embodiment

Next, a ninth embodiment, in which a portion of the fourth embodiment has been modified, will be explained with reference to FIG. 14. FIG. 14 is a cross-sectional view showing an automatic transmission 1₉ according to the ninth embodiment. Note that in the ninth embodiment which is explained below, portions having structures that are identical to those of the automatic transmission 1₄ according to the fourth embodiment are denoted by identical reference numerals, and their explanation has been omitted.

The automatic transmission 1₉ according to the ninth embodiment is formed, in contrast to the automatic transmission 1₄ according to the fourth embodiment, such that the input shaft 12 and the intermediate shaft 13 remain as-is (that is, the direction in which the engine is disposed as-is), and the disposition of the first through fourth clutches C-1 to C-4, the first and second brakes B-1 and B-2, the planetary gear DP, the planetary gear unit PU, and the counter gear 15 and the like is substantially bilaterally (an axial direction) inverted, that is, the speed change mechanism 2₉ is structured by substantially bilaterally inverting (in an axial direction) the speed change mechanism 2₄.

Specifically, in the automatic transmission 1₉, the hydraulic servo 40 of the third clutch C-3 is disposed in an axial direction on a side of the planetary gear DP that is opposite to the planetary gear unit PU, the hydraulic servo 20 of the first clutch C-1, the hydraulic servo 30 of the second clutch C-2, and the counter gear 15 are disposed in an axial direction between the planetary gear DP and the planetary gear unit PU, and the hydraulic servo 50 of the fourth clutch C-4 and the hydraulic servo 60 of the first brake B-1 are disposed in an axial direction on a side of the planetary gear unit PU that is opposite to the planetary gear DP.

According to this type of automatic transmission 1₉ described above, because the fourth clutch C-4 is disposed so as to be interposed on the transfer path that connects the space between the input shaft 12 and the sun gear S2, the second clutch C-2 is disposed so as to be interposed on the transfer path that connects the carrier CR1 and the carrier CR2, and the output side transfer member 103 of the second clutch C-2 is linked to the carrier CR2 in the planetary gear unit PU at the planetary gear DP side in an axial direction, it is possible to eliminate a member that encloses the planetary gear unit PU. Thereby, the automatic transmission 1₉ for a vehicle can be made more compact in the radial direction. In addition, it is possible to shorten the transfer member that requires a high rigidity, it is possible to reduce the weight, and it is possible to improve the controllability of the automatic transmission 1₉ for a vehicle. Furthermore, a structure becomes possible in which the supplied lubricating oil is readily discharged, and the cooling performance can be ensured. In addition, the assembly of the automatic transmission 1₉ for a vehicle can be simplified. Furthermore, because a structure becomes possible in which a support wall 120 can be erected and the working oil for the clutches can be supplied from this support wall 120 due to the configuration of each of the clutches, it is possible to reduce the number of seal rings, to reduce the sliding resistance of the seal rings, and to improve the power transfer efficiency of the automatic transmission 1₉ for a vehicle.

In addition, because the hydraulic servo 30 of the second clutch C-2 is disposed in an axial direction between the planetary gear unit PU and the planetary gear DP, it is possible to supply working oil to the hydraulic servo 30 of the second clutch C-2 from an oil duct provided in the support wall 120. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₉ for a vehicle.

Furthermore, because the hydraulic servo 50 of the fourth clutch C-4 is disposed in an axial direction on a side of the planetary gear unit PU that is opposite to the planetary gear DP, it is possible to dispose the friction plates 51 of the fourth clutch C-4 on a relatively outer circumferential side and it is possible to make the surface area of the friction plates 51 large, and thus, it is possible to ensure a transferable torque volume, and it is possible to reduce the number of friction plates. Furthermore, it is possible to supply working oil to the hydraulic servo 50 of the fourth clutch C-4 from an oil duct that is provided in the boss portion 3d that in linked to one end of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₉ for a vehicle.

In addition, because the hydraulic servo 40 of the third clutch C-3 is disposed in an axial direction on a side of the planetary gear DP that is opposite to the planetary gear unit PU, it is possible to supply the working oil to the hydraulic servo 40 of the third clutch C-3 from an oil duct that is provided in the boss portion 3b that is linked to one end of the case 4. Thereby, in comparison to supplying the working oil from an oil duct that is provided in the input shaft 12, it is possible to reduce the number of seal rings, to reduce the sliding resistance of the seal rings, and to improve the power transfer efficiency of an automatic transmission 1₉ of a vehicle.

Furthermore, because the hydraulic servo 20 of the first clutch C-1 is disposed in an axial direction between the planetary gear unit PU and the planetary gear DP, in comparison to disposing the hydraulic servo 20 of the first clutch C-1 in an axial direction on a side of the planetary gear DP that is opposite to the planetary gear unit PU, it is possible to shorten the distance between the first clutch C-1 and the planetary gear unit PU, and it is possible to shorten the output side transfer member 102 of the first clutch C-1, which requires strength in order to transfer a high torque. Thereby, it is possible to reduce the weight, and it is possible to improve the controllability of the automatic transmission 1₉ for a vehicle.

In addition, because a first brake B-1 that freely locks the rotation of the sun gear S2 with respect to the case 4 is provided and the hydraulic servo 60 of the first brake B-1 is disposed in an axial direction on a side of planetary gear unit PU that is opposite to the planetary gear DP, the locking force transfer member of the first brake B-1 and the sun gear S2 can be linked without making the members complicated, and it is possible to make the automatic transmission 1₉ for a vehicle more compact.

In the automatic transmission 1₉ for a vehicle according to the present invention as explained above, the transfer member 103 of the output side of the second clutch C-2 is linked to the carrier CR2 through the outer circumferential side of the transfer members 101, 102 of the output side of the third and first clutches C-3, C-1, the transfer member 104 of the output side of the fourth clutch C-4 and the transfer member 101 of the output side of third clutch C-3 are linked to the sun gear S2, and the transfer member 104 of the output side of the fourth clutch C-4, the transfer member 101 of the output side of third clutch C-3, and the sun gear S2, which rotate integrally therewith, are disposed on the inner circumferential side with respect to the transfer member 102 of the output side of the first clutch C-1. Therefore, the transfer member 104 of the output side of the fourth clutch C-4, which rotates faster than the transfer member 103 of the output side of the second clutch C-2, is further toward the inner circumferential side than the transfer member 102 of the output side of the first clutch C-1, which is on the inner circumferential side of the transfer member 103 of the output side of the second clutch C-2. Thus, it is possible to make the diameter of the transfer member 104 of the output side of the fourth clutch C-4, smaller than the diameter of the transfer member 103 of the output side of the second clutch C-2, and it is possible to reduce the weight more than the case in which it is on the outer circumferential side. In addition, because the inertia is reduced in comparison to the case in which it is disposed on the outer circumferential side, it is possible to improve the controllability of the automatic transmission 1₉ for a vehicle.

In addition, the third and first clutches C-3, C-1 are disposed on the planetary gear DP side with respect to the planetary gear, the transfer members 101, 102 of the output side of the third and first clutches C-3, C-1 are linked respectively to the sun gear S2 and the sun gear S3, the fourth clutch C-4 is disposed in an axial direction on a side of the planetary gear unit PU that is opposite to the planetary gear DP, the transfer member 104 of the output side of the fourth clutch C-4 is linked to the sun gear S2, the second clutch C-2 is disposed on the planetary gear DP side with respect to the planetary unit PU, and the transfer member 103 of the output side of the second clutch C-2 is linked to the carrier CR2 through the outer circumferential side of the transfer members 101, 102 of the output side of the third and first clutches C-3, C-1. Thereby, because the transfer member 104 of the output side of the fourth clutch C-4, which rotates faster than the transfer member of the output side of the second clutch C-2, is on the inner circumferential side, the diameter of the transfer member 104 of the output side of the fourth clutch C-4 can be made smaller than the diameter of the transfer member 103 of the output side of the second clutch C-2, and it is possible to reduce the weight more than the case in which it is disposed on the outer circumferential side. In addition, because it is possible to reduce the inertia in comparison to the case in which it is on the outside, it is possible to improve the controllability of the automatic transmission 1₉ for a vehicle.

In addition, in comparison to disposing the hydraulic servo 50 of the fourth clutch C-4 between the planetary gear unit PU and the planetary gear DP, it is possible to dispose the friction plates 51 of the fourth clutch C-4 on a relatively outer circumferential side, and it is possible to increase the area of the friction plates. Thus, it is possible to ensure a transferable torque volume, and it is possible to reduce the number of friction plates 51. Furthermore, it is possible to shorten the distance between the third and first clutches C-3, C-1 and the planetary gear unit PU, and it is possible to shorten the transfer members 101, 102 of the output side of the third and first clutches C-3, C-1, which must be strong in order to transfer a high torque. Thereby, it is possible to decrease the weight, and it is possible to improve the controllability of the automatic transmission 1₉ for a vehicle.

Furthermore, it is possible, for example, to supply the working oil to the hydraulic servo 50 of the fourth clutch C-4 from an oil duct c50 that is provided in the boss portion 3b that is linked to the side wall 3a of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₉ for a vehicle.

In addition, because the transfer member of the input side of the fourth clutch C-4 is linked to the input shaft 12 and the intermediate shaft 13 through the inner circumferential side of the planetary gear unit PU and a portion of the transfer member of the input side of the fourth clutch C-4 is formed as the clutch drum 52 of the hydraulic servo 50 of the fourth clutch C-4, in comparison to the case in which the transfer member of the output side of the fourth clutch C-4 is formed as the clutch drum of the hydraulic servo 50, the clutch drum of the hydraulic servo 50 can also act as a member that transfers power from the input shaft 12, and thus it is possible to form the transfer member compactly in the axial direction.

Furthermore, because a counter gear 15 that is linked to the ring gear R3 and is disposed in an axial direction between the planetary gear unit PU and the planetary gear DP is provided, there is a support wall 120a that is linked to the support wall 120 that extends from the case 4 and that supports the counter gear 15, the hub member 112 of the second clutch C-2 is linked to the carrier CR1 through the outer circumferential side of the third and first clutches C-3, C-1, a portion of the transfer member 103 of the output side of the second clutch C-2 is formed as the clutch drum 32 of the hydraulic servo 30 of the second clutch C-2, and the hydraulic servo 30 is disposed above the support portion 120a between the planetary gear DP and counter gear 15, it is possible to supply the working oil to the hydraulic servo 30 of the second clutch C-2 from an oil duct c30 that is provided in the support portion 120a. Thus, in comparison to the case in which, for example, the working oil is supplied from an oil duct that is provided in the input shaft 12, it is possible to reduce the number of seal rings, to reduce the sliding friction of the seal rings, and to improve the power transfer efficiency of the automatic transmission 1₉ for a vehicle.

In addition, because there is a boss portion 3b that is linked to the side wall 3a of the case 4 and holds the sun gear S 1 stationary, the transfer member of the input side of the third clutch C-3 is linked to the ring gear R1, a portion of the transfer member of the input side of the third clutch C-3 is formed as the clutch drum 42 of the hydraulic servo 40 of the third clutch C-3, the hydraulic servo 40 is disposed above the boss portion 3b in an axial direction between the planetary gear DP and the side wall 3a, the transfer member of the input side of the first clutch C-1 is linked to the transfer member of the input side of the third clutch C-3, a portion of the transfer member of the input side of the first clutch C-1 is formed as the clutch drum 22 of the hydraulic servo 20 of the first clutch C-1, and the hydraulic servo 20 is disposed above the support portion 120a in an axial direction between the planetary gear DP and the hydraulic servo 30 of the second clutch C-2, it is possible to supply the working oil to the hydraulic servo 40 of the third clutch C-3 from an oil duct c40 that is provided in the boss portion 3b that is linked to the side wall 3a of the case 4. Thus, in comparison to the case in which, for example, the hydraulic servo 40 of the third clutch C-3 is disposed above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₉ for a vehicle. In addition, it is possible to supply the working oil to the hydraulic servo 20 of the first clutch C-1 from an oil duct c20 that is provided in the support wall 120 that extends from the case 4 and the support portion 120a. Thus, in comparison to the case in which, for example, the working oil is supplied from an oil duct that is provided in the input shaft 12, it is possible to reduce the number of seal rings, to reduce the sliding resistance of the seal rings, and to improve the power transfer efficiency of the automatic transmission 1₉ for a vehicle.

In addition, because a counter shaft 81 is provided that is disposed parallel to the input shaft 12 and linked via the counter gear 15 that is linked to the ring gear R3 and the output rotation from the ring gear R3 is transferred to the counter shaft 81 via the counter gear 15, it is possible to use the automatic transmission 1₉ for a vehicle advantageously in an FF-type vehicle.

Furthermore, because the counter gear 15 is disposed in an axial direction between the planetary gear unit PU and the planetary gear DP and is supported by a support portion 120a that is linked to the support wall 120 that extends from the case 4, it is possible to prevent the counter gear 15 from becoming distant from the input side in an axial direction, it is possible, for example, to position the counter shaft portion 80 and the differential gear portion 90 near the torque converter 7, and it is possible to make the automatic transmission 1₉ for a vehicle more compact. Thereby, it is possible to prevent interference between the members and the frame of the vehicle, and it is possible to improve the mounting characteristics for the automatic transmission 1₉ for a vehicle in the vehicle.

In addition, because the carrier CR1 is linked to the input shaft 12 on the planetary gear unit PU side with respect to the planetary gear DP and linked in an axial direction to the hub member 112, which is the transfer member of the input side of the second clutch C-2, at a side of the planetary gear DP that is opposite to the planetary gear unit PU, it is possible to link the carrier CR1, the transfer member 112 of the input side of the second clutch C-2, and the input shaft 12 without making the members complicated, and it is possible to make the automatic transmission 1₉ for a vehicle more compact.

In addition, because the hub member 116 of the first brake B-1 and the transfer member 104 that is linked thereto are linked in an axial direction to the sun gear S2 at a side of the planetary gear unit PU that is opposite to the planetary gear DP, it is possible to link the hub member 116 of the first brake B-1, the transfer member 104, and the sun gear S2 without making the members complicated, and it is possible to make the automatic transmission 1₉ for a vehicle more compact.

In addition, because the planetary gear DP includes the sun gear S1, for which the rotation is normally held stationary with respect to the case 4, a carrier CR1 that supports the pinion gear P1 and the pinion gear P2 so as to be freely rotatable and normally links to the output shaft 12, and a ring gear R1 that meshes with the pinion gear P2 and outputs a reduced speed rotation, it is possible to output a reduced speed rotation that reduces the input rotation of the input shaft 12 from the ring gear R1.

In addition, because the planetary gear unit PU is a Ravigneaux-type planetary gear unit PU that includes the sun gear S2, the sun gear S3, the short pinion P3 that meshes with the sun gear S3, the long pinion P4 that meshes with the sun gear S2 and meshes with the short pinion P3, the carrier CR2 that freely rotatably supports the short pinion P3 and the long pinion P4, and the ring gear R3 that meshes with the long pinion P4, it is possible to prevent the rotation of each of the rotating elements from becoming high and it is possible to obtain advantageous gear ratios while enabling each of the rotating elements of the planetary gear unit PU and the output side members of each of the clutches and brakes to be linked without making the members complicated.

In addition, the first forward speed can be established by engaging the first clutch C-1 and locking the second brake B-2; the second forward speed can be established by engaging the first clutch C-1 and locking the first brake B-1; the third forward speed can be established by engaging the first clutch C-1 and the third clutch C-3; the fourth forward speed can be established by engaging the first clutch C-1 and the fourth clutch C-4; the fifth forward speed can be established by engaging the first clutch C-1 and the second clutch C-2; the sixth forward speed can be established by engaging the second clutch C-2 and the fourth clutch C-4; the seventh forward speed can be established by engaging the second clutch C-2 and the third clutch C-3; the eighth forward speed can be established by engaging the second clutch C-2 and locking the first brake B-1; and reverse speeds can be established by engaging the third clutch C-3 or the fourth clutch C-4 and locking the second brake B-2.

In addition, in a velocity diagram in which the respective speed of the sun gear S2, the sun gear S3, the carrier CR2, and the ring gear R3 of the planetary gear unit PU are shown on the ordinates, and the corresponding gear ratios of the sun gear S2, the sun gear S3, and carrier CR2, and the ring gear R3 are shown on the abscissa, a structure becomes possible in which the sun gear S2 is positioned at the farthest end in the horizontal direction and in sequence the carrier CR2, the ring gear R3 that is linked to the counter gear 15, and the sun gear S3 are associated.

### Tenth Embodiment

Next, a tenth embodiment, in which a portion of the fifth embodiment has been modified, will be explained with reference to FIG. 15. FIG. 15 is a cross-sectional view showing an automatic transmission 1₁₀ according to the tenth embodiment. Note that in the tenth embodiment that is explained below, the portions having structures that are identical to those of the automatic transmission 1₅ according to the fifth embodiment are denoted by identical reference numerals, and their explanation has been omitted.

The automatic transmission 1₁₀ according to a tenth embodiment is formed, in contrast to the automatic transmission 1₅ according to the fifth embodiment, such that the input shaft 12 an the intermediate shaft 13 remain as-is (that is, the direction in which the engine is disposed as-is), and the disposition of the first to fourth clutches C-1 to C-4, the first and second brakes B-1 and B-2, the one-way clutch F-1, the planetary gear DP, the planetary gear unit PU, and the counter gear 15 and the like is substantially bilaterally (an axial direction) inverted, that is, the speed change mechanism 2₁₀ is structured by substantially bilaterally inverting (in an axial direction) that speed change mechanism 2₅.

Specifically, in the automatic transmission 1₁₀, the hydraulic servo 40 of the third clutch C-3 is disposed in an axial direction on a side of the planetary gear DP that is opposite to the planetary gear unit PU, the hydraulic servo 50 of the fourth clutch C-4, the hydraulic servo 20 of the first clutch C-1, the hydraulic servo 30 of the second clutch C-2, the counter gear 15 are disposed in an axial direction between the planetary gear DP and the planetary gear unit PU, and the hydraulic servo 60 of the first brake B-1 is disposed in an axial direction on a side of the planetary gear unit PU that is opposite to the planetary gear DP.

Note that in the automatic transmission 1₁₀ for a vehicle according to the tenth embodiment, because it is necessary to transfer the input rotation to the fourth clutch C-4 through the inner circumferential side of the planetary gear unit PU, it is not possible to separate the input shaft 12 and the intermediate shaft 13, and the input shaft 12 and the intermediate shaft 13 are linked by being spline engaged.

According to the automatic transmission 1₁₀ described above, because the fourth clutch C-4 is disposed so as to be interposed on the transfer path that connects the space between the input shaft 12 and the sun gear S2, the second clutch C-2 is disposed so as to be interposed on the transfer path that connects the carrier CR1 and the carrier CR2, and the output side transfer member 103 of the second clutch C-2 is linked to the carrier CR2 in the planetary gear unit PU at the planetary gear DP side in an axial direction, it is possible to eliminate a member that encloses the planetary gear unit PU. Thereby, the automatic transmission 1₁₀ for a vehicle can be made more compact in the radial direction. In addition, it is possible to shorten the transfer member that requires a high rigidity, it is possible to reduce the weight, and it is possible to improve the controllability of the automatic transmission 1₁₀ for a vehicle. Furthermore, a structure becomes possible in which the supplied lubricating oil is readily discharged, and the cooling performance can be ensured. In addition, the assembly of the automatic transmission 1₁₀ for a vehicle can be simplified. Furthermore, because a structure becomes possible in which a support wall 120 can be erected and the working oil for the clutches can be supplied from this support wall 120 due to the configuration of each of the clutches, it is possible to reduce the number of seal rings, to reduce the sliding resistance of the seal rings, and to improve the power transfer efficiency of the automatic transmission 1₁₀ for a vehicle.

In addition, because the hydraulic servo 30 of the second clutch C-2 is disposed in an axial direction between the planetary gear unit PU and the planetary gear DP, it is possible to supply working oil to the hydraulic servo 30 of the second clutch C-2 from an oil duct provided in the support wall 120. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₁₀ for a vehicle.

In addition, because the hydraulic servo 50 of the fourth clutch C-4 is disposed in an axial direction between the planetary gear unit PU and the planetary gear DP and adjacent to the planetary gear DP, it is possible for a portion of the members that structure the carrier CR1 and the clutch drum 52 of the hydraulic servo 50 of the fourth clutch C-4 to be shared (that is, with the clutch drum 52 and the side plate of the carrier CR1), and it is possible to reduce the weight and size thereof.

Furthermore, because the hydraulic servo 40 of the third clutch C-3 is disposed in an axial direction on a side of the planetary gear DP that is opposite to the planetary gear unit PU, it is possible to supply the working oil to the hydraulic servo 40 of the third clutch C-3 from an oil duct provided in the boss portion 3b that is linked to one end of the case 4. Thereby, in comparison to the case in which the working oil is supplied from an oil duct provided in the input shaft 12, it is possible to reduce the number of seal rings, to reduce the sliding resistance of the seal rings, and to improve the power transfer efficiency of the automatic transmission 1₁₀ for a vehicle.

In addition, because the hydraulic servo 20 of the first clutch C-1 is disposed in an axial direction between the planetary gear unit PU and the planetary gear DP, it is possible to supply the working oil to the hydraulic servo 20 of the first clutch C-1 from an oil duct provided in the support wall 120. Thereby, in comparison to the case in which the working oil is supplied from an oil duct provided in the input shaft 12, it is possible to reduce the number of seal rings, to reduce the sliding resistance of the seal rings, and to improve the power transfer efficiency of the automatic transmission 1₁₀ for a vehicle.

In addition, because a first brake B-1 that freely locks the rotation of the sun gear S2 with respect to the case 4 is provided and the hydraulic servo 60 of the first brake B-1 is disposed in an axial direction on a side of planetary gear unit PU that is opposite to the planetary gear DP, the locking force transfer member of the first brake B-1 and the sun gear S2 can be linked without making the members complicated, and it is possible to make the automatic transmission 1₁₀ for a vehicle more compact.

In the automatic transmission 1₁₀ for a vehicle according to the present invention as explained above, the transfer member 103 of the output side of the second clutch C-2 is linked to the carrier CR2 through the outer circumferential side of the transfer members 101, 102 of the output side of the third and first clutches C-3, C-1, the fourth clutch C-4 and the transfer member 101 of the output side of the third clutch C-3 are linked to the sun gear S2, and the transfer member 104 of the output side of the fourth clutch C-4, the transfer member 101 of the fourth clutch C-4 and the output side of third clutch C-3, and the sun gear S2, which rotate integrally therewith, are disposed on the inner circumferential side with respect to the transfer member 102 of the output side of the first clutch C-1. The transfer member 101 of the output side of the fourth clutch C-4, which rotates faster than the transfer member 103 of the output side of the second clutch C-2, is further toward the inner circumferential side than the transfer member 102 of the output side of the first clutch C-1, which is on the inner circumferential side of the transfer member 103 of the output side of the second clutch C-2. Thus, it is possible to make the diameter of the transfer member 101 of the output side of the fourth clutch C-4, smaller than the diameter of the transfer member 103 of the output side of the second clutch C-2, and it is possible to reduce the weight more than the case in which it is on the outer circumferential side. In addition, because the inertia is reduced in comparison to the case in which it is disposed on the outer circumferential side, it is possible to improve the controllability of the automatic transmission 1₁₀ for a vehicle.

In addition, the third and first clutches C-3, C-1 are disposed on the planetary gear DP side with respect to the planetary gear set, the transfer members 101, 102 of the output side of the third and first clutches C-3, C-1 are linked respectively to the sun gear S2 and the sun gear S3, the fourth clutch C-4 is disposed in an axial direction on a side of the planetary gear unit PU that is opposite to the planetary gear DP, the transfer member 101 of the output side of the fourth clutch C-4 is linked to the sun gear S2, the second clutch C-2 is disposed on the planetary gear DP side with respect to the planetary unit PU, and the transfer member 103 of the output side of the second clutch C-2 is linked to the carrier CR2 through the outer circumferential side of the transfer members 101, 102 of the output side of the third and first clutches C-3, C-1. Thereby, because the transfer member 101 of the output side of the fourth clutch C-4, which rotates faster than the transfer member of the output side of the second clutch C-2, is on the inner circumferential side, the diameter of the transfer member 101 of the output side of the fourth clutch C-4 can be made smaller than the diameter of the transfer member 103 of the output side of the second clutch C-2, and it is possible to reduce the weight more than the case in which it is disposed on the outer circumferential side. In addition, because it is possible to reduce the inertia in comparison to the case in which it is on the outside, it is possible to improve the controllability of the automatic transmission 1₁₀ for a vehicle.

Furthermore, because the transfer member of the input side of the fourth clutch C-4 is linked to the carrier CR1 and a portion of the carrier CR1 is formed as a portion of the hydraulic servo 50 of the fourth clutch C-4, it is possible to use a portion of the members that form the carrier CR1 and the hydraulic servo 50 of the fourth clutch C-4 (that is, portions of the clutch drum 52 and the side plate of the carrier CR1) in common, and it is possible to reduce size and weight.

In addition, because a counter gear 15 that is linked to the ring gear R3 and is disposed in an axial direction between the planetary gear unit PU and the planetary gear DP is provided, there is a support wall 120a that is linked to the support wall 120 that extends from the case 4 and that supports the counter gear 15, the hub member 112 of the second clutch C-2 is linked to the carrier CR1 through the outer circumferential side of the third and first clutches C-3, C-1, a portion of the transfer member 103 of the output side of the second clutch C-2 is formed as the clutch drum 32 of the hydraulic servo 30 of the second clutch C-2, and the hydraulic servo 30 is disposed above the support portion 120a between the planetary gear DP and counter gear 15, it is possible to supply the working oil to the hydraulic servo 30 of the second clutch C-2 from an oil duct c30 that is provided in the support portion 120a. Thus, in comparison to the case in which, for example, the working oil is supplied from an oil duct that is provided in the input shaft 12, it is possible to reduce the number of seal rings, to reduce the sliding friction of the seal rings, and to improve the power transfer efficiency of the automatic transmission 1₁₀ for a vehicle.

In addition, because there is a boss portion 3b that is linked to the side wall 3a of the case 4 and holds the sun gear S 1 stationary, a portion of the transfer member of the input side of the third clutch C-3 is formed as a portion of a clutch drum 42 of the hydraulic servo 40 of the third clutch C-3, the hydraulic servo 40 is disposed above the boss portion 3b in an axial direction between the planetary gear DP and the side wall 3a, the transfer member of the input side of the first clutch C-1 is linked to the transfer member of the input side of the third clutch C-3, a portion of the transfer member of the input side of the first clutch C-1 is formed as the clutch drum 22 of the hydraulic servo 20 of the first clutch C-1, and the hydraulic servo 20 is disposed above the support portion 120a in an axial direction between the planetary gear DP and the hydraulic servo 30 of the second clutch C-2, it is possible to supply the working oil to the hydraulic servo 40 of the third clutch C-3 from an oil duct c40 that is provided in the boss portion 3b that is linked to the side wall 3a of the case 4. Thus, in comparison to the case in which, for example, the hydraulic servo 40 of the third clutch C-3 is disposed above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₁₀ for a vehicle. In addition, it is possible to supply the working oil to the hydraulic servo 20 of the first clutch C-1 from an oil duct c20 that is provided in the support wall 120 that extends from the case 4 and the support portion 120a. Thus, in comparison to the case in which, for example, the working oil is supplied from an oil duct that is provided in the input shaft 12, it is possible to reduce the number of seal rings, to reduce the sliding resistance of the seal rings, and to improve the power transfer efficiency of the automatic transmission 1₁₀ for a vehicle.

In addition, because a counter shaft 81 is provided that is disposed parallel to the input shaft 12 and linked via the counter gear 15 that is linked to the ring gear R3 and the output rotation from the ring gear R3 is transferred to the counter shaft 81 via the counter gear 15, it is possible to use the automatic transmission 1₁₀ for a vehicle advantageously in an FF-type vehicle.

Furthermore, because the counter gear 15 is disposed in an axial direction between the planetary gear unit PU and the planetary gear DP and is supported by a support portion 120a that is linked to the support wall 120 that extends from the case 4, it is possible to prevent the counter gear 15 from becoming distant from the input side in an axial direction, it is possible, for example, to position the counter shaft portion 80 and the differential gear portion 90 near the torque converter 7 side, and it is possible to make the automatic transmission 1₁₀ for a vehicle more compact. Thereby, it is possible to prevent interference between the members and the frame of the vehicle, and it is possible to improve the mounting characteristics for the automatic transmission 1₁₀ for a vehicle in the vehicle.

In addition, because the carrier CR1 is linked to the input shaft 12 on the planetary gear unit PU side with respect to the planetary gear DP and linked in an axial direction to the hub member 112, which is the transfer member of the input side of the second clutch C-2, at a side of the planetary gear DP that is opposite to the planetary gear unit PU, it is possible to link the carrier CR1, the transfer member 112 of the input side of the second clutch C-2, and the input shaft 12 without making the members complicated, and it is possible to make the automatic transmission 1₁₀ for a vehicle more compact.

In addition, because the hub member 116 of the first brake B-1 and the transfer member 104 that is linked thereto are linked in an axial direction to the sun gear S2 at a side of the planetary gear unit PU that is opposite to the planetary gear DP, it is possible to link the hub member 116 of the first brake B-1, the transfer member 104, and the sun gear S2 without making the members complicated, and it is possible to make the automatic transmission 1₁₀ for a vehicle more compact.

In addition, because the planetary gear DP includes the sun gear S1, for which the rotation is normally held stationary with respect to the case 4, a carrier CR1 that supports the pinion gear P1 and the pinion gear P2 so as to be freely rotatable and normally links to the output shaft 12, and a ring gear R1 that meshes with the pinion gear P2 and outputs a reduced speed rotation, it is possible to output a reduced speed rotation that reduces the input rotation of the input shaft 12 from the ring gear R1.

In addition, because the planetary gear unit PU is a Ravigneaux-type planetary gear unit PU that includes the sun gear S2, the sun gear S3, the short pinion P3 that meshes with the sun gear S3, the long pinion P4 that meshes with the sun gear S2 and meshes with the short pinion P3, the carrier CR2 that freely rotatably supports the short pinion P3 and the long pinion P4, and the ring gear R3 that meshes with the long pinion P4, it is possible to prevent the rotation of each of the rotating elements from becoming high and it is possible to obtain advantageous gear ratios while enabling the linking of each of the rotating elements of the planetary gear unit PU and the output side members of each of the clutches and brakes without making the members complicated.

In addition, the first forward speed can be established by engaging the first clutch C-1 and locking the second brake B-2; the second forward speed can be established by engaging the first clutch C-1 and locking the first brake B-1; the third forward speed can be established by engaging the first clutch C-1 and the third clutch C-3; the fourth forward speed can be established by engaging the first clutch C-1 and the fourth clutch C-4; the fifth forward speed can be established by engaging the first clutch C-1 and the second clutch C-2; the sixth forward speed can be established by engaging the second clutch C-2 and the fourth clutch C-4; the seventh forward speed can be established by engaging the second clutch C-2 and the third clutch C-3; the eighth forward speed can be established by engaging the second clutch C-2 and locking the first brake B-1; and reverse speeds can be established by engaging the third clutch C-3 or the fourth clutch C-4 and locking the second brake B-2.

In addition, in a velocity diagram in which the respective speed of the sun gear S2, the sun gear S3, the carrier CR2, and the ring gear R3 of the planetary gear unit PU are shown on the ordinates, and the corresponding gear ratios of the sun gear S2, the sun gear S3, and carrier CR2, and the ring gear R3 are shown on the abscissa, a structure becomes possible in which the sun gear S2 is positioned at the farthest end in the horizontal direction and in sequence the carrier CR2, the ring gear R3 that is linked to the counter gear 15, and the sun gear S3 are associated.

### Eleventh Embodiment

Next, an eleventh embodiment, in which a portion of the first through tenth embodiments has been modified, will be explained with reference to FIG. 16. FIG. 16 is a cross-sectional view showing the automatic transmission 1₁₁ according to the eleventh embodiment.

First, with reference to FIG. 16, the schematic structure of the overall automatic transmission 1₁₁ according to the eleventh embodiment, and in particular, the relative positional relationships of each of the constituent elements, will be briefly explained.

As shown in FIG. 16, the automatic transmission 1₁₁ is provided with a speed change mechanism 2₁₁ in the transmission case 3. In the transmission case 3, the planetary gear unit PU is disposed above the input shaft 12, the in sequence from the left side, the second clutch C-2, the first clutch C-1, the planetary gear DP, the fourth clutch C-4, and the third clutch C-3 are disposed in an axial direction on the left side of the planetary gear unit PU. At the same time, the counter gear 15 and the first brake B-1 are disposed in an axial direction on the right side of the planetary gear unit PU. In addition, the second brake B-2 is disposed on the outer circumferential side of the planetary gear unit PU.

In more detail, inside the transmission case 3 on the left side, that is, farther to the left side than the planetary gear unit PU, above the intermediate shaft 13, in sequence from the left, the friction plates 31 of the second clutch C-2, the friction plates 21 of the first clutch C-1, and the friction plates 41 of the third clutch C-3 are disposed at a relatively outer radial side inside the transmission case 3, and the friction plates 51 of the fourth clutch C-4 are disposed on the inner circumferential side of the friction plates 41 of the third clutch C-3.

In addition, in the transmission case 3, the boss portion 3b is linked to the inner circumferential portion of the side wall portion 3a, and the hydraulic servo 30 of the second clutch C-2 and the hydraulic servo 20 of the first clutch C-1 are disposed above the boss portion 3b. In addition, the planetary gear DP is disposed on the inner diameter side of the friction plates 21, and the hydraulic servo 50 of the fourth clutch C-4 is disposed adjacent to the right side of the planetary gear DP. In addition, the hydraulic servo 40 of the third clutch C-3 is disposed on the right side of the hydraulic servo 50 of the fourth clutch C-4. Specifically, on the left side of the transmission case 3, in sequence above the boss portion 3b (in sequence from the base side of the boss portion 3b towards the right side in an axial direction), the hydraulic servo 30, the hydraulic servo 20, and the planetary gear DP are disposed, and the hydraulic servo 50 and the hydraulic servo 40 are disposed above the intermediate shaft 13.

Furthermore, the flange-shaped support wall (center support member) 120 is disposed by being fastened to the inner circumferential surface of the transmission case 3 on the left side of the hydraulic servo 40 of the third clutch C-3, and on the inner circumferential side of the support wall 120, the counter gear 15, which is connected to the ring gear R3 of the planetary gear unit PU to be described below, is disposed so as to be freely rotatable on this support wall 120 via the ball bearing assembly 121.

At the same time, the friction plates 71 of the second brake B-2 and the hydraulic servo 70 of the second brake B-2 are disposed on an outer circumferential side of the planetary gear unit PU, the counter gear 15, which is supported so as to be freely rotatable on the support wall 120, is disposed on the right side of the transmission case 3 in the figure, that is, on the right side of the planetary gear unit PU, and furthermore, the friction plates 61 of the first brake B-1 and the hydraulic servo 60 of the first brake B-1 are disposed on the right side of this support wall 120.

In this manner, the hydraulic servo 30 of the second clutch C-2 and the hydraulic servo 20 of the first clutch C-1 are disposed in an axial direction on a side of the planetary gear DP that is opposite to the planetary gear unit PU, the hydraulic servo 50 of the fourth clutch C-4 and the hydraulic servo 40 of the third clutch C-3 are disposed in an axial direction between the planetary gear DP and the planetary gear unit PU, and the counter gear 15 and the hydraulic servo 60 of the first brake B-1 are disposed in an axial direction on a side of the planetary gear unit PU that is opposite to the planetary gear DP.

Next, the structure of the inside of the transmission case 3 will be explained in detail with reference to FIG. 16. Note that each of the oil duct structures will be explained together thereafter.

The planetary gear DP, which is disposed inside the transmission case 3, is provided with a planetary gear DP, a sun gear S1, a carrier CR1, and a ring gear R1. Among these, the sun gear S1 is fastened so as to be held stationary to the boss portion 3b that is linked to the side wall portion 3a as described above. In addition, the carrier CR1 has a two carrier plates, one on the right and one on the left, and supports the pinions P1 and P2 so as to be able to be freely rotatable. These pinions P1 and P2 mesh with each other, and at the same time, the former pinion P1 meshes with the sun gear S1 and the latter pinion P2 meshes with the ring gear R1. The right-side carrier plate is connected to the intermediate shaft 13, and the left-side carrier plate is connected to the clutch drum 32 that spline engages the outer friction plates among the friction plates 31 of the second clutch C-2. The inner friction plates among the friction plates 21 of the first clutch C-1 are spline engaged to the outer circumferential surface of the ring gear R1. In addition, the hub member 113 is connected to the right side of the ring gear R1, and the inner friction plates among the friction plates 41 of the third clutch C-3 are spline engaged to the hub member 113.

The first clutch C-1 is disposed on the boss portion 3b via the inner diameter portion of the clutch drum 32 of the second clutch C-2 on the right side of the planetary gear DP described above. The first clutch C-1 is provided with friction plates 21 and a hydraulic servo 20 that separates these friction plates 21. This hydraulic servo 20 includes a clutch drum 22, a piston member 23, a cancel plate 24, and a return spring 25, and these form the oil chamber 26 and the cancel oil chamber 27. The inner diameter portion of the clutch drum 22 is disposed on the outer circumferential side of the inner diameter portion of the clutch drum 32 of the second clutch C-2, and the outer friction plates of the friction plates 21 are spline engaged to the inner circumferential surface of the outer diameter portion of the clutch drum 22. At the same time, the distal end of the outer diameter portion is connected to the transfer member 102 that links to the sun gear S3 of the planetary gear unit PU, which will be described below. In addition, the inner friction plates among the friction plates 21 are spline engaged to the outer circumferential side of the ring gear R1. The piston member 23 is disposed so as to be able to move in an axial direction toward the right side of the clutch drum 22, and an oil-tight oil chamber 26 is formed in the space between the piston 23 the clutch drum 22 by the seal rings a1 and a2. Furthermore, the cancel plate 24 is prevented from moving toward the right side by a snap ring 29 that is fit on the clutch drum 22 described above. A return spring 25 is compressed between the cancel plate 24 and the piston 23 that is disposed at the left side thereof, and an oil-tight cancel oil chamber 27 is formed by the sealing rings a4 and a6.

The second clutch C-2 is disposed on the left side of the first clutch C-1 as described above, and is disposed above the boss portion 3b. The second clutch C-2 is provided with friction plates 31 and a hydraulic servo 30 that separates these friction plates 31. This hydraulic servo 30 includes a cutch drum 32, a piston member 33, a cancel plate 34, and a return spring 35, and these form the oil chamber 36 and the cancel oil chamber 37. The right side end portion of the inner diameter portion of the clutch drum 32 is linked to the carrier CR1 of the planetary gear DP, the hydraulic servo 20 of the first clutch C-1 is disposed on the outer circumferential portion on the right side of the clutch drum 32, and the hydraulic servo 30 is enclosed on the left side of the clutch drum 32. In addition, the outer friction plates among the friction plates 31 are spline engaged to the inner circumferential surface on the outer diameter portion of the clutch drum 22, and the inner friction plates among the friction plates 31 are spline engaged to the hub member 112. This hub member 112 passes through the outer circumferential side of the first clutch C-1, the planetary gear DP, the fourth clutch C-4, and the third clutch C-3, and then links to the transfer member 103 that is connected to the left side plate (that is, the planetary gear DP side) of the carrier CR2 of the planetary gear unit PU described below. The piston member 33 is disposed so as to be able to move in an axial direction on the right side of the clutch drum 32, and an oil-tight oil chamber 36 is formed in the space between the piston member 33 and the clutch drum 32 by the seal rings a1 and a2. Furthermore, the cancel plate 34 is prevented from moving toward the right by a snap ring 39 that is fit on the clutch drum 32 described above. A return spring 35 is compressed between the cancel plate 34 and the piston member 33 that is disposed on the right side of the cancel plate 34, and at the same time, an oil-tight cancel oil chamber 37 is formed by the seal rings a1 and a3.

Note that because the clutch drum 32 of this second clutch C-2 is connected to the input shaft 12 via the intermediate shaft 13 and the carrier CR1, that is, is rotated by an input rotation that is identical to the rotation of the input shaft 12, it is possible to provide an input rotation speed sensor on the outer circumferential side of the clutch drum 32, this sensor measuring the input rotation speed, and for example, in comparison to the case in which the input rotation speed sensor is provided at a position that enables the rotations of the input shaft 12 to be directly measured, it is possible to mount the input rotation count sensor easily.

The fourth clutch C-4 is on the right side of the planetary gear unit PU, is disposed on the inner circumferential side of the friction plates 41 of the third clutch C-3, and is provided with the friction plates 41 and a hydraulic servo 50 that separates these friction plates 51. The inner friction plates among the friction plates 51 are spline engaged to the hub member 114, and the hub member 114 is linked to the transfer member 101 that is linked to the sun gear S2 through the inner circumferential side of the hydraulic servo 40 of the third clutch C-3. In addition, the outer friction plates among the friction plates 51 are spline engaged to the inner circumferential side of the clutch drum 52, the clutch drum 52 shares the right side plate of the carrier CR1, and at the same time, the inner circumferential side thereof is linked to the intermediate shaft 13. This intermediate shaft 13 is spline engaged to the input shaft 12 described above, that is, the clutch drum 52 is linked to the inner shaft 12 via the intermediate shaft 13. In this manner, the fourth clutch C-4 can be directly engaged to and released from the input shaft 12 (intermediate shaft 13) and the sun gear S2, not, for example, via the carrier CR1 of the planetary gear DP.

The hydraulic servo 50 includes a clutch drum 52, a piston member 53, a cancel plate 54, a return spring 55, and these form the oil chamber 56 and the cancel oil chamber 57. As described above, the inner circumferential side of the clutch drum 52 is installed on the intermediate shaft 13, and at the same time, a portion of the outer circumferential surface of the intermediate shaft 13 is shared as a clutch drum, that is, a clutch drum that serves as a hydraulic servo 50 is formed by portions of the outer circumferential surface of the intermediate shaft 13 and the clutch drum 52. The piston member 53 is disposed in an axial direction so as to be able to move on the clutch drum 52, and oil-tight oil chamber 56 is formed between the piston member 53 and the clutch drum 52 by the seal rings a7 and a8. The piston member 53 opposes a portion of the outer circumferential side that is opposite to the front surface of the friction plates 51. Furthermore, the cancel plate 54 is prevented from moving toward the right side by a snap ring 59 that is fit on the outer circumferential surface of the inner diameter side of the clutch drum 52 described above, and a return spring 55 is compressed between the cancel plate 54 and the piston member 53 that is disposed on the left side thereof to form an oil-tight cancel oil chamber 57 by the seal rings a7 and a9.

The third clutch C-3 is on the right side of the fourth clutch C-4 is disposed above the intermediate shaft 13 via the transfer member 101, and is provided with friction plates 41 and a hydraulic servo 40 that separates these friction plates 41. The inner friction plates among the friction plates 41 are spline engaged to the outer circumferential surface of the hub member 113, which is linked to the ring gear R1 described above. In addition, the outer friction plates among the friction plates 41 are spline engaged to the inner circumferential side of the clutch drum 42 described below, and the clutch drum 42 is linked to the transfer member 101, which is linked to the sun gear S2 of the planetary gear unit PU.

The hydraulic servo 40 includes a clutch drum 42, a piston member 43, a cancel plate 44, and a return spring 45, and these form the oil chamber 46 and the cancel oil chamber 47. The inner circumferential side of the clutch drum 42 is installed on the transfer member 101, and a portion of the outer circumferential surface of the transfer member 101 is formed so as to act as a clutch drum, that is, the clutch drum that acts as a hydraulic servo 40 is formed by portions of the outer circumferential surface of the transfer member 101 and the clutch drum 42. The piston member 43 is disposed on the clutch drum 42 so as to be able to move in an axial direction, and an oil-tight oil chamber 46 is formed between the piston member 43 and the clutch drum 42 by the seal rings a10 and a11. A portion of the outer circumferential side of the piston member 43 is opposed to the front surface of the friction plates 41. Furthermore, the cancel plate 44 is prevented from moving toward the left by a snap ring 49 that is fit on the outer circumferential surface of the transfer member 101, and a return spring 45 is compressed between the cancel plate 44 and the piston member 43 that is disposed on the right side thereof, and an oil-tight cancel oil chamber 47 is formed by the seal rings a10 and a12.

The second brake B-2 is disposed on the outer diameter side of the ring gear R3 of the planetary gear unit PU. The second brake B-2 is provided with friction plates 71 and a hydraulic servo 70 that separates these friction plates 71. The outer friction plates among the friction plates 71 are spline engaged to the inner circumferential surface of the transmission case 3, and the inner friction plates are spline engaged to the hub member 117 that is linked to the transfer member 103 described above (specifically, linked to the carrier CR2 of the planetary gear unit PU).

The hydraulic servo 70 includes a cylinder member 72, a piston member 73, a cancel plate 74, and a return spring 75, and the oil chamber 76 is formed between the cylinder member 72 and the piston member 73. The piston member 73 is disposed so as to be able to move in an axial direction, and the left side end portion is opposed to the friction plates 71. The oil-tight oil chamber 76 is formed between the piston member 73 and the transmission case 3 by the two seal rings a15 and a16. Furthermore, the cancel plate 74 is prevented from moving toward the left side by a snap spring 79 that is fit on the inner circumferential surface of the transmission case 3.

The first brake B-1 is disposed so as to extend from the right side inner circumferential portion of the transmission case 3 up to the partition wall member 3c that separates the transmission case 3 and a housing case (not illustrated). The first brake B-1 is provided with friction plates 61 and a hydraulic servo 60 that separates these friction plates 61. The outer friction plates among the friction plates 61 are spline engaged to the inner circumferential surface of the transmission case 3, and the inner friction plates are spline engaged to the hub member 116 that is connected to the sun gear S2 of the planetary gear unit PU via the transfer member 104.

The hydraulic servo 60 includes a piston member 63, a cancel plate 64, and a return spring 65, and an oil chamber 66 is formed in the space between the piston member 63 and the cylinder portion that is formed by the partition wall member 3c. The piston member 63 is disposed so as to be able to move in an axial direction, and the left side end portion thereof opposes the friction plates 61. An oil-tight oil chamber 66 is formed between the piston member 63 and the partition wall portion 3c by the two seal rings a13 and a14. Furthermore, the cancel plate 64 is prevented from moving toward the left by a snap spring 69 that is fit on the partition wall member 3c.

The planetary gear unit PU includes a sun gear S2, a sun gear S3, a short pinion P3 that meshes with the sun gear S3, a long pinion P4 that meshes with the sun gear S2 and the short pinion P3, and a carrier CR2 that supports the short pinion P3 and the long pinion P4 by both side plates so as to be freely rotatable, and a ring gear R3 that meshes with the long pinion P4 to form what is termed a Ravigneaux planetary gear.

A transfer member 104 that passes through the inner circumferential side of the counter gear 15 described above is linked to the right side of the sun gear S2, and the sun gear S2 connects to the hub member 116 of the first brake B-1 via this transfer member 104. In addition, the transfer member 101 described above is linked to the left side of the sun gear S2, and the sun gear S2 is linked to the hub member 114 of the fourth clutch C-4 and the clutch member 101 of the third clutch C-3 via this transfer member 101. The transfer member 102 is linked to the left side of the sun gear S3, and the sun gear S3 is linked to the clutch drum 22 of the first clutch C-1 via this linking member 102.

The left side plate of the carrier CR2, that is, the plate on the planetary gear DP side, is linked to the transfer member 103, and the carrier CR2 is linked to the hub member 112 of the second clutch C-2 via this transfer member 103. In addition, the carrier CR2 is linked to the hub member 117 of the second brake B-2 via this transfer member 103. Additionally, the ring gear R3 is linked to the counter gear 15 via the transfer member 105. Note that the counter gear 15 meshes with the large diameter gear 82 that is linked with the counter shaft 81 as described above, and links to the left and right wheels 931 and 93r (that is, the drive wheels) via the counter shaft portion 80, the differential gear portion 90, and the like.

Next, the structure of each of the oil ducts and the supply of the working oil will be briefly explained. The oil duct c30 in the boss portion 3b communicates with the oil chamber 36 of the hydraulic servo 30 of the second clutch C-2, that is, the oil chamber 36 that is formed by sealing the space between the clutch drum 32 and the piston member 33 by the seal rings a1 and a2, by sealing the space between the clutch drum 32 and the boss portion 3b by the seal rings d1 and d2, and thereby working oil is supplied from the oil duct c30. Note that oil is supplied from an oil duct (not illustrated) to the cancel oil chamber 37 that is formed by sealing the space between the piston 33 and the cancel plate 34 by the seal rings a1 and a3.

In addition, the oil duct c20 in the boss portion 3b communicates with the oil chamber 26 of the hydraulic servo 20 of the first clutch C-1, that is, the oil chamber 26 that is formed by sealing the space between the clutch drum 22 and the piston member 23 by the seal rings a4 and a5, by sealing the space between the clutch drum 32 of the second clutch C-2 and the boss portion 3b by the seal rings d3 and d4 and by sealing the space between the clutch drum 32 and the clutch drum 22 by the seal rings d5 and d6. Thereby, the working oil is supplied from the oil duct c20. Note that oil is supplied from an oil duct (not illustrated) to the cancel oil chamber 27 that is formed by sealing the space between the piston member 23 and the cancel plate 24 by the seal rings a4 and a6.

In addition, the oil duct c50 in the boss portion 3d communicates via the oil duct c51 in the intermediate shaft 13, an oil duct in an axial direction (not illustrated), and the oil duct c53, with the oil chamber 56 of the hydraulic servo 50 of the fourth clutch C-4, that is, the oil chamber 56 formed by sealing the space between the clutch drum 52 and the piston member 53 by the sealing rings a7 and a8, by sealing the space between the boss portion 3b and the intermediate shaft 13 by the seal rings d9 and d10. Thereby, the working oil is supplied from the oil duct c53. Note that oil is supplied from an oil duct (not illustrated) to the cancel oil chamber 57 that is formed by sealing the space between the piston member 53 and the cancel plate 54 by the seal rings a7 and a9.

In addition, the oil duct c40 in the boss portion 3b communicates via the oil ducts c41, c42, and c43 in the intermediate shaft 13, with the oil chamber 46 of the hydraulic servo 40 of the third clutch C-3, that is, the oil chamber 46 formed by sealing the space between the clutch drum 42 and the piston member 43 by the seal rings a10 and a11, by sealing the space between the boss portion 3b and the intermediate shaft 13 by the seal rings d7 and d8 and by sealing the space between the intermediate shaft 13 and the transfer member 101 (that is, the clutch drum) by the seal rings d11 and d12. Thereby, working oil is supplied from the oil duct c43. Note that oil is supplied from an oil duct (not illustrated) to the cancel oil chamber 47 that is formed by sealing the space between the piston member 43 and the cancel plate 44 by the seal rings a10 and a12.

In addition, working oil is supplied from an oil duct of the partition wall portion 3c (not illustrated) to the oil chamber 66 of the hydraulic servo 60 of the first brake B-1, that is, the oil chamber 66 that is formed by sealing the space between the side wall portion 3c of the transmission case 3 and the piston member 63 by the seal rings a13 and a14.

In addition, working oil is supplied from an oil duct in the transmission case 3 (not illustrated) to the oil chamber 76 of the hydraulic servo 70 of the second brake B-2, that is, the oil chamber 76 that is formed by sealing the space between the cylinder member 72 and the piston member 73 by the seal rings a15 and a16.

In addition, an oil duct c80 is formed in an axial direction in the input shaft 12 and the intermediate shaft 13, and lubricating oil is supplied from an oil duct (not illustrated) in the boss portion 3b to the oil duct 80. A plurality of holes (not illustrated) are bored into the input shaft 12 and the intermediate shaft 13 in the radial direction from the oil duct 80, and the lubricating oil that is supplied to the oil duct c80 is supplied into the speed change mechanism 2₁₁ by being sprayed from these holes.

In addition, an oil duct c90 is formed in the input shaft 12 in an axial direction. The oil duct 90 communicates with the lock-up clutch 10 described above via an oil duct (not illustrated), and when the working oil is supplied to the oil duct c90 from a hydraulic control apparatus (not illustrated) via an oil duct (not illustrated) in the partition wall member 3c, this working oil is supplied up to the friction plates of the lock-up clutch 10, the friction plates are pressed, and thereby the lock-up clutch 10 is engaged.

According to this type of automatic transmission 1₁₁ for a vehicle according to the present invention explained above, it is possible to eliminate a member that encloses the planetary gear unit PU because the fourth clutch C-4 is disposed so as to be interposed on the transfer path that connects the space between input shaft 12 and the sun gear S2, the second clutch C-2 is disposed so as to be interposed on the transfer path that connects the space between the carrier CR1 and the carrier CR2, and the output side transfer member 103 of the second clutch C-2 links to the carrier CR2 in the planetary gear unit PU at the planetary gear DP side in an axial direction. Thereby, it is possible to make the automatic transmission 1₁₁ for a vehicle more compact in the radial direction. In addition, it is possible to shorten the transfer member, which requires a high rigidity, it is possible to reduce the weight, and it is possible to improve the controllability of an automatic transmission 11 for a vehicle. Furthermore, a structure is possible in which the supplied lubricating oil is readily discharged, and it is possible to ensure the cooling capacity/performance. In addition, it is possible to simplify the assembly of the automatic transmission 1₁₁ for a vehicle. Furthermore, the configuration of each of the clutches enables a structure in which a support wall 120 is erected and the working oil of a clutch is supplied from the support wall 120. Thus, it is possible to reduce the number of seal rings, to reduce the sliding resistance of the seal rings, and to improve the power transfer efficiency of the automatic transmission 1₁₁ for a vehicle.

In addition, because the hydraulic servo 50 of the fourth clutch C-4 is disposed in an axial direction between the planetary gear unit PU and the planetary gear DP and adjacent to the planetary gear DP, it is possible to use portions of the member that forms the carrier CR1 and the clutch drum 52 of the hydraulic servo 50 of the fourth clutch C-4 (that is, the clutch drum 52 and the side plate of the carrier CR1) in common, and it is possible to reduce the size and weight.

Furthermore, because the hydraulic servo 30 second clutch C-2 is disposed in an axial direction on the side of the planetary gear DP that is opposite to the planetary gear unit PU, it is possible to supply the working oil from the oil duct that is provided in the boss portion 3b that is linked to one end of the case 4 to the hydraulic servo 30 of the second clutch C-2. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₁₁ for a vehicle.

Furthermore, because the hydraulic servo 40 of the third clutch C-3 is disposed in an axial direction between the planetary gear unit PU and the planetary gear DP, in comparison to the case in which the hydraulic servo 40 of the third clutch C-3 is disposed in an axial direction on a side of the planetary gear DP that is opposite to the planetary gear unit PU, it is possible to shorten the distance between the third clutch C-3 and the planetary gear unit PU, and it is possible to shorten the output side transfer member of the third clutch C-3, which requires strength for transferring a high torque. Thereby, it is possible to reduce the weight, and it is possible to improve the controllability of the automatic transmission 1₁₁ for a vehicle.

Furthermore, because the hydraulic servo 20 of the first clutch C-1 is disposed in an axial direction on the side of the planetary gear DP that is opposite to the planetary gear unit PU, it is possible to supply the working oil to the hydraulic servo 20 of the first clutch C-1 from an oil duct that is provided inside the boss portion 3b that is linked to one end of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₁₁ for a vehicle.

In addition, because a first brake B-1 that freely locks the rotation of the sun gear S2 with respect to the case 4 is provided, the hydraulic servo 60 of the first brake B-1 is disposed in an axial direction on a side of counter gear 15 that is opposite to the planetary gear unit PU, and the locking force transfer member of the first brake B-1 is linked to the sun gear S2 by passing through the inner circumferential side of the counter gear 15, it is possible to link the locking force transfer member of the first brake B-1 and the sun gear S2 without making the members complicated, and it is possible to make the automatic transmission 1₁₁ for a vehicle more compact.

In the automatic transmission 1₁₁ for a vehicle according to the present invention as explained above, the transfer member 103 of the output side of the second clutch C-2 is linked to the carrier CR2 through the outer circumferential side of the transfer members 101, 102 of the output side of the third and first clutches C-3, C-1, the transfer member 101 of the output side of the fourth clutch C-4 and the third clutch C-3 is linked to the sun gear S2, and the transfer member 104 of the output side of the fourth clutch C-4 and the third clutch C-3, which rotate integrally therewith, are disposed on the inner circumferential side with respect to the transfer member 102 of the output side of the first clutch C-1. Thereby, the transfer member 101 of the output side of the fourth clutch C-4, which rotates faster than the transfer member 103 of the output side of the second clutch C-2, is further toward the inner circumferential side than the transfer member 102 of the output side of the first clutch C-1, which is on the inner circumferential side of the transfer member 103 of the output side of the second clutch C-2, and it is possible to make the diameter of the transfer member 101 of the output side of the fourth clutch C-4 smaller than the diameter of the transfer member 103 of the output side of the second clutch C-2, and it is possible to reduce the weight more than the case in which it is on the outer circumferential side. In addition, because the inertia is reduced in comparison to the case in which it is disposed on the outer circumferential side, it is possible to improve the controllability of the automatic transmission 1₁₁ for a vehicle.

In addition, the third and first clutches C-3, C-1 are disposed on the planetary gear DP side with respect to the planetary gear set, the transfer members 101, 102 of the output side of the third and first clutches C-3, C-1 are linked respectively to the sun gear S2 and the sun gear S3, the fourth clutch C-4 is disposed in an axial direction on a side of the planetary gear unit PU that is opposite to the planetary gear DP, the transfer member 101 of the output side of the fourth clutch C-4 is linked to the sun gear S2, the second clutch C-2 is disposed on the planetary gear DP side with respect to the planetary unit PU, and the transfer member 103 of the output side of the second clutch C-2, C-1 are linked to the carrier CR2 through the outer circumferential side of the transfer members 101, 102 of the output side of the third and first clutches C-3, C-1. Thereby, because the transfer member 101 of the output side of the fourth clutch C-4, which rotates faster than the transfer member of the output side of the second clutch C-2, is on the inner circumferential side, the diameter of the transfer member 101 of the output side of the fourth clutch C-4 can be made smaller than the diameter of the transfer member 103 of the output side of the second clutch C-2, and it is possible to reduce the weight more than the case in which it is disposed on the outer circumferential side. In addition, because it is possible to reduce the inertia in comparison to the case in which it is on the outside, it is possible to improve the controllability of the automatic transmission 1₁₁ for a vehicle.

Furthermore, because the transfer member of the input side of the fourth clutch C-4 is directly linked to the carrier CR1 and a portion of the carrier CR1 is formed as a portion of the hydraulic servo 50 of the fourth clutch C-4, it is possible to use portions that form the carrier CR1 and the hydraulic servo 50 of the fourth clutch C-4 (that is, portions of the clutch drum 52 and the side plate of the carrier CR1) in common, and it is possible to reduce the weight and size.

In addition, because there is a boss portion 3b that is linked to the side wall 3a of the case 4 and holds the sun gear S 1 stationary, the transfer member of the input side of the second clutch C-2 is linked to the carrier CR1, a portion of the transfer member of the input side of the second clutch C-2 is formed as a portion of the clutch drum 32 of the hydraulic servo 30 of the second clutch C-2, the hydraulic servo 30 is disposed above the boss portion 3b in an axial direction between the planetary gear DP and the side wall 3a, it is possible to supply the working oil to the hydraulic servo 30 of the second clutch C-2 from an oil duct c30 that is provided in the boss portion 3b. Thus, in comparison to the case in which, for example, the hydraulic servo 30 of the second clutch C-2 is disposed above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₁₁ for a vehicle.

In addition, because the hub member 111 of the first clutch C-1 is linked to the ring gear R1, the transfer member 102 of the output side of the first clutch C-1 is linked to the sun gear S3, a portion of the transfer member 102 of the output side of the first clutch C-1 is formed as the clutch drum 22 of the hydraulic servo 20 of the first clutch C-1, and the hydraulic servo 20 is disposed above the boss portion 3b in an axial direction between the planetary gear DP and the hydraulic servo 20 of the first clutch C-1, it is possible to supply the working oil to the hydraulic servo 20 of the first clutch C-1 from an oil duct c20 that is provided in the boss portion 3b that is linked to the side wall 3a of the case 4. Thus, in comparison to the case in which, for example, the hydraulic servo 20 of the first clutch C-1 is disposed above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₁₁ for a vehicle.

In addition, because a counter gear 15 is provided that links to the ring gear R3 of the planetary gear unit PU, the counter gear 15 is disposed in an axial direction on a side of the planetary gear unit PU that is opposite to the planetary gear DP, the second brake B-2 is a multi-plate brake that is formed from a plurality of friction plates 71, and the multi-plate brakes are disposed on the outer circumferential side of the planetary gear unit PU, in comparison to the case in which, for example, the counter gear 15 is between the planetary gear unit PU and the planetary gear DP, the hub member 117 of the second brake B-2 can use the transfer member 103 of the output side of the second clutch C-2 in common to link to the carrier CR2, and, for example, in comparison to the case in which, for example, a band brake is disposed on the outer circumferential side of the transfer member 103 of the output side of the second clutch C-2, it is possible to dispose the multi-plate brakes in the space of the outer circumferential side of the planetary gear unit PU, it is possible to maintain compactness, and it is possible to make the brakes multi-plate.

Furthermore, because a counter shaft 81 is provided that is disposed parallel to the input shaft 12 and linked via the counter gear 15 that is linked to the ring gear R3, and the output rotation from the ring gear R3 is transferred to the counter shaft 81 via the counter gear 15, it is possible to use the automatic transmission 1₁₁ for a vehicle advantageously in an FF-type vehicle.

In addition, because the counter gear 15 is disposed in an axial direction on a side of the planetary gear unit PU that is opposite to the planetary gear DP and is supported by the support portion 120a that is linked to the support wall 120 that extends from the case 4, it is possible to shorten the distance between the planetary gear DP and the planetary gear unit PU, and it is possible to shorten the output side member 101 of the third clutch C-3 and the output side member 102 of the first clutch C-1, which must in particular be strong in order to transfer a high torque. Thereby, it is possible to reduce the weight and it is possible to improve the controllability of the automatic transmission 1₁₁ for a vehicle.

In addition, because the carrier CR1 is linked to the input shaft 12 on the planetary gear unit PU side with respect to the planetary gear DP and linked to the clutch drum 32, which is the transfer member of the input side of the second clutch C-2, at a side of the planetary gear DP that is opposite to the planetary gear unit PU in an axial direction, it is possible to link the carrier CR1, the transfer member 112 of the input side of the second clutch C-2, and the input shaft 12 without making the members complicated, and it is possible to make the automatic transmission 1₁₁ for a vehicle more compact.

In addition, because the hub member 116 of the first brake B-1 and the transfer member 104 that is linked thereto are linked in an axial direction to the sun gear S2 at a side of the planetary gear unit PU that is opposite to the planetary gear DP, it is possible to link the hub member 116 of the first brake B-1, the transfer member 104, and the sun gear S2 without making the members complicated, and it is possible to make the automatic transmission 1₁₁ for a vehicle more compact.

In addition, because the planetary gear DP includes a sun gear S 1 for which the rotation is normally held stationary with respect to the case 4, a carrier CR1 that freely rotatably supports the pinion gear P1 and the pinion gear P2 and is normally linked to the input shaft 12, and a ring gear R1 that meshes with the pinion gear P2 and outputs a reduced speed rotation, it is possible to output a reduced speed rotation that reduces the input rotation of the input shaft 12 from the ring gear R1.

In addition, because the planetary gear unit PU is a Ravigneaux-type planetary gear unit PU that includes a sun gear S2, a sun gear S3, short pinion P3 that meshes with the sun gear S3, a long pinion P4 that meshes with the sun gear S2 and meshes with the short pinion P3, a carrier CR2 that freely rotatably supports the short pinion P3 and the long pinion P4, and the ring gear R3 that meshes with the long pinion P4, it is possible to prevent rotation of each of the rotating members from becoming high, and it is possible to obtain favorable gear ratios while enabling each of the rotating elements of the planetary gear unit PU and the output side members of each of the clutches and brakes to be linked without making these members complicated.

In addition, the first forward speed can be established by engaging the first clutch C-1 and locking the second brake B-2; the second forward speed can be established by engaging the first clutch C-1 and locking the first brake B-1; the third forward speed can be established by engaging the first clutch C-1 and the third clutch C-3; the fourth forward speed can be established by engaging the first clutch C-1 and the fourth clutch C-4; the fifth forward speed can be established by engaging the first clutch C-1 and the second clutch C-2; the sixth forward speed can be established by engaging the second clutch C-2 and the fourth clutch C-4; the seventh forward speed can be established by engaging the second clutch C-2 and the third clutch C-3; the eighth forward speed can be established by engaging the second clutch C-2 and locking the first brake B-1; and reverse speeds can be established by engaging the third clutch C-3 or the fourth clutch C-4 and locking the second brake B-2.

In addition, in a velocity diagram in which the respective speeds of the sun gear S2, the sun gear S3, the carrier CR2, and the ring gear R3 of the planetary gear unit PU are shown on the ordinates, and the corresponding gear ratios of the sun gear S2, the sun gear S3, the carrier CR2, and the ring gear R3 are shown in the abscissa, a structure becomes possible in which the sun gear S2 is positioned at the farthest end in the horizontal direction and in sequence the carrier CR2, the ring gear R3 that is linked to the counter gear 15, and the sun gear S3 are associated.

Note that the automatic transmission 1₁₁ for a vehicle according to the eleventh embodiment can form an automatic transmission 1₁₃ for a vehicle according to a thirteenth embodiment described below by inverting the speed change mechanism 2₁₁ substantially as-is in the left-right direction (an axial direction).

### Twelfth Embodiment

Next, a twelfth embodiment, in which a portion of the eleventh embodiment has been modified, will be explained with reference to FIG. 17. FIG. 17 is a cross-sectional view of the automatic transmission 1₁₂ according to the twelfth embodiment. Note that in the twelfth embodiment explained below, only the portions that differ from the automatic transmission 1₁₁ according to the eleventh embodiment will be explained, and the other parts are substantially identical. Thus, the explanation thereof will be omitted.

The automatic transmission 1₁₂ according to the twelfth embodiment is structured such that, in contrast to the automatic transmission 1₁₁ according to the eleventh embodiment, the hydraulic servo 50 of the fourth clutch C-4 is disposed in an axial direction on a side of the planetary gear unit PU that is opposite to the planetary gear unit PU, and specifically, the hydraulic servo 50 of the fourth clutch C-4 is disposed adjacent to the support wall 120 farther to the right than the counter gear 15, and disposed above the boss portion 3d that extends from an inner circumferential side of the partition wall 3c.

Specifically, in the automatic transmission 1₁₂ according to the twelfth embodiment, the hydraulic servo 30 of the second clutch C-2 and the hydraulic servo 20 of the first clutch C-1 are disposed in an axial direction on a side of the planetary gear DP that is opposite to the planetary gear unit PU, the hydraulic servo 40 of the third clutch C-3 is disposed in an axial direction between the planetary gear DP and the planetary gear unit PU, and the counter gear 15, the hydraulic servo 50 of the fourth clutch C-4, and the hydraulic servo 60 of the first brake B-1 are disposed in an axial direction on a side of the planetary gear unit PU that is opposite to the planetary gear DP.

According to this type of automatic transmission 1₁₂ described above, because the fourth clutch C-4 is disposed so as to be interposed on the transfer path that connects the space between the input shaft 12 and the sun gear S2, the second clutch C-2 is disposed so as to be interposed on the transfer path that connects the space between carrier CR1 and the carrier CR2, and the output side transfer member 103 of the second clutch C-2 is linked to the carrier CR2 in the planetary gear unit PU at the planetary gear DP side in an axial direction, it is possible to eliminate a member that encloses the planetary gear unit PU. Thereby, the automatic transmission 1₁₂ for a vehicle can be made more compact in the radial direction. In addition, it is possible to shorten the transfer member that requires a high rigidity, it is possible to reduce the weight, and it is possible to improve the controllability of the automatic transmission 1₇ for a vehicle. Furthermore, a structure becomes possible in which the supplied lubricating oil is readily discharged, and the cooling performance can be ensured. In addition, the assembly of the automatic transmission 1₁₂ for a vehicle can be simplified. Furthermore, because a structure becomes possible in which a support wall 120 can be erected and the working oil for the clutches can be supplied from this support wall 120 due to the configuration of each of the clutches, it is possible to reduce the number of seal rings, to reduce the sliding resistance of the seal rings, and to improve the power transfer efficiency of the automatic transmission 1₁₂ for a vehicle.

In addition, because the hydraulic servo 30 of the second clutch C-2 is disposed in an axial direction on a side of the planetary gear DP that is opposite to the planetary gear unit PU, it is possible to supply the working oil to the hydraulic servo 30 of the second clutch C-2 from an oil duct provided in the boss portion 3b that extends from one end of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₁₂ for a vehicle.

Furthermore, because the hydraulic servo 50 of the fourth clutch C-4 is disposed in an axial direction on a side of the planetary gear unit PU that is opposite to the planetary gear DP, because it is possible to dispose the friction plates 51 of the fourth clutch C-4 on a relatively outer circumferential side, it is possible to make the surface area of the friction plates 51 large, it is possible to ensure a transferable torque volume, and it is possible to reduce the number of friction plates 51. Furthermore, it is possible to supply working oil to the hydraulic servo 50 of the fourth clutch C-4 from an oil duct provided in the boss portion 3d that extends from one end of the case 4. Thereby, in comparison to supplying the working oil from an oil duct provided in the input shaft 12, it is possible to reduce the number of seal rings, to reduce the sliding resistance of the seal rings, and to improve the power transfer efficiency of the automatic transmission 1₁₂ for a vehicle.

In addition, because the hydraulic servo 40 of the third clutch C-3 is disposed in an axial direction between the planetary gear unit PU and the planetary gear DP, in comparison to the case in which the hydraulic servo 40 of the third clutch C-3 is disposed in an axial direction on a side of the planetary gear DP that is opposite to the planetary gear unit PU, it is possible to shorten the distance between the third clutch C-3 and the planetary gear unit PU, and it is possible to shorten the output side transfer member 101 of the third clutch C-3, which requires strength for transferring a high torque. Thereby, it is possible to reduce the weight and it is possible to improve the controllability as an automatic transmission 1₁₂ for a vehicle.

In addition, because the hydraulic servo 20 of the first clutch C-1 is disposed in an axial direction on a side of the planetary gear DP that is opposite to the planetary gear unit PU, it is possible to supply the working oil to the hydraulic servo 20 of the first clutch C-1 from an oil duct that is provided in the boss portion 3b that is linked to one end of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₁₂ for a vehicle.

In addition, a first brake B-1 that freely locks the rotation of the sun gear S2 with respect to the case 4 is provided, the hydraulic servo 60 of the first brake B-1 is disposed in an axial direction on a side of the counter gear 15 that is opposite to the planetary gear DP, and the locking force transfer member of the first brake B-1 is linked to the sun gear S2 through the inner circumferential side. Therefore, it is possible to link the locking force transfer member of the first brake B-1 and the sun gear S2 without making the members complicated, and it is possible to make the automatic transmission 13 for a vehicle more compact.

In the automatic transmission 1₁₂ for a vehicle according to the present invention as explained above, the transfer member 103 of the output side of the second clutch C-2 is linked to the carrier CR2 through the outer circumferential side of the transfer members 101, 102 of the output side of the third and first clutches C-3, C-1, the transfer member 104 of the output side of the fourth clutch C-4 and the transfer member 101 of the output side of the third clutch C-3 are linked to the sun gear S2, and the transfer member 104 of the output side of the fourth clutch C-4, the transfer member 101 of the output side of third clutch C-3, and the sun gear S2, which rotate integrally therewith, are disposed on the inner circumferential side with respect to the transfer member 102 of the output side of the first clutch C-1. Therefore, the transfer member 104 of the output side of the fourth clutch C-4, which rotates faster than the transfer member 103 of the output side of the second clutch C-2, is further toward the inner circumferential side than the transfer member 102 of the output side of the first clutch C-1, which is on the inner circumferential side of the transfer member 103 of the output side of the second clutch C-2. Thus, it is possible to make the diameter of the transfer member 104 of the output side of the fourth clutch C-4 smaller than the diameter of the transfer member 103 of the output side of the second clutch C-2, and it is possible to reduce the weight more than the case in which it is on the outer circumferential side. In addition, because the inertia is reduced in comparison to the case in which it is disposed on the outer circumferential side, it is possible to improve the controllability of the automatic transmission 1₁₂ for a vehicle.

In addition, because there is a boss portion 3b that is linked to the side wall 3a of the case 4 and holds the sun gear S 1 stationary, the transfer member of the input side of the second clutch C-2 is linked to the carrier CR1, a portion of the transfer member of the input side of the second clutch C-2 is formed as a portion of a clutch drum 32 of the hydraulic servo 30 of the second clutch C-2, the hydraulic servo 30 is disposed above the boss portion 3b in an axial direction between the planetary gear DP and the side wall 3a, it is possible to supply the working oil to the hydraulic servo 30 of the second clutch C-2 from an oil duct c30 that is provided in the boss portion 3b. Thus, in comparison to the case in which, for example, the hydraulic servo 30 of the second clutch C-2 is disposed above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₁₂ for a vehicle.

In addition, because the hub member 111 of the first clutch C-1 is linked to the ring gear R1, the transfer member 102 of the output side of the first clutch C-1 is linked to the sun gear S3, a portion of the transfer member 102 of the output side of the first clutch C-1 is formed as the clutch drum 22 of the hydraulic servo 20 of the first clutch C-1, and the hydraulic servo 20 is disposed above the boss portion 3b in an axial direction between the planetary gear DP and the hydraulic servo 20 of the first clutch C-1, it is possible to supply the working oil to the hydraulic servo 20 of the first clutch C-1 from an oil duct c20 that is provided in the boss portion 3b that is linked to the side wall 3a of the case 4. Thus, in comparison to the case in which, for example, the hydraulic servo 20 of the first clutch C-1 is disposed above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₁₂ for a vehicle.

In addition, because a counter gear 15 that links to the ring gear R3 of the planetary gear unit PU is provided, the counter gear 15 is disposed in an axial direction on a side of the planetary gear unit PU that is opposite to the planetary gear DP, the second brake B-2 is a multi-plate brake that is formed from a plurality of friction plates 71, and the multi-plate brakes are disposed on the outer circumferential side of the planetary gear unit PU, in comparison to the case in which, for example, the counter gear 15 is between the planetary gear unit PU and the planetary gear DP, the hub member 117 of the second brake B-2 can use the transfer member 103 of the output side of the second clutch C-2 in common to link to the carrier CR2, and, for example, in comparison to the case in which a band brake is disposed on the outer circumferential side of the transfer member 103 of the output side of the second clutch C-2, it is possible to dispose the multi-plate brakes in the space of the outer circumferential side of the planetary gear unit PU, it is possible to maintain compactness, and it is possible to make the brakes multi-plate.

Furthermore, because a counter shaft 81 is provided that is disposed parallel to the input shaft 12 and linked via the counter gear 15 that is linked to the ring gear R3, and the output rotation from the ring gear R3 is transferred to the counter shaft 81 via the counter gear 15, it is possible to use the automatic transmission 1₁₂ for a vehicle advantageously in an FF-type vehicle.

In addition, because the counter gear 15 is disposed in an axial direction on a side of the planetary gear unit PU that is opposite to the planetary gear DP and is supported by the support portion 120a that is linked to the support wall 120 that extends from the case 4, it is possible to shorten the distance between the planetary gear DP and the planetary gear unit PU, and it is possible to shorten the output side member 101 of the third clutch C-3 and the output side member 102 of the first clutch C-1, which must in particular be strong in order to transfer a high torque. Thereby, it is possible to reduce the weight and it is possible to improve the controllability of the automatic transmission 1₁₂ for a vehicle.

In addition, because the carrier CR1 is linked to the input shaft 12 on the planetary gear unit PU side with respect to the planetary gear DP and linked to the hub member 112, which is the transfer member of the input side of the second clutch C-2, at a side of the planetary gear DP that is opposite to the planetary gear unit PU in an axial direction, it is possible to link the carrier CR1, the transfer member 112 of the input side of the second clutch C-2, and the input shaft 12 without making the members complicated, and it is possible to make the automatic transmission 1₁₂ for a vehicle more compact.

In addition, because the hub member 116 of the first brake B-1 and the transfer member 104 that is linked thereto are linked in an axial direction to the sun gear S2 at a side of the planetary gear unit PU that is opposite to the planetary gear DP, it is possible to link the hub member 116 of the first brake B-1, the transfer member 104, and the sun gear S2 without making the members complicated, and it is possible to make the automatic transmission 1₁₂ for a vehicle more compact.

In addition, because the planetary gear DP includes a sun gear S 1 for which the rotation is normally held stationary with respect to the case 4, a carrier CR1 that freely rotatably supports the pinion gear P1 and the pinion gear P2 and is normally linked to the input shaft 12, and a ring gear R1 that meshes with the pinion gear P2 and outputs a reduced speed rotation, it is possible to output a reduced speed rotation that reduces the input rotation of the input shaft 12 from the ring gear R1.

In addition, because the planetary gear unit PU is a Ravigneaux-type planetary gear unit PU that includes a sun gear S2, a sun gear S3, short pinion P3 that meshes with the sun gear S3, a long pinion P4 that meshes with the sun gear S2 and meshes with the short pinion P3, a carrier CR2 that freely rotatably supports the short pinion P3 and the long pinion P4, and the ring gear R3 that meshes with the long pinion P4, it is possible to prevent rotation of each of the rotating members from becoming high and it is possible to obtain favorable gear ratios while enabling each of the rotating elements of the planetary gear unit PU and the output side members of each of the clutches and brakes to be linked without making these members complicated.

In addition, the first forward speed can be established by engaging the first clutch C-1 and locking the second brake B-2; the second forward speed can be established by engaging the first clutch C-1 and locking the first brake B-1; the third forward speed can be established by engaging the first clutch C-1 and the third clutch C-3; the fourth forward speed can be established by engaging the first clutch C-1 and the fourth clutch C-4; the fifth forward speed can be established by engaging the first clutch C-1 and the second clutch C-2; the sixth forward speed can be established by engaging the second clutch C-2 and the fourth clutch C-4; the seventh forward speed can be established by engaging the second clutch C-2 and the third clutch C-3; the eighth forward speed can be established by engaging the second clutch C-2 and locking the first brake B-1; and reverse speeds can be established by engaging the third clutch C-3 or the fourth clutch C-4 and locking the second brake B-2.

In addition, in a velocity diagram in which the respective speeds of the sun gear S2, the sun gear S3, the carrier CR2, and the ring gear R3 of the planetary gear unit PU are shown on the ordinates, and the corresponding gear ratios of the sun gear S2, the sun gear S3, the carrier CR2, and the ring gear R3 are shown in the abscissa, a structure becomes possible in which the sun gear S2 is positioned at the farthest end in the horizontal direction and in sequence the carrier CR2, the ring gear R3 that is linked to the counter gear 15, and the sun gear S3 are associated.

### Thirteenth Embodiment

Next, the thirteenth embodiment, in which a portion of the eleventh embodiment is modified, will be explained with reference to FIG. 18. FIG. 18 is a cross-sectional view showing the automatic transmission 1₁₃ according to the thirteenth embodiment. Note that in the thirteenth embodiment explained below, portions having a structure that is identical to the automatic transmission 1₁₁ according to the eleventh embodiment are denoted by identical reference numerals, and the explanations thereof are omitted.

The automatic transmission 1₁₃ according to the thirteenth embodiment is structured, in contrast to the automatic transmission 1₁₁ according to the eleventh embodiment, such that the input shaft 12 and the intermediate shaft 13 remain as-is (that is, the direction in which the engine is disposed as-is), and the disposition of the first through fourth clutches C-1 to C-4, the first and second brakes B-1 and B-2, the planetary gear DP, the planetary gear unit PU, the counter gear 15 and the like is substantially bilaterally (an axial direction) inverted, that is, the speed change mechanism 2₁₃ is structured by substantially bilaterally inverting (in an axial direction) the speed change mechanism 2₁₁.

That is, in the automatic transmission 1₁₃, the hydraulic servo 30 of the second clutch C-2 and the hydraulic servo 20 of the first clutch C-1 are disposed in an axial direction on the side of the planetary gear DP that is opposite to the planetary gear unit PU, the hydraulic servo 50 of the fourth clutch C-4 and the hydraulic servo 40 of the third clutch C-3 are disposed in an axial direction between the planetary gear DP and the planetary gear unit PU, and the counter gear 15 and the hydraulic servo 60 of the first brake B-1 are disposed in an axial direction on a side of the planetary gear unit PU that is opposite to the planetary gear DP.

According to this type of automatic transmission 1₁₃ described above, because the fourth clutch C-4 is disposed so as to be interposed on the transfer path that connects the space between the input shaft 12 and the sun gear S2, the second clutch C-2 is disposed so as to be interposed on the transfer path that connects the space between the carrier CR1 and the carrier CR2, and the output side transfer member 103 of the second clutch C-2 is linked to the carrier CR2 in the planetary gear unit PU at the planetary gear DP side in an axial direction, it is possible to eliminate a member that encloses the planetary gear unit PU. Thereby, the automatic transmission 1₁₃ for a vehicle can be made more compact in the radial direction. In addition, it is possible to shorten the transfer member that requires a high rigidity, it is possible to reduce the weight, and it is possible to improve the controllability of the automatic transmission 1₁₃ for a vehicle. Furthermore, a structure becomes possible in which the supplied lubricating oil is readily discharged, and the cooling performance can be ensured. In addition, the assembly of the automatic transmission 1₁₃ for a vehicle can be simplified. Furthermore, because a structure becomes possible in which a support wall 120 can be erected and the working oil for the clutches can be supplied from this support wall 120 due to the configuration of each of the clutches, it is possible to reduce the number of seal rings, to reduce the sliding resistance of the seal rings, and to improve the power transfer efficiency of the automatic transmission 1₁₃ for a vehicle.

In addition, because the hydraulic servo 50 of the fourth clutch C-4 is disposed in an axial direction between the planetary gear unit PU and the planetary gear DP and adjacent to the planetary gear DP, it is possible to use portions of the members that forms the carrier CR1 and the clutch drum 52 of the hydraulic servo 50 of the fourth clutch C-4 (that is, the clutch drum 52 and the side plate of the carrier CR1) in common, and it is possible to reduce the size and weight.

Furthermore, because the hydraulic servo 30 of the second clutch C-2 is disposed in an axial direction on a side of the planetary gear DP that is opposite to the planetary gear unit PU, it is possible to supply the working oil to the hydraulic servo 30 of the second clutch C-2 from an oil duct provided in the boss portion 3b that is linked to one end of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₁₃ for a vehicle.

In addition, because the hydraulic servo 40 of the third clutch C-3 is disposed in an axial direction between the planetary gear unit PU and the planetary gear DP, in comparison to the case in which the hydraulic servo 40 of the third clutch C-3 is disposed in an axial direction on a side of the planetary gear DP that is opposite to the planetary gear unit PU, it is possible to shorten the distance between the third clutch C-3 and the planetary gear unit PU, and it is possible to shorten the output side transfer member 101 of the third clutch C-3, which must be strong in order to transfer high torque. Thereby, it is possible to reduce the weight and it is possible to improve the controllability of the automatic transmission 1₁₃ for a vehicle.

Furthermore, because the hydraulic servo 20 of the first clutch C-1 is disposed in an axial direction on a side of the planetary gear DP that is opposite to the planetary gear unit PU, it is possible to supply the working oil to the hydraulic servo 20 of the first clutch C-1 from an oil duct provided in the boss portion 3b is linked to one end of the case 4. Thereby, in comparison to the case in which the working oil is supplied from an oil duct that is provided in the input shaft 12, it is possible to reduce the number of seal rings, and to reduce the sliding resistance of the seal rings, and to improve the power transfer efficiency of the automatic transmission 1₁₃ for an engine.

In addition, because a first brake B-1 that freely locks the rotation of the sun gear S2 with respect to the case 4 is provided, and the hydraulic servo 60 of the first brake B-1 is disposed in an axial direction on a side of the counter gear 15 that is opposite to the planetary gear unit PU, and the output side transfer member of the first brake B-1 is linked to the sun gear S2 through the inner circumferential side of the counter gear 15, the output side transfer member of the first brake B-1 and the sun gear S2 can be linked without making the members complicated, and it is possible to make the automatic transmission 1₁₃ for a vehicle more compact.

In the automatic transmission 1₁₃ for a vehicle according to the present invention as explained above, the transfer member 103 of the output side of the second clutch C-2 is linked to the carrier CR2 through the outer circumferential side of the transfer members 101, 102 of the output side of the third and first clutches C-3, C-1, the intermediate shaft 13, which is the transfer member of the output side of the fourth clutch C-4, and the transfer member 101 of the output side of the third clutch C-3 are linked to the sun gear S2, and the intermediate shaft 13, which is the transfer member of the output side of the fourth clutch C-4, the transfer member 101 of the output side of third clutch C-3, and the sun gear S2, which rotate integrally therewith, are disposed on the inner circumferential side with respect to the transfer member 102 of the output side of the first clutch C-1. Therefore, the intermediate shaft 13, which is the transfer member of the output side of the fourth clutch C-4, which rotates faster than the transfer member 103 of the output side of the second clutch C-2, is further toward the inner circumferential side than the transfer member 102 of the output side of the first clutch C-1, which is on the inner circumferential side of the transfer member 103 of the output side of the second clutch C-2. Thus, it is possible to make the diameter of the intermediate shaft 13, which is the transfer member of the output side of the fourth clutch C-4 smaller than the diameter of the transfer member 103 of the output side of the second clutch C-2, and it is possible to reduce the weight more than the case in which it is on the outer circumferential side. In addition, because the inertia is reduced in comparison to the case in which it is disposed on the outer circumferential side, it is possible to improve the controllability of the automatic transmission 1₁₃ for a vehicle.

In addition, the third and first clutches C-3, C-1 are disposed on the planetary gear DP side with respect to the planetary gear unit PU, the transfer members 101, 102 of the output side of the third and first clutches C-3, C-1 are respectively linked to the sun gear S2 and the sun gear S3, the fourth clutch C-4 is disposed on the planetary gear DP side with respect to the planetary gear unit PU, the intermediate shaft 13, which is the transfer member of the output side of the fourth clutch C-4, is linked to the sun gear S2, the second clutch C-2 is disposed on the planetary gear DP side with respect to the planetary gear unit PU, the transfer member 103 of the output side of the second clutch C-2 is linked to the carrier CR2 through the outer circumferential side of the transfer members 101, 102 of output side of the third and first clutches C-3, C-1. Thereby, because the intermediate shaft 13, which is the transfer member of the output side of the fourth clutch C-4, which rotates faster than the transfer member 103 of the output side of the second clutch C-2, is disposed on the inner circumferential side, the diameter of the intermediate shaft 13, which is the transfer member of the output side of the fourth clutch C-4, can be made smaller than the diameter of the transfer member 103 of the output side of the second clutch C-2, and it is possible to reduce the weight more than the case in which it is disposed on the outer circumferential side. In addition, compared to the case in which it is disposed on the outer circumferential side, it is possible to reduce the inertia, and thus it is possible to improve the controllability of the automatic transmission 1₁₃ for a vehicle.

Furthermore, because the transfer member of the output side of the fourth clutch C-4 is directly linked to the carrier CR1 and a portion of the carrier CR1 is formed as a portion of the hydraulic servo 50 of the fourth clutch C-4, portions of the members that form the carrier CR1 and the hydraulic servo 50 of the fourth clutch C-4 (that is, portions of the clutch drum 52 and the side plate of the carrier CR1) can be used in common, and it is possible to reduce the size and weight.

In addition, because there is a boss portion 3b that is linked to the side wall 3a of the case 4 and holds the sun gear S1 stationary, the transfer member of the input side of the second clutch C-2 is linked to the carrier CR1, a portion of the transfer member of the input side of the second clutch C-2 is formed as a portion of a clutch drum 32 of the hydraulic servo 30 of the second clutch C-2, the hydraulic servo 30 is disposed above the boss portion 3b in an axial direction between the planetary gear DP and the side wall 3a, it is possible to supply the working oil to the hydraulic servo 30 of the third clutch C-3 from an oil duct c30 that is provided in the boss portion 3b. Thus, in comparison to the case in which, for example, the hydraulic servo 30 of the second clutch C-2 is disposed above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₁₃ for a vehicle.

In addition, because the hub member 111 of the first clutch C-1 is linked to the ring gear R1, the transfer member 102 of the output side of the first clutch C-1 is linked to the sun gear S3, a portion of the transfer member 102 of the output side of the first clutch C-1 is formed as the clutch drum 22 of the hydraulic servo 20 of the first clutch C-1, and the hydraulic servo 20 is disposed above the boss portion 3b in an axial direction between the planetary gear DP and the hydraulic servo 20 of the first clutch C-1, it is possible to supply the working oil to the hydraulic servo 20 of the first clutch C-1 from an oil duct c20 that is provided in the boss portion 3b that is linked to the side wall 3a of the case 4. Thus, in comparison to the case in which, for example, the hydraulic servo 20 of the first clutch C-1 is disposed above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₁₃ for a vehicle.

In addition, because a counter gear 15 that links to the ring gear R3 of the planetary gear unit PU is provided, the counter gear 15 is disposed in an axial direction on a side of the planetary gear unit PU that is opposite to the planetary gear DP, the second brake B-2 is a multi-plate brake that is formed from a plurality of friction plates 71, and the multi-plate brakes are disposed on the outer circumferential side of the planetary gear unit PU, in comparison to the case in which, for example, the counter gear 15 is between the planetary gear unit PU and the planetary gear DP, the hub member 117 of the second brake B-2 can use the transfer member 103 of the output side of the second clutch C-2 in common to link to the carrier CR2, and, for example, in comparison to the case in which a band brake is disposed on the outer circumferential side of the transfer member 103 of the output side of the second clutch C-2, it is possible to dispose the multi-plate brakes in the space of the outer circumferential side of the planetary gear unit PU, it is possible to maintain compactness, and it is possible to make the brakes multi-plate.

Furthermore, because a counter shaft 81 is provided that is disposed parallel to the input shaft 12 and linked via the counter gear 15 that is linked to the ring gear R3, and the output rotation from the ring gear R3 is transferred to the counter shaft 81 via the counter gear 15, it is possible to use the automatic transmission 1₁₃ for a vehicle advantageously in an FF-type vehicle.

In addition, because the counter gear 15 is disposed in an axial direction on a side of the planetary gear unit PU that is opposite to the planetary gear DP and is supported by the support portion 120a that is linked to the support wall 120 that extends from the case 4, it is possible to shorten the distance between the planetary gear DP and the planetary gear unit PU, and it is possible to shorten the output side member 101 of the third clutch C-3 and the output side member 102 of the first clutch C-1, which must in particular be strong in order to transfer a high torque. Thereby, it is possible to reduce the weight and it is possible to improve the controllability of the automatic transmission 1₁₃ for a vehicle.

In addition, because the carrier CR1 is linked to the input shaft 12 on the planetary gear unit PU side with respect to the planetary gear DP and linked to the clutch drum 32, which is the transfer member of the input side of the second clutch C-2, at a side of the planetary gear DP that is opposite to the planetary gear unit PU in an axial direction, it is possible to link the carrier CR1, the transfer member of the input side of the second clutch C-2, and the input shaft 12 without making the members complicated, and it is possible to make the automatic transmission 1₁₃ for a vehicle more compact.

In addition, because the hub member 116 of the first brake B-1 and the transfer member 104 that is linked thereto are linked in an axial direction to the sun gear S2 at a side of the planetary gear unit PU that is opposite to the planetary gear DP, it is possible to link the hub member 116 of the first brake B-1, the transfer member 104, and the sun gear S2 without making the members complicated, and it is possible to make the automatic transmission 1₁₃ for a vehicle more compact.

In addition, because the planetary gear DP includes the sun gear S1, for which the rotation is normally held stationary with respect to the case 4, a carrier CR1 that supports the pinion gear P1 and the pinion gear P2 so as to be freely rotatable and normally links to the output shaft 12, and a ring gear R1 that meshes with the pinion gear P2 and outputs a reduced speed rotation, it is possible to output a reduced speed rotation that reduces the input rotation of the input shaft 12 from the ring gear R1.

In addition, because the planetary gear unit PU is a Ravigneaux-type planetary gear unit PU that includes the sun gear S2, the sun gear S3, the short pinion P3 that meshes with the sun gear S3, the long pinion P4 that meshes with the sun gear S2 and meshes with the short pinion P3, the carrier CR2 that freely rotatably supports the short pinion P3 and the long pinion P4, and the ring gear R3 that meshes with the long pinion P4, it is possible to prevent the rotation of each of the rotating elements from becoming high and it is possible to obtain advantageous gear ratios while enabling each of the rotating elements of the planetary gear unit PU and the output side members of each of the clutches and brakes to be linked without making the members complicated.

In addition, the first forward speed can be established by engaging the first clutch C-1 and locking the second brake B-2; the second forward speed can be established by engaging the first clutch C-1 and locking the first brake B-1; the third forward speed can be established by engaging the first clutch C-1 and the third clutch C-3; the fourth forward speed can be established by engaging the first clutch C-1 and the fourth clutch C-4; the fifth forward speed can be established by engaging the first clutch C-1 and the second clutch C-2; the sixth forward speed can be established by engaging the second clutch C-2 and the fourth clutch C-4; the seventh forward speed can be established by engaging the second clutch C-2 and the third clutch C-3; the eighth forward speed can be established by engaging the second clutch C-2 and locking the first brake B-1; and reverse speeds can be established by engaging the third clutch C-3 or the fourth clutch C-4 and locking the second brake B-2.

In addition, in a velocity diagram in which the respective speed of the sun gear S2, the sun gear S3, the carrier CR2, and the ring gear R3 of the planetary gear unit PU are shown on the ordinates, and the corresponding gear ratios of the sun gear S2, the sun gear S3, and carrier CR2, and the ring gear R3 are shown on the abscissa, a structure becomes possible in which the sun gear S2 is positioned at the farthest end in the horizontal direction and in sequence the carrier CR2, the ring gear R3 that is linked to the counter gear 15, and the sun gear S3 are associated.

### Fourteenth Embodiment

Next, a fourteenth embodiment, in which a portion of the twelfth embodiment described above has been modified, will be explained with reference to FIG. 19. FIG. 19 is a cross-sectional view showing an automatic transmission 1₁₄ according to a fourteenth embodiment. Note that the portions that have a structure that is identical to those in the automatic transmission 1₁₂ according to the twelfth embodiment are denoted by identical reference numerals, and the explanations thereof are omitted.

The automatic transmission 1₁₄ according to the fourteenth embodiment is formed, in contrast to the automatic transmission 1₁₂ according to the twelfth embodiment, such that the input shaft 12 and the intermediate shaft 13 remain as is (that is, the direction in which the engine is disposed as-is), and the disposition of the first through fourth clutches C-1 to C-4, the first and second brakes B-1 to B-2, the planetary gear DP, the planetary gear unit PU, and the counter gear 15 and the like is substantially bilaterally inverted (an axial direction), that is, the speed change mechanism 2₁₄ is structured by substantially bilaterally inverting (in an axial direction) that speed change mechanism 2₁₂.

Specifically, in the automatic transmission 1₁₄, the hydraulic servo 30 of the second clutch C-2 and the hydraulic servo 20 of the first clutch C-1 are disposed in an axial direction on a side of the planetary gear DP that is opposite to the planetary gear unit PU, the hydraulic servo 40 of the third clutch C-3 is disposed in an axial direction between the planetary gear DP and the planetary gear unit PU, and the counter gear 15, the hydraulic servo 50 of the fourth clutch C-4, and the hydraulic servo 60 of the first brake B-1 are disposed in an axial direction on a side of the planetary gear unit PU that is opposite to the planetary gear DP.

According to this type of an automatic transmission 1₁₄ described above, because the fourth clutch C-4 is disposed so as to be interposed on the transfer path that connects the space between the input shaft 12 and the sun gear S2, the second clutch C-2 is disposed so as to be interposed on the transfer path that connects the space between the carrier CR1 and the carrier CR2, and the output side transfer member 103 of the second clutch C-2 is linked to the carrier CR2 in the planetary gear unit PU at the planetary gear DP side in an axial direction, it is possible to eliminate a member that encloses the planetary gear unit PU. Thereby, the automatic transmission 1₁₄ for a vehicle can be made more compact in the radial direction. In addition, it is possible to shorten the transfer member that requires a high rigidity, it is possible to reduce the weight, and it is possible to improve the controllability of the automatic transmission 1₁₄ for a vehicle. Furthermore, a structure becomes possible in which the supplied lubricating oil is readily discharged, and the cooling performance can be ensured. In addition, the assembly of the automatic transmission 1₁₄ for a vehicle can be simplified. Furthermore, because a structure becomes possible in which a support wall 120 can be erected and the working oil for the clutches can be supplied from this support wall 120 due to the configuration of each of the clutches, it is possible to reduce the number of seal rings, to reduce the sliding resistance of the seal rings, and to improve the power transfer efficiency of the automatic transmission 1₁₄ for a vehicle.

In addition, because the hydraulic servo 30 of the second clutch C-2 is disposed in an axial direction on a side of the planetary gear DP that is opposite to the planetary gear unit PU, it is possible to supply the working oil to the hydraulic servo 30 of the second clutch C-2 from an oil duct provided in the boss portion 3b that is linked to one end of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₁₄ for a vehicle.

Furthermore, because the hydraulic servo 50 of the fourth clutch C-4 is disposed in an axial direction on a side of the planetary gear unit PU that is opposite to the planetary gear DP, it is possible to dispose the friction plates 51 of the fourth clutch C-4 on a relatively outer circumferential side and it is possible to make the surface area of the friction plates 51 large, and thus, it is possible to ensure a transferable torque volume, and it is possible to reduce the number of friction plates. Furthermore, it is possible to supply the working oil to the hydraulic servo 50 of the fourth clutch C-4 from an oil duct that is provided in the boss portion 3d that is linked to one end of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₁₄ for a vehicle.

In addition, because the hydraulic servo 40 of the third clutch C-3 is disposed in an axial direction between the planetary gear unit PU and the planetary gear DP, in comparison to the case in which the hydraulic servo 40 of the third clutch C-3 is disposed in an axial direction on a side of the planetary gear DP that is opposite to the planetary gear unit PU, it is possible to shorten the distance between the third clutch C-3 and the planetary gear unit PU, and it is possible to shorten the output side transfer member 101 of the third clutch C-3, which must be strong in order to transfer high torque. Thereby, it is possible to reduce the weight, and it is possible to improve the controllability of the automatic transmission 1₁₄ for a vehicle.

Furthermore, because the hydraulic servo 20 of the first clutch C-1 is disposed in an axial direction on a side of the planetary gear DP that is opposite to the planetary gear unit PU, it is possible to supply the working oil to the hydraulic servo 20 of the first clutch C-1 from an oil duct provided in the boss portion 3b that is linked to one end of the case 4. Thereby, in comparison to the case in which working oil is supplied from an oil duct that is provided in the input shaft 12, it is possible to reduce the number of seal rings, to reduce the sliding resistance of the seal rings, and to improve the power transfer efficiency of the automatic transmission 1₁₄ for an engine.

In addition, a first brake B-1 that freely locks the rotation of the sun gear S2 with respect to the case 4 is provided, the hydraulic servo 60 of the first brake B-1 is disposed in an axial direction on a side of the counter gear 15 that is opposite to the planetary gear DP, and the locking force transfer member of the first brake B-1 is linked to the sun gear S2 through the inner circumferential side. Therefore, it is possible to link the locking force transfer member of the first brake B-1 and the sun gear S2 without making the members complicated, and it is possible to make the automatic transmission 1₁₄ for a vehicle more compact.

In the automatic transmission 1₁₄ for a vehicle according to the present invention as explained above, the transfer member 103 of the output side of the second clutch C-2 is linked to the carrier CR2 through the outer circumferential side of the transfer members 101, 102 of the output side of the third and first clutches C-3, C-1, the transfer member 104 of the output side of the fourth clutch C-4 and the transfer member 101 of the output side of the third clutch C-3 are linked to the sun gear S2, and the transfer member 104 of the output side of the fourth clutch C-4, the transfer member 101 of the output side of third clutch C-3, and the sun gear S2, which rotate integrally therewith, are disposed on the inner circumferential side with respect to the transfer member 102 of the output side of the first clutch C-1. Therefore, the transfer member 104 of the output side of the fourth clutch C-4, which rotates faster than the transfer member 103 of the output side of the second clutch C-2, is further toward the inner circumferential side than the transfer member 102 of the output side of the first clutch C-1, which is on the inner circumferential side of the transfer member 103 of the output side of the second clutch C-2. Thus, it is possible to make the diameter of the transfer member 104 of the output side of the fourth clutch C-4 smaller than the diameter of the transfer member 103 of the output side of the second clutch C-2, and it is possible to reduce the weight more than the case in which it is on the outer circumferential side.
In addition, because the inertia is reduced in comparison to the case in which it is disposed on the outer circumferential side, it is possible to improve the controllability of the automatic transmission 1₁₄ for a vehicle.

In addition, the third and first clutches C-3, C-1 are disposed on the planetary gear DP side with respect to the planetary gear unit PU, the transfer members 101, 102 of the output side of the third and first clutches C-3, C-1 are respectively linked to the sun gear S2 and the sun gear S3, the fourth clutch C-4 is disposed in an axial direction on a side of the planetary gear unit PU that is opposite to the planetary gear DP, the transfer member 104 of the output side of the fourth clutch C-4 is linked to the sun gear S2, the second clutch C-2 is disposed on the planetary gear DP side with respect to the planetary gear unit PU, the transfer member 103 of the output side of the second clutch C-2 is linked to the carrier CR2 through the outer circumferential side of the transfer members 101, 102 of the third and first clutches C-3, C-1. Thereby, the diameter of the transfer member 104 of the output side of the fourth clutch C-4 can be made smaller than the diameter of the transfer member 103 of the output side of the second clutch C-2 because the transfer member 104 of the output side of the fourth clutch C-4, which rotates faster than the transfer member 103 of the output side of the second clutch C-2, is disposed on the inner circumferential side, and it is possible to reduce the weight more than the case in which it is disposed on the outer circumferential side. In addition, compared to the case in which it is disposed on the outside, it is possible to reduce the inertia, and thus it is possible to improve the controllability of the automatic transmission 1₁₄ for a vehicle.

In addition, in comparison to disposing the hydraulic servo 50 of the fourth clutch C-4 between the planetary gear unit PU and the planetary gear DP, it is possible to dispose the friction plates 51 of the fourth clutch C-4 on the relatively outer circumferential side, and it is possible to increase the area of the friction plates, and thus, it is possible to ensure a transferable torque, and in addition, it is possible to reduce the number of the friction plates 51. Furthermore, it is possible to shorten the distance between the third and first clutches C-3, C-1 and the planetary gear unit PU, and it is possible to shorten the transfer members 101, 102 of the output side of the third and first clutches C-3, C-1, which must be strong in order to transfer a high torque. Thereby, it is possible to reduce the weight, and it is possible to improve the controllability of the automatic transmission 1₁₄ for a vehicle.

Furthermore, it is possible to supply the working oil to the hydraulic servo 50 of the fourth clutch C-4 from an oil duct c50 that is provided in the boss portion 3b that is linked to the side wall 3a of the case 4. Thereby, in comparison to the case in which the working oil is supplied from an oil duct that is provided in the input shaft 12, it is possible to reduce the number of seal rings, to reduce the sliding resistance of the seal rings, and to improve the power transfer efficiency of the automatic transmission 1₁₄ for a vehicle.

In addition, because the transfer member of the input side of the fourth clutch C-4 is linked to the input shaft 12 and the intermediate shaft 13 through the inner circumferential side of the planetary gear unit PU and a portion of the transfer member of the input side of the fourth clutch C-4 is formed as the clutch drum 52 of the hydraulic servo 50 of the fourth clutch C-4, in comparison to the case in which the transfer member of the output side of the fourth clutch C-4 is formed as the clutch drum of the hydraulic servo 50, the clutch drum of the hydraulic servo 50 can be used as a member to transfer power from the input shaft 12, and thus, it is possible to form the transfer member more compactly in the axial direction.

In addition, because there is a boss portion 3b that is linked to the side wall 3a of the case 4 and holds the sun gear S1 stationary, the transfer member of the input side of the second clutch C-2 is linked to the carrier CR1, a portion of the transfer member of the input side of the second clutch C-2 is formed as a portion of a clutch drum 32 of the hydraulic servo 30 of the second clutch C-2, the hydraulic servo 30 is disposed above the boss portion 3b in an axial direction between the planetary gear DP and the side wall 3a, it is possible to supply the working oil to the hydraulic servo 30 of the third clutch C-3 from an oil duct c30 that is provided in the boss portion 3b. Thus, in comparison to the case in which, for example, the hydraulic servo 30 of the second clutch C-2 is disposed above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₁₄ for a vehicle.

In addition, because the hub member 111 of the first clutch C-1 is linked to the ring gear R1, the transfer member 102 of the output side of the first clutch C-1 is linked to the sun gear S3, a portion of the transfer member 102 of the output side of the first clutch C-1 is formed as the clutch drum 22 of the hydraulic servo 20 of the first clutch C-1, and the hydraulic servo 20 is disposed above the boss portion 3b in an axial direction between the planetary gear DP and the hydraulic servo 20 of the first clutch C-1, it is possible to supply the working oil to the hydraulic servo 20 of the first clutch C-1 from an oil duct c20 that is provided in the boss portion 3b that is linked to the side wall 3a of the case 4. Thus, in comparison to the case in which, for example, the hydraulic servo 20 of the first clutch C-1 is disposed above the input shaft 12 separated from the boss portion 3b and the working oil is supplied via an oil duct in the input shaft 12, it is possible to shorten the length of the oil duct by an amount equivalent to the oil duct in the input shaft 12 that can be eliminated, and it is possible to improve the controllability of the automatic transmission 1₁₄ for a vehicle.

In addition, because a counter gear 15 that links to the ring gear R3 of the planetary gear unit PU is provided, the counter gear 15 is disposed in an axial direction on a side of the planetary gear unit PU that is opposite to the planetary gear DP, the second brake B-2 is a multi-plate brake that is formed from a plurality of friction plates 71, and the multi-plate brakes are disposed on the outer circumferential side of the planetary gear unit PU, in comparison to the case in which, for example, the counter gear 15 is between the planetary gear unit PU and the planetary gear DP, the hub member 117 of the second brake B-2 can use the transfer member 103 of the output side of the second clutch C-2 in common to link to the carrier CR2, and, for example, in comparison to the case in which a band brake is disposed on the outer circumferential side of the transfer member 103 of the output side of the second clutch C-2, it is possible to dispose the multi-plate brakes in the space of the outer circumferential side of the planetary gear unit PU, it is possible to maintain compactness, and it is possible to make the brakes multi-plate.

Furthermore, because a counter shaft 81 is provided that is disposed parallel to the input shaft 12 and linked via the counter gear 15 that is linked to the ring gear R3, and the output rotation from the ring gear R3 is transferred to the counter shaft 81 via the counter gear 15, it is possible to use the automatic transmission 1₁₄ for a vehicle advantageously in an FF-type vehicle.

In addition, because the counter gear 15 is disposed in an axial direction on a side of the planetary gear unit PU that is opposite to the planetary gear DP and is supported by the support portion 120a that is linked to the support wall 120 that extends from the case 4, it is possible to shorten the distance between the planetary gear DP and the planetary gear unit PU, and it is possible to shorten the output side member 101 of the third clutch C-3 and the output side member 102 of the first clutch C-1, which must in particular be strong in order to transfer a high torque. Thereby, it is possible to reduce the weight and it is possible to improve the controllability of the automatic transmission 1₁₄ for a vehicle.

In addition, because the carrier CR1 is linked to the input shaft 12 on the planetary gear unit PU side with respect to the planetary gear DP and linked to the hub member 114, which is the transfer member of the input side of the second clutch C-2, at a side of the planetary gear DP that is opposite to the planetary gear unit PU in an axial direction, it is possible to link the carrier CR1, the transfer member 114 of the input side of the second clutch C-2, and the input shaft 12 without making the members complicated, and it is possible to make the automatic transmission 1₁₄ for a vehicle more compact.

In addition, because the hub member 116 of the first brake B-1 and the transfer member 104 that is linked thereto are linked in an axial direction to the sun gear S2 at a side of the planetary gear unit PU that is opposite to the planetary gear DP, it is possible to link the hub member 116 of the first brake B-1, the transfer member 104, and the sun gear S2 without making the members complicated, and it is possible to make the automatic transmission 1₁₄ for a vehicle more compact.

In addition, because the planetary gear DP includes the sun gear S1, for which the rotation is normally held stationary with respect to the case 4, a carrier CR1 that supports the pinion gear P1 and the pinion gear P2 so as to be freely rotatable and normally links to the output shaft 12, and a ring gear R1 that meshes with the pinion gear P2 and outputs a reduced speed rotation, it is possible to output a reduced speed rotation from the ring gear R1 that reduces the input rotation of the input shaft 12.

In addition, because the planetary gear unit PU is a Ravigneaux-type planetary gear unit PU that includes the sun gear S2, the sun gear S3, the short pinion P3 that meshes with the sun gear S3, the long pinion P4 that meshes with the sun gear S2 and meshes with the short pinion P3, the carrier CR2 that freely rotatably supports the short pinion P3 and the long pinion P4, and the ring gear R3 that meshes with the long pinion P4, it is possible to prevent the rotation of each of the rotating elements from becoming high and it is possible to obtain advantageous gear ratios while enabling each of the rotating elements of the planetary gear unit PU and the output side members of each of the clutches and brakes to be linked without making the members complicated.

In addition, the first forward speed can be established by engaging the first clutch C-1 and locking the second brake B-2; the second forward speed can be established by engaging the first clutch C-1 and locking the first brake B-1; the third forward speed can be established by engaging the first clutch C-1 and the third clutch C-3; the fourth forward speed can be established by engaging the first clutch C-1 and the fourth clutch C-4; the fifth forward speed can be established by engaging the first clutch C-1 and the second clutch C-2; the sixth forward speed can be established by engaging the second clutch C-2 and the fourth clutch C-4; the seventh forward speed can be established by engaging the second clutch C-2 and the third clutch C-3; the eighth forward speed can be established by engaging the second clutch C-2 and locking the first brake B-1; and reverse speeds can be established by engaging the third clutch C-3 or the fourth clutch C-4 and locking the second brake B-2.

In addition, in a velocity diagram in which the respective speed of the sun gear S2, the sun gear S3, the carrier CR2, and the ring gear R3 of the planetary gear unit PU are shown on the ordinates, and the corresponding gear ratios of the sun gear S2, the sun gear S3, and carrier CR2, and the ring gear R3 are shown on the abscissa, a structure becomes possible in which the sun gear S2 is positioned at the farthest end in the horizontal direction and in sequence the carrier CR2, the ring gear R3 that is linked to the counter gear 15, and the sun gear S3 are associated.

Note that in the first through fourteenth embodiments described above, the case in which the automatic transmission 1 for a vehicle was provided with a torque converter 7 was explained, but, for example, a start-up clutch may be provided.

In addition, in the first through fourteenth embodiments, an example in which an automatic transmission 1 that is advantageously used in an FF-type vehicle was explained, but this is not limiting. For example, the present invention may be applied to an automatic transmission for a vehicle that is used in a four-wheel drive-type vehicle, and furthermore, the present invention may be applied to an automatic transmission for a vehicle that is used in a hybrid vehicle.

Furthermore, in the fifth and tenth embodiments, an example was explained in which a one-way clutch F-1 is provided and the automatic transmission 1 could attain the first forward speed relatively smoothly was explained, but it is not necessary to provide a one-way clutch F-1 in particular, and in this context, the first forward speed may be attained by engaging the second brake B-2. In addition, conversely, in the first through fourth embodiments, the sixth through ninth embodiments, and the eleventh through fourteenth embodiments, an example in which a one-way clutch F-1 is not provided was explained, but a structure may be used in which a one-way clutch F-1 is provided and the first forward speed can be relatively smoothly attained.

In addition, an explanation was provided in which the planetary gear DP that outputs a reduced speed rotation in the first through fourteenth embodiment is a double pinion planetary gear in which the rotation of the sun gear S 1 is held stationary, the rotation of the input shaft 12 is input to the carrier CR1, and the ring gear R1 provides a reduced speed rotation, but, for example, a double pinion planetary gear in which, for example, the ring gear R1 is held stationary, the rotation of the input shaft 12 is output to the carrier CR1, and a reduced speed rotation is output from the sun gear S1 may be used, but this is not limiting. Any structure for a planetary gear may be used that enables outputting a reduced speed rotation.

### INDUSTRIAL APPLICABILITY

The automatic transmission according to the present invention is mounted in a vehicle such as a passenger vehicle, a truck, a bus, and the like, and in particular, this automatic transmission can be mounted in vehicles that require multi-speed automatic transmissions in order to improve fuel economy are required, and furthermore, require reductions in weight and improved controllability.

## Claims

1. An automatic transmission for a vehicle, comprising:
a speed reduction planetary gear (DP) that comprises a stationary element (S1), for which a rotation is held stationary by a case (4), an input rotating element (CR1) that inputs an input rotation of an input shaft (12), and a speed reduction rotating element (R1) that outputs a reduced speed rotation that reduces the input rotation;
a planetary gear set (PU) that includes first, second, third, and fourth rotating elements (S2, S3, CR2, R3) that are arranged in a rotational speed relationship according to the gear relationships;
a first input transfer clutch (C-4) that freely transfers the input rotation to the first rotating element (S2);
a second input transfer clutch (C-2) that freely transfers the input rotation to the third rotating element (CR2);
a first speed reduction transfer clutch (C-3) that freely transfers a reduced speed rotation through the speed reduction planetary gear (DP) to the first rotating element (S2);
a second speed reduction transfer clutch (C-1) that freely transfers a reduced speed rotation through the speed reduction planetary gear (DP) to the second rotating element (S3);
a first brake (B-1) that freely locks the rotation of the first rotating element (S2) with respect to the case (4); and
a second brake (B-2) that freely locks the rotation of the third rotating element (CR2) with respect to the case (4), and the automatic transmission being capable of outputting an output rotation from the fourth rotating element (R3), **characterized in that**:
an output side transfer member (103) of the second input transfer clutch (C-2) is linked to the third rotating element (CR2) through the outer circumferential side of an output side transfer member (101, 102) of the first and second speed reduction transfer clutches (C-3, C-1); and
an output side transfer member (104, 13, 101) of the first input transfer clutch (C-4) and the output side transfer member (101) of the first speed reduction transfer clutch (C-3) are linked to the first rotating element (S2), and the output side transfer member (104, 13, 101) of the first input transfer clutch (C-4) and the output side transfer member (101) of the first speed reduction transfer clutch (C-3), which rotate integrally, are disposed on the inner circumferential side with respect to the output side transfer member (102) of the second speed reduction transfer clutch (C-1).

2. The automatic transmission for a vehicle according to claim 1, wherein:
a second shaft (81) is provided that is disposed parallel to the input shaft (12) and is linked via a counter gear (15) that is linked to the fourth rotating element (R3); and
the output rotation from the fourth rotating element (R3) is transferred to the second shaft (81) via the counter gear (15).

3. The automatic transmission for a vehicle according to claim 2, wherein the counter gear (15) is disposed in an axial direction between the planetary gear set (PU) and the speed reduction planetary gear (DP) and is supported by a support portion (120a) that is linked to a wall (120) that extends from the case (4).

4. The automatic transmission for a vehicle according to claim 2, wherein the counter gear (15) is disposed in an axial direction on a side of the planetary gear set (PU) that is opposite to the speed reduction planetary gear (DP) and is supported by a support portion (120a) that is linked to a wall (120) that extends from the case (4).

5. The automatic transmission for a vehicle according to any one of claims 1 to 4, wherein the input rotating element (CR1) is linked to the input shaft (12) at the planetary gear set side with respect to the speed reduction planetary gear (DP), and is linked in an axial direction to the input side transfer member (32, 112) of the second input transfer clutch (C-2) at a side of the speed reduction planetary gear (DP) that is opposite to the planetary gear set (PU).

6. The automatic transmission for a vehicle according to any one of claims 1 to 5, wherein a locking force transfer member (116, 104) of the first brake (B-1) is linked in an axial direction to the first rotating element (S2) at a side of the planetary gear set (PU) that is opposite to the speed reduction planetary gear (DP).

7. The automatic transmission for a vehicle according to any one of claims 1 to 6, wherein:
the stationary element (S1) of the speed reduction planetary gear (DP) comprises a first sun gear;
the input rotating element (CR1) of the speed reduction planetary gear (DP) comprises a first carrier that freely rotatably supports a first pinion gear (P1) that meshes with the first sun gear (S1) and a second pinion gear (P2) that meshes with the first pinion gear (P1), and is normally linked to the input shaft (12); and
the reduced speed rotating element of the speed reduction planetary gear (DP) comprises a first ring gear (R1) that meshes with the second pinion gear (P2) and outputs the reduced speed rotation.

8. The automatic transmission for a vehicle according to any one of claims 1 to 7, wherein:
the planetary gear set (PU) is a Ravigneaux-type planetary gear set (PU) that comprises a second sun gear (S2), a third sun gear (S3), a third pinion gear (P3) that meshes with the third sun gear (S3), a fourth pinion gear (P4) that meshes with the second sun gear (S2) and meshes with the third pinion gear (P3); a second carrier (CR2) that freely rotatably supports the third pinion gear (P3) and the fourth pinion gear (P4); and a second ring gear (R3) that meshes with the fourth pinion gear (P4); the first rotating element comprises the second sun gear (S2); the second rotating element comprises the third sun gear (S3); the third rotating element comprises the second carrier (CR2); and the fourth rotating element comprises the second ring gear (R3).

9. The automatic transmission for a vehicle according to any one of claims 1 to 8, wherein:
a first forward speed is established by engaging the second speed reduction transfer clutch (C-1) and locking the second brake (B-2);
a second forward speed is established by engaging the second speed reduction transfer clutch (C-1) and locking the first brake (B-1);
a third forward speed is established by engaging the second speed reduction transfer clutch (C-1) and the first speed reduction transfer clutch (C-3);
a fourth forward speed is established by engaging the second speed reduction transfer clutch (C-1) and the first input transfer clutch (C-4);
a fifth forward speed is established by engaging the second speed reduction transfer clutch (C-1) and the second input transfer clutch (C-2);
a sixth forward speed is established by engaging the second input transfer clutch (C-2) and the first input transfer clutch (C-4);
a seventh forward speed is established by engaging the second input transfer clutch (C-2) and the first speed reduction transfer clutch (C-3);
an eighth speed is established by engaging the second input transfer clutch (C-2) and locking the first brake (B-1); and
a reverse speed is established by engaging the first speed reduction transfer clutch (C-3)or the first input transfer clutch (C-4), and locking the second brake (B-2).

10. The automatic transmission for a vehicle according to any one of claims 1 to 9, wherein, in a velocity diagram in which the rotational speed relationship corresponds to the gear ratios based on the gear relationship of the first, second, third and fourth rotating elements (S2, S3, CR3, R3), the respective speeds of the first, second, third, and fourth rotating elements (S2, S3, CR3, R3) of the planetary gear unit (PU) are shown on the ordinates, and the corresponding gear ratios of the first, second, third, and fourth rotating elements (S2, S3, CR3, R3) are shown in the abscissa, the first rotating element (S2) is positioned at the farthest end in the horizontal direction and in sequence the third rotating element (CR2), the fourth rotating element (R3) that is linked to the counter gear (15), and the second rotating element (S3) are associated.

## Patentansprüche

1. Automatikgetriebe für ein Fahrzeug mit:
einem Geschwindigkeitsverringerungsplanetengetriebe (DP), das ein stationäres Element (S1), für das eine Drehung durch ein Gehäuse (4) stationär gehalten ist, ein Eingabedrehelement (CR1), das eine Eingabedrehung einer Eingabewelle (12) eingibt, und ein Geschwindigkeitsverringerungsdrehelement (R1) aufweist, das eine verringerte Geschwindigkeitsdrehung ausgibt, die die Eingabedrehung verringert;
einem Planetengetriebesatz (PU), der ein erstes, zweites, drittes und viertes Drehelement (S2, S3, CR2, R3) hat, die in einer Drehzahlbeziehung gemäß den Übersetzungsbeziehungen angeordnet sind;
einer ersten Eingabeübertragungskupplung (C-4), die die Eingabedrehung zu dem ersten Drehelement (S2) frei überträgt;
einer zweiten Eingabeübertragungskupplung (C-2), die die Eingabedrehung zu dem dritten Drehelement (CR2) frei überträgt;
einer ersten Geschwindigkeitsverringerungsübertragungskupplung (C-3), die eine verringerte Geschwindigkeitsdrehung über das Geschwindigkeitsverringerungsplanetengetriebe (DP) zu dem ersten Drehelement (S2) frei überträgt;
einer zweiten Geschwindigkeitsverringerungsübertragungskupplung (C-1), die eine verringerte Geschwindigkeitsdrehung über das Geschwindigkeitsverringerungsplanetengetriebe (DP) zu dem zweiten Drehelement (S3) frei überträgt;
einer ersten Bremse (B-1), die die Drehung des ersten Drehelements (S2) in Bezug auf das Gehäuse (4) frei sperrt; und
einer zweiten Bremse (B-2), die die Drehung des dritten Drehelements (CR2) in Bezug auf das Gehäuse (4) frei sperrt, und wobei das Automatikgetriebe eine Ausgabedrehung von dem vierten Drehelement (R3) ausgeben kann,
**dadurch gekennzeichnet, dass**
ein ausgabeseitiges Übertragungsbauteil (103) der zweiten Eingabeübertragungskupplung (C-2) mit dem dritten Drehelement (CR2) über die Außenumfangsseite eines ausgabeseitigen Übertragungsbauteils (101, 102) der ersten und zweiten Geschwindigkeitsverringerungsübertragungskupplung (C-3, C-1) verbunden ist; und
ein ausgabeseitiges Übertragungsbauteil (104, 13, 101) der ersten Eingabeübertragungskupplung (C-4) und das ausgabeseitige Übertragungsbauteil (101) der ersten Geschwindigkeitsverringerungsübertragungskupplung (C-3) mit dem ersten Drehelement (S2) verbunden sind, und das ausgabeseitige Übertragungsbauteil (104, 13, 101) der ersten Eingabeübertragungskupplung (C-4) und das ausgabeseitige Übertragungsbauteil (101) der ersten Geschwindigkeitsverringerungsübertragungskupplung (C-3), die einstückig drehen, an der Innenumfangsseite in Bezug auf das ausgabeseitige Übertragungsbauteil (102) der zweiten Geschwindigkeitsverringerungsübertragungskupplung (C-1) angeordnet sind.

2. Automatikgetriebe für ein Fahrzeug nach Anspruch 1, wobei:
eine zweite Welle (81) vorgesehen ist, die parallel zu der Eingabewelle (12) angeordnet ist und über ein Gegenrad (15) verbunden ist, das mit dem vierten Drehelement (R3) verbunden ist; und
die Ausgabedrehung von dem vierten Drehelement (R3) zu der zweiten Welle (81) über das Gegenrad (15) übertragen wird.

3. Automatikgetriebe für ein Fahrzeug nach Anspruch 2, wobei das Gegenrad (15) in einer Axialrichtung zwischen dem Planetengetriebesatz (PU) und dem Geschwindigkeitsverringerungsplanetengetriebe (DP) angeordnet ist und durch einen Stützabschnitt (120a) gestützt ist, der mit einer Wand (120) verbunden ist, die sich von dem Gehäuse (4) erstreckt.

4. Automatikgetriebe für ein Fahrzeug nach Anspruch 2, wobei das Gegenrad (15) in einer Axialrichtung an einer Seite des Planetengetriebesatzes (PU) angeordnet ist, die entgegengesetzt zu dem Geschwindigkeitsverringerungsplanetengetriebe (DP) ist, und durch einen Stützabschnitt (120a) gestützt ist, der mit einer Wand (120) verbunden ist, die sich von dem Gehäuse (4) erstreckt.

5. Automatikgetriebe für ein Fahrzeug nach einem der Ansprüche 1 bis 4, wobei das Eingabedrehelement (CR1) mit der Eingabewelle (12) an der Planetengetriebesatzseite mit Bezug auf das Geschwindigkeitsverringerungsplanetengetriebe (DP) verbunden ist und in einer Axialrichtung mit dem eingabeseitigen Übertragungsbauteil (32, 112) der zweiten Eingabeübertragungskupplung (C-2) an einer Seite des Geschwindigkeitsverringerungsplanetengetriebes (DP) verbunden ist, die entgegengesetzt zu dem Planetengetriebesatz (PU) ist.

6. Automatikgetriebe für ein Fahrzeug nach einem der Ansprüche 1 bis 5, wobei ein Sperrkraftübertragungsbauteil (116, 104) der ersten Bremse (B-1) in einer Axialrichtung mit dem ersten Drehelement (S2) an einer Seite des Planetengetriebesatzes (PU) verbunden ist, die entgegengesetzt zu dem Geschwindigkeitsverringerungsplanetengetriebe (DP) ist.

7. Automatikgetriebe für ein Fahrzeug nach einem der Ansprüche 1 bis 6, wobei:
das stationäre Element (S1) des Geschwindigkeitsverringerungsplanetengetriebes (DP) ein erstes Sonnenrad aufweist;
das Eingabedrehelement (CR1) des Geschwindigkeitsverringerungsplanetengetriebes (DP) einen ersten Träger aufweist, der ein erstes Ritzel (P1), das mit dem ersten Sonnenrad (S1) kämmt, und ein zweites Ritzel (P2), das mit dem ersten Ritzel (P1) kämmt, frei drehbar stützt und mit der Eingabewelle (12) normalerweise verbunden ist; und
das Verringerungsgeschwindigkeitsdrehelement des Geschwindigkeitsverringerungsplanetengetriebes (DP) ein erstes Hohlrad (R1) aufweist, das mit dem zweiten Ritzel (P2) kämmt, und die verringerte Geschwindigkeitsdrehung ausgibt.

8. Automatikgetriebe für ein Fahrzeug nach einem der Ansprüche 1 bis 7, wobei:
der Planetengetriebesatz (PU) ein Planetengetriebesatz (PU) der Ravigneaux-Bauart ist, der ein zweites Sonnenrad (S2), ein drittes Sonnenrad (S3), ein drittes Ritzel (P3), das mit dem dritten Sonnenrad (S3) kämmt, ein viertes Ritzel (P4), das mit dem zweiten Sonnenrad (S2) kämmt und mit dem dritten Ritzel (P3) kämmt; einen zweiten Träger (CR2), der das dritte Ritzel (P3) und das vierte Ritzel (P4) frei drehbar stützt; und ein zweites Hohlrad (R3) aufweist, das mit dem vierten Ritzel (P4) kämmt; das erste Drehelement das zweite Sonnenrad (S2) aufweist; das zweite Drehelement das dritte Sonnenrad (S3) aufweist; das dritte Drehelement den zweiten Träger (CR2) aufweist; und das vierte Drehelement das zweite Hohlrad (R3) aufweist.

9. Automatikgetriebe für ein Fahrzeug nach einem der Ansprüche 1 bis 8, wobei:
ein erster Vorwärtsgang durch Eingreifen der zweiten Geschwindigkeitsverringerungsübertragungskupplung (C-1) und Sperren der zweiten Bremse (B-2) eingerichtet wird;
ein zweiter Vorwärtsgang durch Eingreifen der zweiten Geschwindigkeitsverringerungsübertragungskupplung (C-1) und Sperren der ersten Bremse (B-1) eingerichtet wird;
ein dritter Vorwärtsgang durch Eingreifen der zweiten Geschwindigkeitsverringerungsübertragungskupplung (C-1) und der ersten Geschwindigkeitsverringerungsübertragungskupplung (C-3) eingerichtet wird;
ein vierter Vorwärtsgang durch Eingreifen der zweiten Geschwindigkeitsverringerungsübertragungskupplung (C-1) und der ersten Eingabeübertragungskupplung (C-4) eingerichtet wird;
ein fünfter Vorwärtsgang durch Eingreifen der zweiten Geschwindigkeitsverringerungsübertragungskupplung (C-1) und der zweiten Eingabeübertragungskupplung (C-2) eingerichtet wird;
ein sechster Vorwärtsgang durch Eingreifen der zweiten Eingabeübertragungskupplung (C-2) und der ersten Eingabeübertragungskupplung (C-4) eingerichtet wird;
ein siebter Vorwärtsgang durch Eingreifen der zweiten Eingabeübertragungskupplung (C-2) und der ersten Geschwindigkeitsverringerungsübertragungskupplung (C-3) eingerichtet wird;
ein achter Gang durch Eingreifen der zweiten Eingabeübertragungskupplung (C-2) und Sperren der ersten Bremse (B-1) eingerichtet wird; und
ein Rückwärtsgang durch Eingreifen der ersten Geschwindigkeitsverringerungsübertragungskupplung (C-3) oder der ersten Eingabeübertragungskupplung (C-4) und Sperren der zweiten Bremse (B-2) eingerichtet wird.

10. Automatikgetriebe für ein Fahrzeug nach einem der Ansprüche 1 bis 9, wobei in einem Geschwindigkeitsdiagramm, in dem die Drehzahlbeziehung zu den Übersetzungsverhältnissen auf der Basis der Übersetzungsbeziehung des ersten, zweiten, dritten und vierten Drehelements (S2, S3, CR3, R3) korrespondiert, die jeweiligen Drehzahlen des ersten, zweiten, dritten und vierten Drehelements (S2, S3, CR3, R3) der Planetengetriebeeinheit (PU) auf den Ordinaten gezeigt sind und die entsprechenden Übersetzungsverhältnisse des ersten, zweiten, dritten und vierten Drehelements (S2, S3, CR3, R3) in der Abszisse gezeigt sind, das erste Drehelement (S2) an dem entferntesten Ende in der horizontalen Richtung positioniert ist und sich in Reihenfolge das dritte Drehelement (CR2), das vierte Drehelement (R3), das mit dem Gegenrad (15) verbunden ist, und das zweite Drehelement (S3) anschließen.

## Revendications

1. Transmission automatique pour un véhicule, comportant :
un engrenage planétaire de réduction de vitesse (DP) qui comporte un élément fixe (S1), pour lequel une rotation est maintenue fixe par un carter (4), un élément rotatif d'entrée (CR1) qui entre une rotation d'entrée d'un arbre d'entrée (12), et un élément rotatif de réduction de vitesse (R1) qui délivre une rotation de vitesse réduite qui réduit la rotation d'entrée ;
un ensemble d'engrenage planétaire (PU) qui comprend des premier, deuxième, troisième, et quatrième éléments rotatifs (S2, S3, CR2, R3) qui sont disposés dans des relations de vitesse de rotation en fonction des relations d'engrenage ;
un premier embrayage de transfert d'entrée (C-4) qui transfère librement la rotation d'entrée au premier élément rotatif (S2) ;
un deuxième embrayage de transfert d'entrée (C-2) qui transfère librement la rotation d'entrée au troisième élément rotatif (CR2) ;
un premier embrayage de transfert de réduction de vitesse (C-3) qui transfère librement une rotation de vitesse réduite par l'intermédiaire de l'engrenage planétaire de réduction de vitesse (DP) au premier élément rotatif (S2) ;
un deuxième embrayage de transfert de réduction de vitesse (C-1) qui transfère librement une rotation de vitesse réduite par l'intermédiaire de l'engrenage planétaire de réduction de vitesse (DP) au deuxième élément rotatif (S3) ;
un premier frein (B-1) qui bloque librement la rotation du premier élément rotatif (S2) par rapport au carter (4) ; et
un deuxième frein (B-2) qui bloque librement la rotation du troisième élément rotatif (CR2) par rapport au carter (4), et la transmission automatique étant capable de délivrer une rotation de sortie à partir du quatrième élément rotatif (R3), **caractérisée en ce que** :
un élément de transfert du côté sortie (103) du deuxième embrayage de transfert d'entrée (C-2) est lié au troisième élément rotatif (CR2) par l'intermédiaire du côté circonférentiel externe d'un élément de transfert du côté sortie (101, 102) des premier et deuxième embrayages de transfert de réduction de vitesse (C-3, C-1) ; et
un élément de transfert du côté sortie (104, 13, 101) du premier embrayage de transfert d'entrée (C-4) et l'élément de transfert du côté sortie (101) de premier embrayage de transfert de réduction vitesse (C-3) sont liés au premier élément rotatif (S2), et l'élément de transfert du côté sortie (104, 13, 101) du premier embrayage de transfert d'entrée (C-4) et l'élément de transfert du côté sortie (101) du premier embrayage de transfert de réduction de vitesse (C-3), qui tournent d'un seul tenant, sont disposés sur le côté circonférentiel interne par rapport à l'élément de transfert du côté sortie (102) du deuxième embrayage de transfert de réduction de vitesse (C-1).

2. Transmission automatique pour un véhicule selon la revendication 1, dans laquelle :
un deuxième arbre (81) est prévu, lequel est disposé parallèlement à l'arbre d'entrée (12) et est relié par l'intermédiaire d'un pignon de renvoi (15) qui est relié au quatrième élément rotatif (R3) ; et
la rotation de sortie du quatrième élément rotatif (R3) est transférée au deuxième arbre (81) par l'intermédiaire du pignon de renvoi (15).

3. Transmission automatique pour un véhicule selon la revendication 2, dans laquelle le pignon de renvoi (15) est disposé dans une direction axiale entre l'ensemble d'engrenage planétaire (PU) et l'engrenage planétaire de réduction de vitesse (DP) et est supporté par une partie de support (120a) qui est liée à une paroi (120) qui s'étend depuis le carter (4).

4. Transmission automatique pour un véhicule selon la revendication 2, dans laquelle le pignon de renvoi (15) est disposé dans une direction axiale sur un côté de l'ensemble d'engrenage planétaire (PU) qui est opposé à l'engrenage planétaire de réduction de vitesse (DP) et est supporté par une partie de support (120a) qui est liée à la paroi (120) qui s'étend depuis le carter (4).

5. Transmission automatique pour un véhicule selon l'une quelconque des revendications 1 à 4, dans laquelle l'élément rotatif d'entrée (CR1) est lié à l'arbre d'entrée (12) sur le côté d'ensemble d'engrenage planétaire par rapport à l'engrenage planétaire de réduction de vitesse (DP), et est relié dans une direction axiale à l'élément de transfert du côté d'entrée (32, 112) du deuxième embrayage de transfert d'entrée (C-2) sur un côté de l'engrenage planétaire de réduction de vitesse (DP) qui est opposé à l'ensemble d'engrenage planétaire (PU).

6. Transmission automatique pour un véhicule selon l'une quelconque des revendications 1 à 5, dans laquelle l'élément de transfert de force de blocage (116, 104) du premier frein (B-1) est lié dans une direction axiale au premier élément rotatif (S2) sur un côté de l'ensemble d'engrenage planétaire (PU) qui est opposé à l'engrenage planétaire de réduction de vitesse (DP).

7. Transmission automatique pour un véhicule selon l'une quelconque des revendications 1 à 6, dans laquelle :
l'élément fixe (S1) de l'engrenage planétaire de réduction de vitesse (DP) comporte un premier pignon central ;
l'élément rotatif d'entrée (CR1) de l'engrenage planétaire de réduction de vitesse (DP) comporte un premier support qui supporte de façon librement rotative un premier pignon (P1) qui est en prise avec le premier pignon central (S1) et un deuxième pignon (P2) qui est en prise avec le premier pignon (P1), et est normalement relié à l'arbre d'entrée (12) ; et
l'élément rotatif de vitesse réduite de l'engrenage planétaire de réduction de vitesse (DP) comporte une première couronne dentée (R1) qui est en prise avec le deuxième pignon (P2) et délivre la rotation de vitesse réduite.

8. Transmission automatique pour un véhicule selon l'une quelconque des revendications 1 à 7, dans laquelle :
l'ensemble d'engrenage planétaire (PU) est un ensemble d'engrenage planétaire du type Ravigneaux (PU) qui comporte un deuxième pignon central (S2), un troisième pignon central (S3), un troisième pignon (P3) qui est en prise avec le troisième pignon central (S3), un quatrième pignon (P4) qui est en prise avec le deuxième pignon central (S2) et est en prise avec le troisième pignon (P3) ; un deuxième support (CR2) qui supporte de façon librement rotative le troisième pignon (P3) et le quatrième pignon (P4) ; et une deuxième couronne dentée (R3) qui est en prise avec le quatrième pignon (P4) ; le premier élément rotatif comporte le deuxième pignon central (S2) ; le deuxième élément rotatif comporte le troisième pignon central (S3) ; le troisième élément rotatif comporte le deuxième support (CR2) ; et le quatrième élément rotatif comporte la deuxième couronne dentée (R3).

9. Transmission automatique pour un véhicule selon l'une quelconque des revendications 1 à 8, dans laquelle :
une première vitesse en marche avant est établie en engageant le deuxième embrayage de transfert de réduction de vitesse (C-1) et en bloquant le deuxième frein (B-2) ;
une deuxième vitesse en marche avant est établie en engageant le deuxième embrayage de transfert de réduction de vitesse (C-1) et en bloquant le premier frein (B-1) ;
une troisième vitesse en marche avant est établie en engageant le deuxième embrayage de transfert de réduction de vitesse (C-1) et le premier embrayage de transfert de réduction de vitesse (C-3) ;
une quatrième vitesse en marche avant est établie en engageant le deuxième embrayage de transfert de réduction de vitesse (C-1) et le premier embrayage de transfert d'entrée (C-4) ;
une cinquième vitesse en marche avant est établie en engageant le deuxième embrayage de transfert de réduction de vitesse (C-1) et le deuxième embrayage de transfert d'entrée (C-2) ;
une sixième vitesse en marche avant est établie en engageant le deuxième embrayage de transfert d'entrée (C-2) et le premier embrayage de transfert d'entrée (C-4) ;
une septième vitesse en marche avant est établie en engageant le deuxième embrayage de transfert d'entrée (C-2) et le premier embrayage de transfert de réduction de vitesse (C-3) ;
une huitième vitesse est établie en engageant le deuxième embrayage de transfert d'entrée (C-2) et en bloquant le premier frein (B1) ; et
une vitesse en marche arrière est établie en engageant le premier embrayage de transfert de réduction de vitesse (C-3) ou le premier embrayage de transfert d'entrée (C-4), et en bloquant le deuxième frein (B-2).

10. Transmission automatique pour un véhicule selon l'une quelconque des revendications 1 à 9, dans laquelle, dans un diagramme de vitesse dans lequel la relation de vitesse de rotation correspond aux rapports d'engrenage basés sur la relation d'engrenage des premier, deuxième, troisième et quatrième éléments rotatifs (S2, S3, CR3, R3), les vitesses respectives des premier, deuxième, troisième, et quatrième éléments rotatifs (S2, S3, CR3, R3) de l'unité d'engrenage planétaire (PU) sont représentées sur les ordonnées, et les rapports d'engrenage correspondants des premier, deuxième, troisième et quatrième éléments rotatifs (S2, S3, CR3, R3) sont représentés en abscisse, le premier élément rotatif (S2) est positionné à l'extrémité la plus éloignée dans la direction horizontale et à la suite le troisième élément rotatif (CR2), le quatrième élément rotatif (R3) qui est lié au pignon de renvoi (15), et le deuxième élément rotatif (S3) sont associés.
